# EUROPÄISCHE PATENTSCHRIFT

(11) **EP 3 516 273 B1**
(45) Veröffentlichungstag und Bekanntmachung des Hinweises auf die Patenterteilung: **28.06.2023**
(21) Anmeldenummer: 17780344.2
(22) Anmeldetag: 26.09.2017
(51) Int. Cl.: F16H 61/688, F16H 61/02, F16H 61/00

(54) **HYDRAULIKMITTELAUFBEREITUNG MIT ÖLVERSORGUNG DURCH DUALES PUMPENSYSTEM**
HYDRAULIC MEDIUM PROVISION WITH OIL SUPPLY THROUGH DUAL PUMP SYSTEM
TRAITEMENT DE FLUIDE HYDRAULIQUE À ALIMENTATION EN HUILE PAR SYSTÈME DE POMPE DOUBLE

(30) Priorität: 26.09.2016 DE 202016105346 U; 26.09.2016 DE 202016105345 U
(43) Veröffentlichungstag der Anmeldung: 31.07.2019
(73) Patentinhaber: hofer powertrain innovation GmbH, 72622 Nürtingen (DE)
(72) Erfinder: EBINGER, Günter, Dr., 76684 Östringen (DE); WILD, Andreas, 72669 Unterensingen (DE); KEHRER, Marcus, 72622 Nürtingen (DE); UNRUH, Swen, 72581 Dettingen (DE)
(74) Vertreter: Cremer & Cremer
(86) Internationale Anmeldenummer: PCT/EP2017/074342
(87) Internationale Veröffentlichungsnummer: WO 2018/055197

(56) Entgegenhaltungen:
- EP-A1- 2 196 704
- DE-A1-102009 005 753
- DE-A1-102014 207 806
- US-A1- 2015 167 836

## Beschreibung

Die vorliegende Erfindung betrifft eine hydraulische Schaltung zur Hydraulikmittelaufbereitung mit u. a. einer Bedruckung eines Hydraulikmittels, das z. B. in einem Kraftfahrzeug als Fluid einer Getriebesteuerung genutzt werden kann. Die vorliegende Erfindung betrifft außerdem ein Verfahren, wie mit zwei Druckquellen, z. B. mit zwei Pumpen, Hydraulikmittel verschiedenen Verbrauchern und verschiedenen Kühl- und/oder Schmierstellen zur Verfügung gestellt werden kann. Mit anderen Worten, die vorliegende Erfindung behandelt eine hydraulische Schaltung nach dem Oberbegriff des Anspruchs 1 und Verfahren zur Druckerzeugung nach dem Oberbegriff des Anspruchs 14.

### Technisches Gebiet

Um eine gut funktionierende Kfz-Hydraulik sicherzustellen, werden seit Langem schon besondere Maßnahmen bei der Hydraulikmittelaufbereitung ergriffen. Mit anderen Worten, es ist inzwischen bekannt, dass eine zuverlässig funktionierende Kfz-Hydraulik ihre Funktionstüchtigkeit nicht nur von wohl überlegten Schaltungen zu den Verbrauchern ableitet, sondern einen wesentlichen Einfluss haben auch die Teile der Kfz-Hydraulik, die sich um die Hydraulikmittelaufbereitung kümmern.

In diesem Zusammenhang beschreiben die EP 2 410 213 A2 (Anmelderin: hofer mechatronik GmbH; Veröffentlichungstag: 25.01.2012) sowie ihre Teilanmeldung EP 3 043 089 A1 (Anmelderin: hofer mechatronik GmbH; Veröffentlichungstag: 13.07.2016), neben zahlreichen weiteren Aspekten einer geeigneten Getriebehydraulik, eine Hydraulikmittelaufbereitung, durch die Hydraulikmittel unter einen Betriebsdruck gesetzt wird. Als zentrale Druckquelle dient eine Öldruckpumpe, die z. B. eine Flügelzellenpumpe sein kann. Das Hydraulikmittel wird u. a. an eine Gangsteuerung weitergeleitet. Die Gangsteuerung kann z. B. in Form von Stellkolben eine erste Gruppe Verbraucher für die Hydraulikschaltung umfassen. Ein Druckölumlaufventil bietet verschiedene Stellungen an. In einer Stellung wird keinerlei Hydraulikmittel durch das Druckölumlaufventil an die weiterführenden Bauteile weitergeleitet. In einer zweiten Stellung wird durch das Druckölumlaufventil ausschließlich zu dem Drucköl-Wärmetauscher weitergeleitet. Je nach Stellung des Druckölumlaufventils gibt es also zumindest einen Zustand, bei dem die Pumpe gegen ein geschlossenes Druckölumlaufventil fördert. Am Rande bemerkt, eine Pumpe, die gegen ein geschlossenes Ventil arbeitet, lässt sich immer wieder in Kfz-Schaltungen finden.

Obwohl die in der EP 2 410 213 A2 (Anmelderin: hofer mechatronik GmbH; Veröffentlichungstag: 25.01.2012) gezeigten Schaltungen schon zahlreiche durchdachte Lösungen für Getriebesteuerungen aufweisen, können diese Schaltungen nur bedingt den Anforderungen gerecht werden, die durch den Einsatz als hydraulische Getriebesteuerungen für Getriebe in Hybridantriebssträngen an die jeweilige Hydraulikschaltung gerichtet werden. Die Offenbarungen der EP 2 410 213 A2 und EP 3 043 089 A1 sollen mit ihren Benennungen als vollumfänglich in vorliegende Erfindungsbeschreibung in Bezug auf die Darstellung von Getriebehydrauliksteuerungen inkludiert gelten.

Eine Idee, wie eine Hydraulikmittelaufbereitung für ein Hybridfahrzeug gestaltet werden kann, besteht darin, eine Pumpe durch eine erste Antriebsquelle des Antriebsstrangs, wie z. B. durch einen Verbrennungsmotor, anzutreiben und zusätzlich eine zweite, anders angetriebene Pumpe vorzusehen.

### Stand der Technik

Der Einbau von wenigstens zwei Pumpen zur Druckmittelversorgung einer Kfz-Hydraulik wird in einigen Dokumenten der Schutzrechtsliteratur eingehender beschrieben.

So werden z. B. in der DE 10 2012 010 322 A1 (Anmelderin: GETRAG Getriebe- und Zahnradfabrik Hermann Hagenmeyer GmbH & Cie KG; Anmeldetag: 21.05.2012) eine Kühlanordnung und ein Kühlverfahren für einen Kfz-Antriebsstrang in verschiedenen Ausführungsbeispielen mit einer sowie mit mehreren Aktuatorenpumpen zusätzlich zu einer Elektromotorpumpe beschrieben. Die Schaltungen sind für Antriebsstränge entworfen, die eine Reibkupplungsanordnung und eine elektrische Maschine zum Antrieb eines Kraftfahrzeugs haben. Es ist vorgesehen, einen durch die Pumpe geförderten Fluidstrom bedarfsweise entweder der Reibkupplungsanordnung oder der elektrischen Maschine zuzuführen, damit eine der beiden Anordnungen wechselweise gekühlt werden kann. Wenn zusätzlich eine Nebenantriebspumpe vorgesehen wird, könne der hydraulische Schaltkreis so gestaltet werden, dass die Fördervolumina der beiden Pumpen in einem gemeinsamen Pfad aufsummiert werden. Hierbei soll ein Rückschlagventil verhindern, dass Volumenströme unbeabsichtigt z. B. in die Elektromotorpumpe hineinlaufen. Die Pumpen sollen aus einem gemeinsamen Ölsumpf heraus ansaugen, wobei das Fluid sowohl zur Kühlung als auch zum Schmieren zu nutzen ist. Eine Kühlung des Fluids habe durch Durchleiten durch einen Fluidkühler stattzufinden, bevor das Fluid zu dem Getriebe bzw. der elektrischen Maschine geleitet wird. Außerdem wird eine weitere Variante beschrieben, bei der aufgrund der Drehrichtung einer bidirektional arbeitenden Pumpe die Reibungskupplungsanordnung oder die elektrische Maschine versorgt wird. In einer solchen Variante sind vier Rückschlagventile vorzusehen. Zusätzlich wird vorgeschlagen, eine Blendenanordnung zu verwenden, um, z. B. während die elektrische Maschine durch einen Kühlstrom gekühlt wird, dafür zu sorgen, dass ein kleinerer Volumenstrom auch in die Reibungskupplungsanordnung strömt.

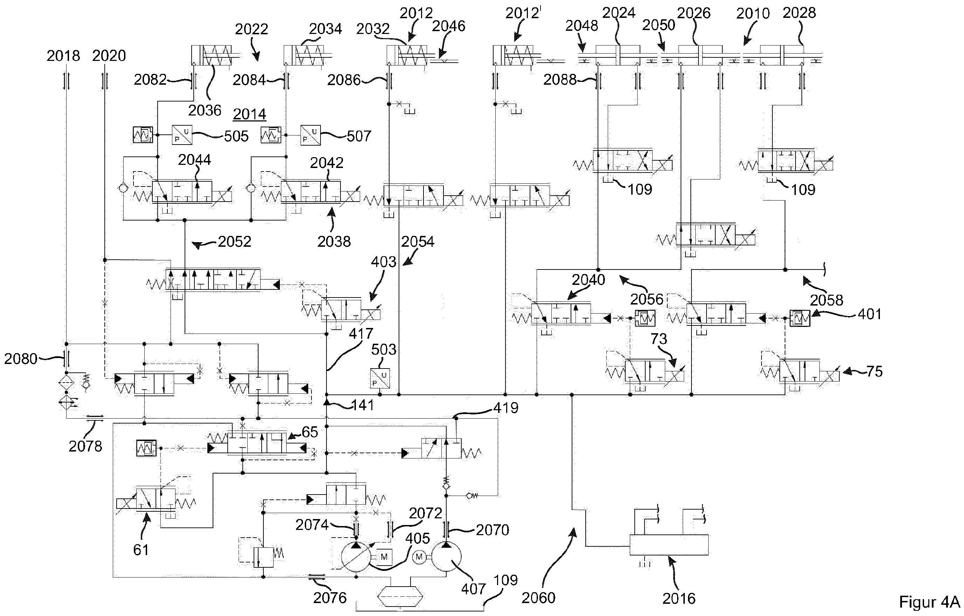

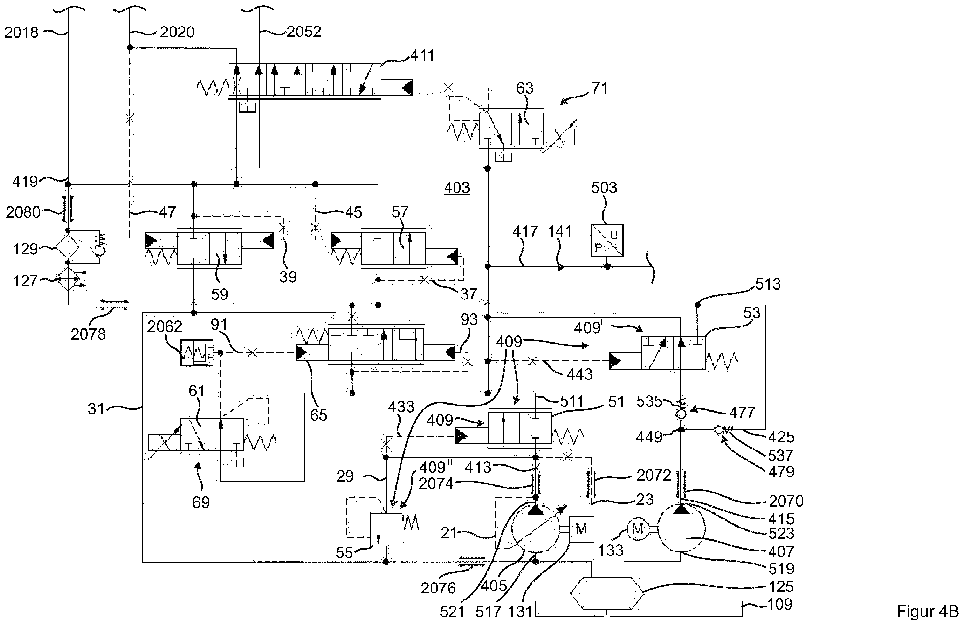

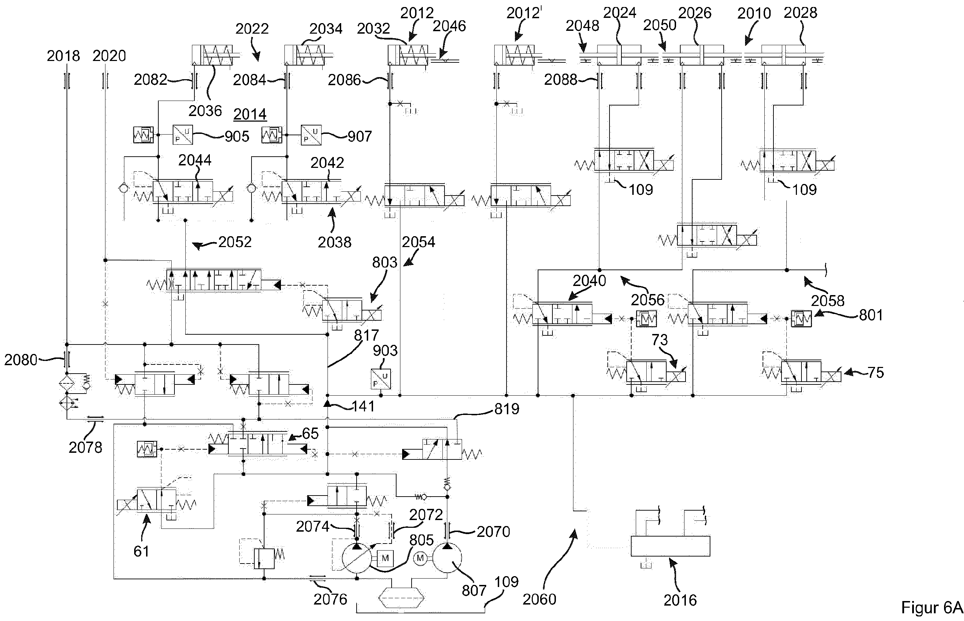

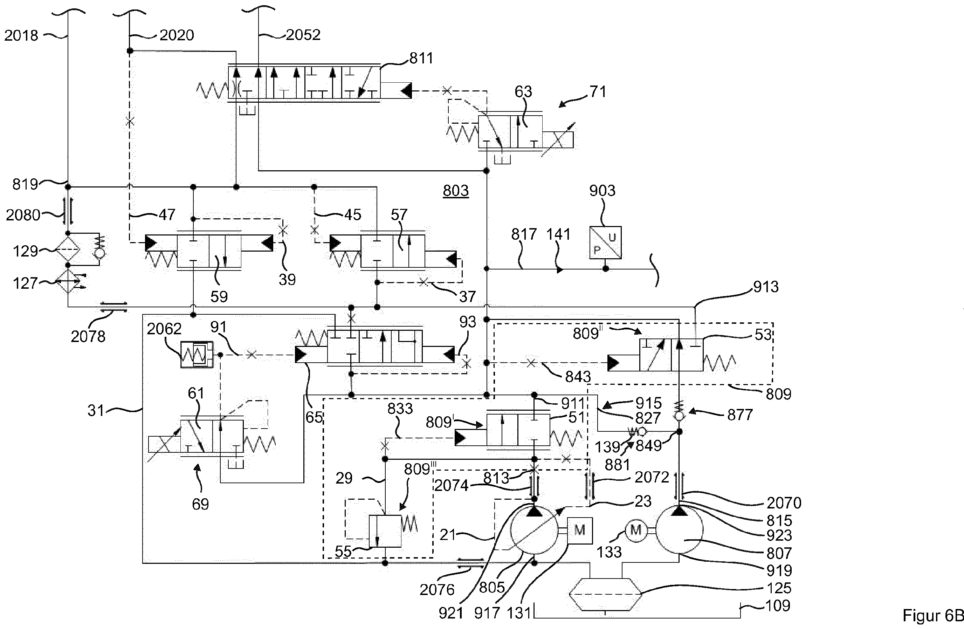

Die DE 10 2015 109 518 A1 (Anmelderin: Ford Global Technologies, LLC; Prioritätstag: 16.06.2014) sowie ihre Schwesteranmeldung US 2015/362 052 A1 (Anmelderin: Ford Global Technologies, LLC; Prioritätstag: 16.06.2014) beschäftigen sich mit einem anderen Typ Getriebe, nämlich mit einem Automatikgetriebe mit einem Drehmomentwandler. Um in einem Fahrzeug mit Start-Stopp-Verbrennungsmotorbetrieb eine ausreichende hydraulische Versorgung des Drehmomentwandlers und einer By-Pass-Kupplung sicherzustellen, wird eine von einer elektrischen Pumpe zur Verfügung gestellte Sekundärversorgung in ihrem Fluss durch eine Steuereinrichtung und ein Schaltventil gesteuert. Durch eine Verschlusskugel soll eine Fluidumkehr zu der elektrisch angetriebenen Pumpe verhindert werden. Die beiden in Figur 4 und in Figur 6 dargestellten Prinzipblockbilder zeigen speziell für ein Drehmomentwandlergetriebe entwickelte Hydraulikschaltungen.

Das Erreichen des Ziels, eine verbesserte Kraftstoffeffizienz in einem Kraftfahrzeug mit einem Pumpensystem zu erreichen, wird in der DE 101 47 123 B4 (Inhaberin: General Motors Corporation; Prioritätstag: 25.09.2010) mit der Begründung versprochen, dass zwei Pumpen den jeweils gelieferten Druck, der in einem von zwei unabhängigen Hydraulikkreisen herrschen soll, d. h. unabhängig voneinander, regulieren können. Mit anderen Worten, in einem Fluidpumpensystem für ein Automatikgetriebe sollen zwei unabhängige Hydraulikkreise innerhalb des Hydrauliksystems vorhanden sein. Jedem der unabhängigen Hydraulikkreise wird ein bestimmter Druck zur Verfügung gestellt, der individuell auf die Anforderungen dieses speziellen Kreises geregelt ist. Ein Hauptkreisregler verbindet den Haupthydraulikkreis mit einem Sekundärkreis. Beide Hydraulikkreise werden jeweils durch eine Pumpe versorgt. Falls ein von der Primärpumpe gelieferter hydraulischer Strom ausreicht, um auch den Bedarf des Sekundärkreises zu befriedigen, schaltet ein Sekundärkreisregler um, um in einem Kreislauf einen Strom von der Sekundärpumpe zurück zur Ölwanne und nicht zum Sekundärkreis umzupumpen. Die beiden Pumpen stehen mittels einer Saugleitung über einen Filter mit einer gemeinsamen Ölwanne in ständiger Fluidverbindung. Eine gesonderte Einheit für das Kühlen des Fluids ist aber in einem solchen Hydraulikkreis nicht vorgesehen.

Eine Weiterentwicklung der Hydraulikkonzepte der DE 101 47 123 B4 mit dem Ziel, mechanisch noch einfachere Systeme zu entwerfen, beschreibt die DE 10 2011 008 607 A1 (Anmelderin: GM Global Technology Operations LLC; Prioritätstag: 19.01.2010), wonach eine Pumpe mit zwei Verdrängerpumpelementen vorzusehen sei, die unter Verwendung einer einzigen Eingangswelle angetrieben werden. Für einen Einbau in einen Hybridantriebsstrang sei vorzusehen, dass bei ausgeschalteter Maschine ein elektrischer Antrieb Hydraulikleitungsdruck liefert. Gem. einer weiteren Ausführungsform ist ein Durchflussbegrenzungs-/Druckentlastungsventil zu verwenden, um ein niedriges Niveau an Fluidströmung (vermutlich sollte es in dem Dokument heißen: mit einem niedrigeren Druckniveau) von dem zweiten Hydraulikkreissegment zu dem ersten Hydraulikkreissegment als ein sekundärer Kreis zum Kühlen und zur Druckentlastung zuzulassen. Bei einem solchen System kann aber nicht mehr von einer vollständigen unabhängigen Betriebsweise der beiden Pumpen ausgegangen werden, denn die Einzelpumpen sind ja über die gleiche Eingangswelle gekoppelt.

Unterschiedlichste hydraulische Schaltungen für Kraftfahrzeug-Antriebsstränge mit verschiedensten Pumpenanordnungen (zwei Pumpen auf einer Welle, zwei getrennte Pumpen, Pumpsysteme mit und ohne Ladedrucksystem) beschreibt auch die DE 103 47 203 A1 (Anmelderin: ZF Sachs AG; Prioritätstage: 18.11.2002, 26.02.2003, 09.04.2003). Damit soll eine Kupplungseinrichtung mit Druckmedium oder/und Betriebsmedium bzw. ein Getriebe mit Druckmedium versorgt werden. Außerdem ist eine Betätigungsanordnung für die Getriebebetätigung vorgesehen. Unter den zahlreichen Ausführungsbeispielen zeigt z. B. Figur 14 eine Anordnung, bei der eine mechanisch betriebene Kupplung dazu dient, über einen Kühler Kühlmittel zum Kühlen der ersten und zweiten Kupplung bereitzustellen. Neben der verbrennungsmechanisch angetriebenen Pumpe ist eine elektromotorisch betriebene Pumpe vorhanden, die durch einen gleichen Saugfilter mit By-Pass-Ventil das Hydraulikmittel aus einem Sumpf bezieht. Die elektromotorisch betriebene Pumpe lädt einen Hydrospeicher und versorgt die hydraulischen Schaltungen für die Kupplungsbetätigung und die hydraulischen Schaltungen zur Betätigung eines ersten Teilgetriebes und eines zweiten Teilgetriebes mit Druckmittel. Der elektromotorischen Pumpe sind ein Druckfilter mit By-Pass-Ventil und ein Rückschlagventil nachgeschaltet.

Zwei durch einen gemeinsamen Elektromotor antreibbare Pumpen können gemäß der DE 10 2011 100 862 A1 (Anmelderin: Audi AG; Anmeldetag: 06.05.2011) zum Fördern eines Hydraulikmediums für ein Doppelkupplungsgetriebe genutzt werden. Der Figur der DE 10 2011 100 862 A1 ist zu entnehmen, dass die beiden Pumpen auf der gleichen Welle sitzen. Die zweite Pumpe, die jedoch durch eine Kupplung vom Elektromotor abkoppelbar ist, dient dazu, Hydraulikmittel aus dem Sumpf über eine für beide Pumpen gemeinsame Ansaugleitung und einen einzigen Filter einem Kühler zuzuführen. Ein dem Kühler nachgeschaltetes Volumensteuerventil dient dazu, das Kühlmittel einer ersten und einer zweiten Kühlung zuzuführen oder über einen weiteren Filter mit By-Pass-Leitung und Rückschlagventil in den Sumpf zurückzuführen. Der ersten Pumpe ist ein Schaltventil nachgeschaltet, das es erlaubt, ebenfalls Hydraulikmittel von der ersten Pumpe dem Kühler zuzuführen. Eine Versorgung aus der zweiten Pumpe heraus auf hydraulische Kreise zur Versorgung einer Kupplungsbetätigung dürfte in der vorgestellten Schaltung nicht möglich sein.

Ein Hydrauliksystem mit einer von einem Verbrennungsmotor mechanisch angetriebenen und einer elektrisch betriebenen Pumpe geht auch aus der DE 10 2010 032 657 A1 (Anmelderin: Schaeffler Technologies GmbH & Co. KG; Prioritätstage: 06.08.2009, 26.11.2009) hervor. Mit dem Hydrauliksystem sollen ein Getriebe mit einem ersten Teilgetriebe und einem zweiten Teilgetriebe angesteuert und versorgt werden. Die von dem Verbrennungsmotor angetriebene und über eine hydraulisch ansteuerbare Kupplung abkoppelbare Pumpe dient zur Versorgung der Kupplungen, damit diese mit Hydraulikmedium über eine Kühleranordnung hinweg gekühlt werden können. Der Kühleranordnung ist ein Kühlölventil nachgeschaltet, das es erlaubt, jeweils einer der beiden Kupplungen gezielt Hydraulikmedium zur Kühlung zuzuführen. Eine dritte Stellung dient dazu, beide Kupplungen von der Pumpe abzutrennen und den Förderstrom auf den Tank zu schalten. Aus dem Tank bezieht auch die elektrisch angetriebene Pumpe, die als erste Pumpe bezeichnet ist, Hydraulikmittel, um damit über ein Speicherladeventil in einer Schaltstellung einen Druckspeicher zu laden bzw. in einer zweiten Schaltstellung den geförderten Volumenstrom den Kupplungen zur Kühlung zuzuleiten. Ein in Kupplungen vorgeschaltetes Kühlölstrompriorisierungsventil bestimmt, welche der Kupplungen damit gekühlt wird. Von dem Druckspeicher wird das Hydraulikmittel über ein Sicherheitsventil und einen nachgeschalteten Sperrschieber dem ersten Teilgetriebe mit den jeweiligen Gleichflächenkolben der Gangschaltungen und dem Betätigungszylinder der Kupplung oder dem entsprechenden zweiten Teilgetriebe zum Schalten zugeführt.

Auch in der DE 10 2014 216 648 A1 (Anmelderin: Schaeffler Technologies AG & Co. KG; Prioritätstage: 25.09.2013, 26.11.2013) werden mehrere hydraulische Steuerungen für ein Nutzfahrzeug-Doppelkupplungsgetriebe beschrieben. Gem. einem Ausführungsbeispiel sollen eine verbrennungsmotorisch angetriebene Pumpe und eine elektrische Pumpe zum Einsatz kommen. Die mit der Elektromaschine antreibbare, zusätzliche Hydraulikpumpe ist der Funktion "Kühlung" zugeordnet. Ein einer Kühl- bzw. Filtereinrichtung nachgeordnetes Kühlkreisvorspannventil ermöglicht die Rückführung des gekühlten Hydraulikmittels zur Ansaugleitung der von dem Verbrennungsmotor angetriebenen hydraulischen Pumpe. Diese verbrennungsmotorisch angetriebene Pumpe dient zur Bereitstellung des Drucks zum Schließen von einer Kupplung "1" bzw. zum Öffnen einer Kupplung "2", wobei der jeweils andere Zustand der Kupplungen durch Federkraft vorbestimmt ist. Hinter der "mechanischen Pumpe" befinden sich in der Leitung mehrere Abzweigungen, von denen eine zur Hauptdruckventileinrichtung führt, von der aus ein Drucküberschuss benutzt wird, um Hydraulikmittel ebenfalls der Kühlung zuzuführen. Rückschlagventile werden für verschiedene Stellen der verschiedenen Hydraulikkreise vorgeschlagen.

Gemäß der DE 10 2014 207 808 A1 (Anmelderin: ZF Friedrichshafen AG; Anmeldetag: 25.04.2014) kann ein Hydrauliksystem eines Getriebes eine erste Pumpeneinheit, die von einer Getriebeeingangswelle antreibbar ist, und eine zweite Pumpeneinheit, die mit der Getriebeausgangswelle gekoppelt ist, an einer gemeinsamen Saugleitung mit einer gemeinsamen Filtereinrichtung aufweisen. Während der Durchführung von Schaltungen im Getriebe kann die Kühlung der beiden Kupplungen ausgehend vom Primärdruckkreis im Bereich eines Kühlventils abgeschaltet werden, um Verzögerungen bei der Schaltung zu vermeiden. Während eines solchen Betriebszustands ist der Radsatz über die zweite Pumpeneinheit mit Hydraulikfluid versorgbar. Gewisse Hydraulikrückflüsse werden über federvorgespannte Rückschlagventile verhindert. Die zu der DE 10 2014 207 808 A1 tagesgleich parallel angemeldete DE 10 2014 207 806 A1 der gleichen Anmelderin ZF Friedrichshafen AG zeigt in ihren Figuren die gleichen Ausführungsbeispiele wie die DE 10 2014 207 808 A1. Die DE 10 2014 207 806 A1 konzentriert sich aber darauf, dass eine Hydraulikpumpe mit variierbaren Förderleistungen genutzt werden soll und ein so herstellbarer Hydraulikfluidvolumenstrom über ein Steuerventil, das einen Ventilschieber und mehrere Ventiltaschen aufweist, im Weiteren verschiedenen Getriebebereichen zuführbar ist. Zwischen einer ersten Pumpeneinheit und einem Trennventil, das als Druckbegrenzungsventil ausgeführt ist, liegt ein Druck vor, der als Vorsteuerdruck auf ein sog. Stauventil wirkt. Das Stauventil kann somit auf einen abfallenden Förderdruck der Pumpeneinheit reagieren.

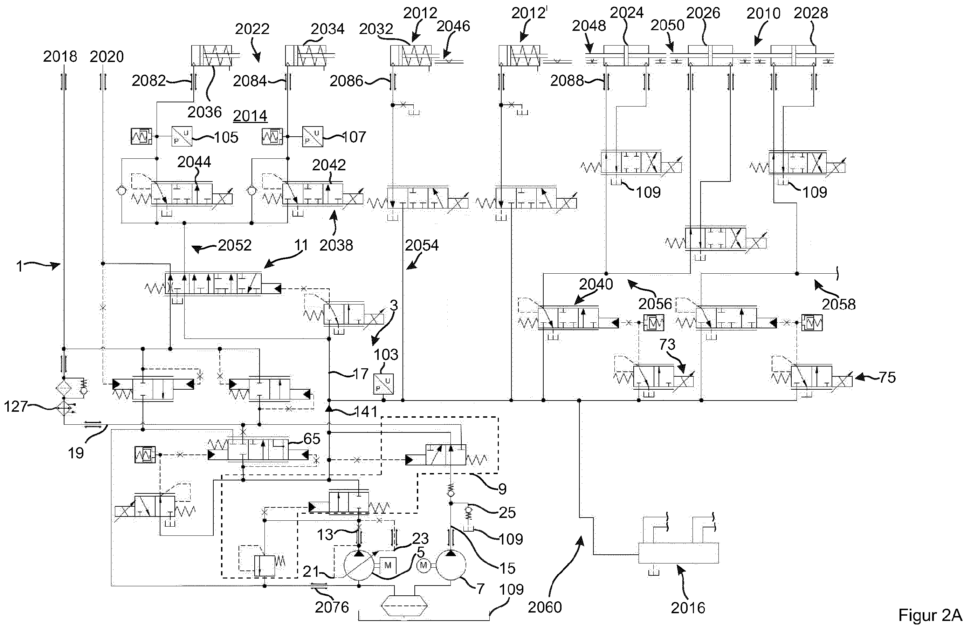

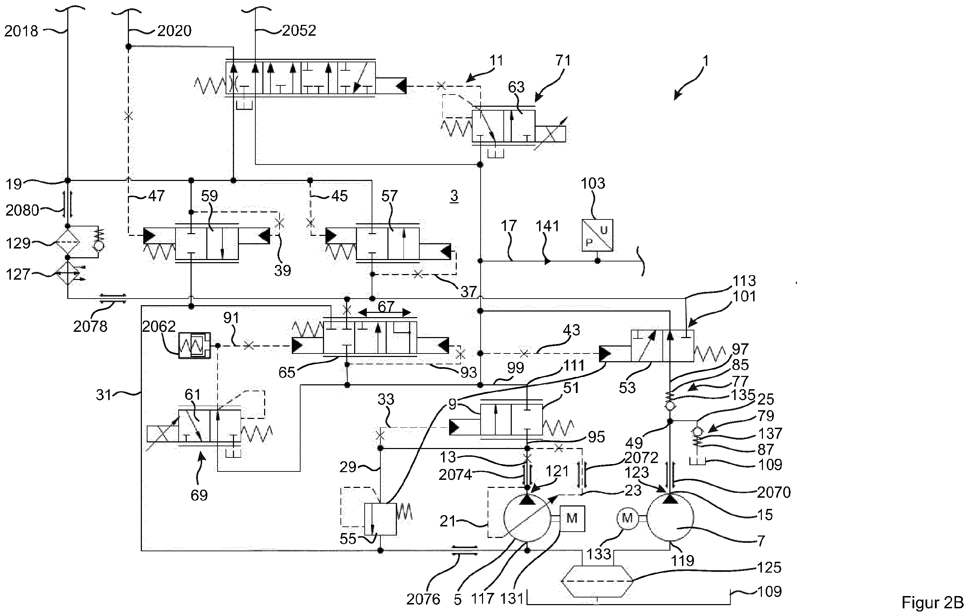

Aus der DE 10 2009 005 753 A1 (Anmelderin: Daimler AG; Veröffentlichungstag: 29.07.2010) geht ein Ventilplan einer hydraulischen Steuerung eines Doppelkupplungsgetriebes (z. B. durch ihre Figur 2) hervor. Eine Hauptpumpe sei durch eine Antriebsmaschine angetrieben und eine Zusatzpumpe sei von einem Elektromotor anzutreiben. Die Steuerung weist, flusstechnisch nach einem Trennventil angeordnet, einen Arbeitsdruckschieber "RS AD" auf, der als 4/3-Ventil ausgebildet ist. Ein zweiter Anschluss des Arbeitsdruckschiebers ist mit der Saugseite der Hauptpumpe verbunden und dient zur Zurückführung von überschüssigem Öl. Ein dritter Anschluss führt zu einem Hochdrucksystem. Ein vierter Anschluss soll zu einem Schmier-Kühlsystem führen. Der Druck von der Hauptpumpe kann somit bei Überschreitung einer Druckschwelle jenseits des Ventils "RS AD" u. a. zusätzlich durch einen vorgeschalteten Ölkühler in ein Kühlsystem geleitet werden. Der Arbeits-Steuerdruck des Ventils "RS AD" wird von einem Regelmagnetventil durch eine elektronische Steuerung eingestellt.

Die hydraulische Schaltung gem. der US 2015/167 836 A1 (Anmelderin: Allison Transmission Inc.; Veröffentlichungstag: 18.06.2015) weist, wie ihre Figur 2 zeigt, zwei sog. "solenoids 236, 238" auf, die jeweils die Funktion eines Pilotventils wahrnehmen, d. h. zu Betätigung des "clutch twin valve 232" bzw. des "main regulator by-pass valve 220" dienen. Das "main regulator by-pass valve 220" wird mit Druck aus einer elektrischen Pumpe versorgt, die zusätzlich zu einer mechanischen Hauptpumpe vorhanden ist. Das "main regulator by-pass valve 220" dient, wie das "mainregulator valve 218" zum Durchschalten von aus der elektrischen Pumpe oder einer mechanischen Hauptpumpe anliegendem Druck. Den Pumpen unmittelbar nachgeschaltet sind jeweils zwei Kugelsitzventile in Reihe angeordnet, von denen eines einen Rückstrom zur Pumpe verhindern soll und ein zweites sogenanntes "pop-off valve" die Pumpenausgangsleitungen jeweils bei Überdruck gegenüber einem Tank entlasten dürfte.

### Aufgabenstellung

Es geht in Kenntnis der zuvor zitierten Druckschriften, deren Offenbarungsgehalt als vollinhaltlich in vorliegende Erfindungsbeschreibung in Bezug auf mögliche Ausgestaltungen von Vorrangschaltungen und Rückflussverhinderungen inkludiert gilt, also darum, bei Antriebssträngen mit mehreren Antriebsquellen (insbesondere Hybridantriebe) eine Hydraulikmittelaufbereitung zu entwickeln, die den besonderen Anforderungen an Doppelkupplungsantriebssträngen (zumindest in Teilen) gerecht werden kann.

### Erfindungsbeschreibung

Die erfindungsgemäße Aufgabe wird durch eine hydraulische Schaltung zur Hydraulikmittelaufbereitung nach Anspruch 1 gelöst, ein geeignetes Betriebsverfahren, insbesondere zur Druckerzeugung auf Basis von wenigstens zwei Pumpen, lässt sich Anspruch 14 entnehmen. Vorteilhafte Weiterbildungen lassen sich den abhängigen Ansprüchen entnehmen.

Es gibt hydraulische Steuerschaltungen, die von Druckerzeugern mit unter Druck stehendem Hydraulikmittel versorgt das Hydraulikmittel schaltungszustandsabhängig an hydraulische Verbraucher wie Stellzylinder, hydraulische Kolben und hydraulische Motoren liefern, mit einem ersten Druckerzeuger, z. B. eine in Abhängigkeit einer Drehzahl einstellbare Flügelzellenpumpe, der nur im Verlauf von bestimmten Betriebsphasen arbeits- und somit druckaufbaufähig ist, während zu anderen Zeiten der erste Druckerzeuger nicht zum Druckaufbau genutzt werden kann, eventuell sich sogar im Stillstand befindet. Beispielsweise haben Hybridantriebsstränge eines Kraftfahrzeuges häufig als eine erste Pumpe, die auch als Hauptpumpe bezeichnet werden kann, eine verbrennungsmotorisch angetriebene Pumpe. Diese Pumpe kann mittelbar oder unmittelbar Pumpleistung aus der Verbrennungskraftmaschine beziehen. Je nach Gestaltung des Hybridantriebsstrangs kann aber auch vorgesehen sein, dass die Verbrennungskraftmaschine gelegentlich gänzlich abgeschaltet ist, obwohl sich das Fahrzeug in einem Fahrbetrieb befindet. Häufig tritt, insbesondere in besonderen Betriebsphasen, eine weitere Antriebsmaschine an die Stelle der Verbrennungskraftmaschine. Ist der erste Druckerzeuger, z. B. in Gestalt der ersten Pumpe, unmittelbar mit der Verbrennungskraftmaschine gekoppelt, liefert in dieser Betriebsphase, in der die Verbrennungskraftmaschine nicht mehr als Antriebsmotor arbeitet, der erste Druckerzeuger bzw. die erste Pumpe keinen Druck. In solchen Phasen ist der Druckerzeuger stillgesetzt. Am Rande bemerkt, statt einer Pumpe kann ein alternativer Druckerzeuger in einigen Fahrzeugen die gleiche Funktion erfüllen, z. B. ein Lader, ein Wandler oder ein hydraulisches Schwungmassensystem. Trotzdem kann die hydraulische Schaltung, z. B. eine hydraulisch betriebene Getriebesteuerung, dafür bestimmt sein, dass die Verbraucher weiterhin, selbst in der Phase des stillgesetzten ersten Druckerzeugers, unter Druck stehendes Hydraulikmittel "verbrauchen". Zumindest in dieser Phase, jedoch auch in den Fällen, in denen der vom ersten Druckerzeuger erzeugte Volumenstrom und/oder Hydraulikdruck nicht ausreicht, kann ein zweiter Druckerzeuger, insbesondere ein anders angetriebener Druckerzeuger, den benötigten Volumenstrom und/oder das zusätzliche Hydraulikmittel unter Druck zur Verfügung stellen. Ein solcher zweiter Druckerzeuger kann z. B. eine weitere Flügelzellenpumpe sein. Genauso kann als zweiter Druckerzeuger eine elektrisch angetriebene und geregelte Pumpe, wie z. B. eine Zahnradpumpe, verwendet werden. Vorteilhafterweise ist die verbrennungsmotorisch bzw. mechanisch angetriebene Pumpe eine mit Freilauf ausgestattete Pumpe. Der Freilauf kann so gestaltet sein, dass die mechanisch angetriebene Pumpe nur in eine Richtung drehen kann. Findet eine Drehrichtungsumkehr des Antriebs der Pumpe, z. B. einer Kette, statt, findet keine Übertragung auf die Pumpelemente der Pumpe statt. Eine der weiteren Pumpen, z. B. die elektromotorisch angetriebene Pumpe, kann eine Pumpe sein, die einen Links-/Rechtslauf ausführen kann, d. h., auch rückwärtslaufend Hydraulikmittel in den Sumpf zurückfördern kann.

Bei einem Hybridantriebsstrang mit einem Getriebe wie einem Doppelkupplungsgetriebe kann es sinnvoll sein, den ersten Druckerzeuger, der von der Verbrennungskraftmaschine angetrieben wird, als Hauptdruckerzeuger auszulegen. Ein zweiter Druckerzeuger, der von einem elektrischen Motor, wie z. B. einem Stepper- oder einem Servomotor, angetrieben wird, kann für Phasen des Betriebs vorgesehen werden, in denen die Hydraulikversorgung aus dem ersten Druckerzeuger nicht ausreicht, z. B. das Fördervolumen zu gering ist (Stillstand der Verbrennungskraftmaschine; Leerlauf der Verbrennungskraftmaschine; häufige und schnelle Schaltwechsel; erhöhter Kühlbedarf einzelner Getriebekomponenten wie z. B. einer oder mehrerer Kupplungen). Während der erste Druckerzeuger in seinem Betriebsverhalten dem Betrieb der Verbrennungskraftmaschine folgt, genauer synchron zum Betriebsverhalten der Verbrennungskraftmaschine läuft, kann der zweite Druckerzeuger hiervon vollkommen unabhängig einer anderen Betriebsstrategie folgen, z. B. der Betriebsstrategie der Ergänzungsversorgung. Eine solche Unabhängigkeit spiegelt sich bei Hydraulikmittelaufbereitungen wieder, die mit wenigstens zwei Pumpen ausgestattet bedrucktes Hydraulikmittel in einer Phase des Betriebs zur Verfügung stellen, in dem der Druck aus dem einen Druckerzeuger höher ist als aus dem anderen Druckerzeuger. Insbesondere ist es in einigen Gestaltungen vorteilhaft, wenn jeder der Druckerzeuger sein eigenes Druckniveau erzeugen kann. Das heißt, die Druckerzeuger erzeugen - im Vergleich untereinander - unterschiedliche Drücke, damit sie das unter Druck stehende Hydraulikmittel an die nachfolgenden Stufen der Schaltung wie der Zentraldruckversorgung zur Verfügung stellen können. Selbst in einer Phase eines gleichzeitigen Betriebs können die Drücke und/oder Druckverläufe der Druckerzeuger unterschiedlich sein, z. B. abwechselnd schwellend. Im Falle einer verstellbaren Flügelzellenpumpe als erster Druckerzeuger kann die Flügelzellenpumpe so dimensioniert sein, dass das bedruckte Hydraulikmittel für eine Standard-Grundversorgung ausgelegt ist. Steigt der Verbrauch, kann die zweite Pumpe, eine gleichartige oder auch eine anders funktionelle Pumpe im Vergleich mit der ersten Pumpe, hinzugeschaltet werden.

Besonders einfach unter dem Blickwinkel der Anzahl der Bauteile ist eine hydraulische Schaltung, die mit einer Zentraldruckleitung (ungepuffert) operiert. Eine gewisse Komplexität liegt nicht in der Anzahl von Bauteilen im Vergleich zu einem Lade-Speicher-System, sondern in der geeigneten Betriebsstrategie der gesamten hydraulischen Schaltung. Eine solche Hydraulikschaltung mit Zentraldruckleitung ist vorteilhafterweise ohne Ladespeicher gestaltet. Die Zentraldruckleitung selbst stellt das Reservoir des unter Druck stehenden Hydraulikmittels dar. Aus der Zentraldruckleitung werden, insbesondere stichleitungsartig, die einzelnen Verbraucher in ihren, häufig individuell ausgestalteten, Strecken versorgt. In solchen, insbesondere ohne Druckspeicher ausgestatteten, hydraulischen Schaltungen, ist das höchste Bezugsdruckniveau der Druck, der in der Zentraldruckleitung herrscht. Bei der Bezeichnung bzw. der Behauptung, dass es sich um eine ungepufferte Versorgung handelt, wird gedanklich vernachlässigt, dass gelegentlich Dämpfer in einzelnen hydraulischen Strecken vorgesehen werden. Die Dämpfer, die häufig sehr kleinvolumig sind und (nur) dafür ausgelegt sind, hydraulische Schwingungen auf den Leitungen zu unterbinden, können aber nicht die Funktion einer zentralen Druckspeicherversorgung übernehmen. Daher wird trotz vorhandener Dämpfer von einer speicherlosen Zentraldruckleitung gesprochen. Der Druckerzeuger bzw. die Pumpe saugt auf einer Niederdruckseite ein Hydraulikmittel, ggf. ein gereinigtes oder gefiltertes Hydraulikmittel, an und setzt das Hydraulikmittel unter Druck und gibt es auf einer Hochdruckseite ab. Damit Hydraulikmittel in die Zentraldruckleitung eingeleitet werden kann, hat jeder der Druckerzeuger eine eigene Druckleitung, die den jeweiligen Druckerzeuger, z. B. eine erste Pumpe, eine zweite Pumpe und eine dritte oder eine weitere Pumpe, insbesondere über ihre jeweilige Hochdruckseite, in die Zentraldruckleitung, ggf. über verschiedene Ventile, münden lässt. Ist der von einer der Pumpen erzeugte Druck höher als der (standardmäßig vorgesehene) Druck in der Zentraldruckleitung, gelangt Hydraulikmittel aus der Druckleitung der einzelnen Pumpe fließend in die Zentraldruckleitung. In den Druckleitungen von jeder der Pumpen, d. h. in den Pumpendruckleitungen, herrscht somit zu manchen Betriebszeitpunkten ein höherer Druck als in der Zentraldruckleitung. Trotzdem ist der Druck in der Zentraldruckleitung der zentrale Bezugsdruck für die gesamte Schaltung. Die Drücke in den Pumpendruckleitungen können genauso, zumindest während einzelner Pumpvorgänge oder auch während gesamter Betriebsphasen, niedriger sein als der Druck in der Zentraldruckleitung.

Ist die hydraulische Schaltung so konzipiert, dass sie mit verschiedenen Druckniveaus arbeitet, so kann neben der Zentraldruckleitung oder auch von der Zentraldruckleitung abgezweigt eine weitere Druckleitung vorhanden sein, die Hydraulikmittel auf einem niedrigeren Druckniveau (im Vergleich mit dem Druck aus der Zentraldruckleitung) zur Verfügung stellt, z. B. eine Schmier-Kühl-Druckleitung. Beispielhaft sei erläutert, dass die Zentraldruckleitung (während des Betriebs) permanent auf einem Druckniveau von z. B. 30 bar gehalten wird. Hierzu niedriger wird die Schmier-Kühl-Druckleitung auf einem Druckniveau von z. B. 1/10 (grob gesprochen) des Drucks in der Zentraldruckleitung gehalten, z. B. auf einem Druckniveau zwischen 2,5 bar und 5 bar (genauer: um eine Zehner-Potenz verringertes Druckniveau). Das Druckniveau in den einzelnen Druckleitungen, wie z. B. in der Zentraldruckleitung, kann mithilfe von Druckregelschaltungen in einem, je nach Regelgüte, insbesondere geringen bzw. engen, Druckregelband, z. B. weniger als 1 bar, beispielsweise innerhalb von Schwankungen von ca. 100 mbar, gehalten werden.

In Abhängigkeit der Verbrauchsanforderungen und/oder des Versorgungsbedarfs können Vorrangschaltungen in der hydraulischen Schaltung vorhanden sein, die dafür sorgen, dass eine der Druckleitungen ausreichend mit Hydraulikmittel versorgt wird. Mithilfe von Vorrangschaltungen können Priorisierungen einzelner Arbeitsbereiche der hydraulischen Schaltung realisiert werden. So ist es möglich, funktionswichtigen Schaltungsteilen, z. B. einer Kupplungsdruckregelung, bis zum Ende einer möglichen Betriebsphase Hydraulikmittel zur Verfügung zu stellen, während anderen Bereichen, wie einer Fahrwerksteuerung oder einer aerodynamischen Steuerung, die Hydraulikmittelversorgung vorher gekappt wird.

Mithilfe von Flussrichtungsbauteilen kann sichergestellt werden, dass Hydraulikmittel in die Schaltungsteile gelangt, die vorrangig versorgt werden sollen. Gilt z. B. die Zentraldruckleitung als der Bereich, der als erstes und möglichst bis zum Schluss im höchsten Grade zuverlässig versorgt werden soll, so kann ein Flussrichtungsbauteil nach jeder der Pumpen, zumindest aber hinter einer der Pumpen, eingebaut sein, sodass Überdrücke und das Druckniveau der Zentraldruckleitung überschreitende, unter Druck stehende Hydraulikmittel an die Zentraldruckleitung weitergegeben werden. Mit Flussrichtungsbauteilen wird gewährleistet, dass Hydraulikmittel in einen Bereich der hydraulischen Schaltung gelangt, jedoch nicht unkontrolliert aus diesem Bereich wieder herausfließt. Geeignete Flussrichtungsbauteile sind - je nach Anwendungsfall - Schieberventile, Rückschlagventile, Blenden, Drosseln, Drosselrückschlagventile, Stromventile, Sperrventile, Lochblendenventile, Schlitzblendenventile und/oder Patronenrückschlagventile. Als Rückschlagventil kommen solche Bauformen wie Kugelsitzventil, Sitzventil oder Plattenventil in Frage. Kugelsitzventil, Sitzventil oder Plattenventil können als Rückschlagventil eingesetzt werden.

An jede der Pumpen ist eine eigene, der Pumpe zugerechnete Druckleitung angeschlossen, die auch als erste Pumpendruckleitung (für die erste Pumpe), zweite Pumpendruckleitung (für die zweite Pumpe) oder dritte Pumpendruckleitung (für die dritte Pumpe) deklariert werden kann (usw. für vierte und allfällige weitere Pumpen). Die Druckleitung führt von dem Druckausgang der Pumpe (über ggf. vorzusehende Ventile und Flussrichtungsbauteile) zu daran angeschlossenen versorgenden Druckleitungen wie der Zentraldruckleitung oder wie der Schmier-Kühl-Druckleitung. An wenigstens einer der Druckleitungen, die von einer der Pumpen zu der versorgenden Druckleitung führt und deswegen auch als Pumpendruckleitung zu bezeichnen ist, ist ein Abzweig vorhanden, der das Hydraulikmittel, das aufgrund der Bedruckung durch den Druckerzeuger unter Druck stehen kann, in unterschiedliche Bereiche mithilfe eines Flussbauteils lenken kann. Im einfachsten Fall kann von einer Y-Leitung bei der Beschreibung der Pumpendruckleitung gesprochen werden. Der eine Zweig ist der Hauptstromzweig für das Hydraulikmittel aus der Hydraulikpumpe. Der herausführende, insbesondere seitlich angeschlossene, Zweig weist ein Flussrichtungsbauteil auf, damit bedarfsabhängig Hydraulikmittel umgeleitet werden kann. Das Flussrichtungsbauteil in der abzweigenden Leitung spricht auf Druckverhältnisse an, die vorzugsweise von den Druckverhältnissen von der Pumpendruckleitung zu der versorgenden Druckleitung abweichen. Das Hydraulikmittel wird in verschiedene Flussrichtungen aufgefächert. An jenem Punkt in der Leitung wird das Hydraulikmittel verteilt. Die Leitung fächert sich auf.

Wird die an einer Pumpendruckleitung angeschlossene Vorrangschaltung so betrieben, dass die Pumpe gegen ein geschlossenes Ende fördert, weil z. B. ein Schieber eines Schieberventils der Vorrangschaltung einen Druck vorrübergehend sperrt, kann bei ausreichenden Druckunterschieden, Druckverhältnissen und/oder Druckniveaus das Flussrichtungsbauteile in der abgefächerten Leitung ansprechen. Je nach Ausgestaltung des abzweigenden, insbesondere zweiten, Flussrichtungsbauteils kann dieses auf Druckverhältnisse, Druckgefälle, Druckniveaus, Volumina und/oder Grenzdrücke ansprechen. Der von der Pumpe erzeugte Druck wird nicht (sinnlos) in Förderwärme, die womöglich in das Hydraulikmedium eingeleitet würde, umgewandelt. Das weitere Flussrichtungsbauteil schafft eine Verbindung, die in Abhängigkeit von Druckverhältnissen, Drücken oder ähnlichen Bedingungen wie Druckgefällen geöffnet ist. Der Druck steht für eine weitere Nutzung zur Verfügung. Drehen sich die Druckverhältnisse in dem Abschnitt der Hydraulikmittelaufbereitung der hydraulischen Schaltung um, so verhindert das Flussrichtungsbauteil einen Rückfluss in den Druckerzeuger. Überdrücke, nicht genutzte Förderanteile und/oder gefördertes Hydraulikmittel in Übergangsphasen werden für die Hydraulikschaltung nutzbringend aus der Druckleitung, die aus dem Druckerzeuger herausführt, abgeleitet. Die ableitende, sich bedarfsabhängig selbständig öffnende Leitung führt auf eine andere Leitung. Nach einem bevorzugten Ausführungsbeispiel wird hierbei aber eine Verbindung von der ersten Druckleitung zu der zweiten Druckleitung bzw. von der zweiten Druckleitung zu der ersten Druckleitung nicht hergestellt. Die Abzweigung führt in eine andere Leitung als in die weitere Pumpendruckleitung.

Die Druckerzeugung mit zwei Pumpen, die insbesondere als Teil einer Kfz-Hydraulik, z. B. für eine Getriebesteuerung in einem Kfz eingebaut sein kann, hat ihre Vorrangschaltung strömungsmäßig hinter den Pumpen, d. h. abströmseitig. Die Vorrangschaltung ist an der ersten Druckleitung und an der zweiten Druckleitung angeschlossen.

In einer Ausgestaltung gibt es wenigstens zwei Rückschlagventile, die beide an jener Pumpe angeschlossen sind, die als Hilfspumpe benutzt werden kann. Dies ist z. B. deswegen möglich, weil diese Pumpe eine elektromotorisch angetriebene Pumpe ist. Die Pumpe saugt ein Hydraulikmittel an und leitet es weiter in die hydraulische Schaltung. Es ist somit eine wegleitende Pumpe. Jenseits nach der Pumpe, also abströmseitig, hat die Pumpe zwei Leitungen bzw. Leitungsabschnitte. Durch diese Leitungen kann Hydraulikmittel strömen. Weil sich (theoretisch) die Strömungsrichtung des Hydraulikmittels umkehren kann, sind die Leitungen gegen Strömungsflussrichtungen in Rückflussrichtung gesperrt.

In Abhängigkeit von einem ersten Druckgefälle schaltet das erste Rückschlagventil die zweite Druckleitung in Richtung auf ein Ventil der Vorrangschaltung frei. In Abhängigkeit von einem zweiten Druckgefälle schaltet das zweite Rückschlagventil die zweite Druckleitung entweder in Richtung auf eine Sumpfableitung, in Richtung auf eine Zentraldruckleitung und/oder in Richtung auf eine Schmier-Kühl-Druckleitung frei.

Die Vorrangschaltung bestimmt, welche der Pumpen ihr Hydraulikmittel in die Zentraldruckleitung einleiten darf. Hierzu wird anhand von Drücken in den beiden Druckleitungen zumindest ein Ventil betätigt. Vorteilhafterweise setzt sich die Vorrangschaltung aus wenigstens zwei Ventilen zusammen. Ein Ventil ist der ersten Pumpe zugeordnet. Ein Ventil ist der zweiten Pumpe zugeordnet. Die Ventile können sich - zumindest teilweise - gegenseitig freischalten bzw. sperren. Hierdurch kann eine Druckvorrangschaltung realisiert werden. Außerdem kann eines der Ventile so gestaltet sein, dass bei zu geringem Druck in der Druckleitung zu diesem Ventil das Hydraulikmittel in einen Bereich mit niedrigerem Druck bzw. auf einem niedrigeren Druckniveau, wie z. B. in die Schmier-Kühl-Druckleitung, eingeleitet wird. Reicht der Druck nicht aus, so kann nachrangig der Niederdruckbereich versorgt werden.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

In einer günstigen Weiterbildung bzw. Ausgestaltung der hydraulischen Schaltung kann eine Entkopplung der hydraulischen Druckerzeugungen in betrieblicher und/oder funktioneller Hinsicht vorgesehen sein. So ist es möglich, die hydraulischen Druckerzeugungen nach verschiedenen Kriterien zueinander unterschiedlich zu gestalten. Ein Kriterium, wonach die Druckerzeugungen gestaltet sein können, kann in einem Druckverlauf in Abhängigkeit der zueinander variierenden Betriebsphasen liegen. Ein weiteres Kriterium kann in der Betriebsphasengestaltung liegen. Die hydraulischen Druckerzeugungen können unterschiedliche Betriebsphasen aufweisen. Die hydraulischen Druckerzeugungen können voneinander abweichende Drücke zu einem Zeitpunkt erzeugen. Die hydraulischen Druckerzeugungen können voneinander unabhängig phasenweise stillgesetzt werden oder auch in einen Leerlaufbetrieb versetzt werden. Obwohl sich jeder der hydraulischen Druckerzeuger zu bestimmten Zeitabschnitten in einem Betriebszustand befinden kann, in dem er keinen Beitrag zum Druckaufbau in den Versorgungsleitungen liefern kann, sollte keine der hydraulischen Druckerzeugungen eine Druck- oder Hydraulikmittelverringerung in den Versorgungsleitungen bewirken. Die Vorrangschaltung kann vorteilhafterweise diese Aufgabe erfüllen. So ist es in einer Ausgestaltung möglich, sobald ein Betriebszustand des ersten hydraulischen Druckerzeugers festgestellt wird, der keinen ausreichenden Druck zur Verfügung stellt, die erste hydraulische Druckerzeugung komplett von der Zentraldruckleitung abzukoppeln. Bei Unterschreitung eines Mindestdrucks oder eines Mindestdruckverhältnisses kann bei der ersten hydraulischen Druckerzeugung von einem steuerfreien Zustand gesprochen werden. In einer Ausgestaltung kann der steuerfreie Zustand aber auch anhand der Stellung eines Ventils der Vorrangschaltung festgemacht werden. Insbesondere in den Fällen, in denen ein Ventil der Vorrangschaltung dafür sorgt, dass eine hydraulische Abkopplung zwischen erster hydraulischer Druckerzeugung und der Zentraldruckleitung gegeben ist, kann davon gesprochen werden, dass sich das Ventil der Vorrangschaltung in einem steuerfreien Zustand befindet. Genauso kann der steuerfreie Zustand aber auch der ersten hydraulischen Druckerzeugung zugeordnet werden.

Ein steuerfreier Zustand kann ebenfalls der zweiten hydraulischen Druckerzeugung zugeordnet werden. Der steuerfreie Zustand der zweiten hydraulischen Druckerzeugung kann zu einem anderen Zeitpunkt vorliegen als der steuerfeie Zustand der ersten hydraulischen Druckerzeugung. Bezüglich der zweiten hydraulischen Druckerzeugung kann anhand eines Ventils der steuerfreie Zustand gemäß einer günstigen Weiterbildung identifiziert werden. Alternativ oder zusätzlich kann der steuerfreie Zustand aber auch anhand von Drücken an einer Hochdruckseite der zweiten hydraulischen Druckerzeugung festgemacht werden. Besonders vorteilhaft ist es, wenn im steuerfreien Zustand der zweiten hydraulischen Druckerzeugung oder des für die zweite hydraulische Druckerzeugung vorrangig zuständigen Ventils eine hydraulische Verbindung über das Ventil in die Zentraldruckleitung vorhanden ist. Dem Ventil bzw. der Vorrangschaltung kann noch ein Flussrichtungsbauteil strömungsmäßig vorgeschaltet sein, das erst bei einem Mindestdruckgefälle oder einem Mindestdruckunterschied die bereits über die Vorrangschaltung gegebene hydraulische Verbindung in die Zentraldruckleitung stromaufwärts bis zu der zweiten hydraulischen Druckerzeugung freischaltet.

Bei der Ausgestaltung bzw. bei dem Schaltzustand, dass in einem steuerfreien Zustand der ersten hydraulischen Druckerzeugung die Verbindung zur Zentraldruckleitung von der ersten hydraulischen Druckerzeugung abgekoppelt ist und (zugleich) eine Verbindung in die Zentraldruckleitung von der zweiten hydraulischen Druckerzeugung generell vorhanden ist, jedoch durch ein Flussrichtungsbauteil noch nicht endgültig freigeschaltet ist, befindet sich die einen solchen Schaltzustand erzeugende Vorrangschaltung in einem definierten Schaltzustand. Aus diesem Grund kann in Abhängigkeit der Drücke an den Hochdruckseiten der hydraulischen Druckerzeugungen in nachfolgende Zustände übergewechselt werden.

Vorteilhafterweise ist die erste hydraulische Druckerzeugung mit einem Verbrennungsmotor des Antriebsstrangs, in dem die hydraulische Schaltung ein Teil ist, verbunden. Der Verbrennungsmotor kann als Nebenantriebsmaschine für solche Komponenten wie die erste hydraulische Druckerzeugung neben seiner Hauptaufgabe des Bewegungsantriebs des Kraftfahrzeuges genutzt werden. Vorteilhafterweise ist die erste hydraulische Druckerzeugung in einem Nebenantrieb an dem Verbrennungsmotor bzw. von dem Verbrennungsmotor eingebunden. Solche Nebenantriebe sind Kettentriebe, Riementriebe oder auch Zahnradkupplungen und Zahnradverbindungen. Wird als erste hydraulische Druckerzeugung eine Flügelzellenpumpe eingesetzt, so kann diese einen im Betrieb anpassbaren Arbeitsdruck erzeugen. Hierzu können Drücke eingangsseitig bzw. niederdruckseitig auf der einen Seite und hochdruckseitig auf der anderen Seite abgegriffen werden und auf die Pumpe zur Einstellung des zu fördernden Volumens oder des zu erzeugenden Drucks zurückgekoppelt werden.

Für die zweite hydraulische Druckerzeugung kann eine elektromotorisch angetriebene Pumpe verwendet werden. Eine solche Pumpe kann z. B. eine drehzahlgeregelte Pumpe sein. Pumpen, die als drehzahlgeregelte Pumpen ausgelegt sein können, sind Zahnradpumpen. Die zweite hydraulische Druckerzeugung kann auch nur als Hilfspumpe zur ersten hydraulischen Druckerzeugung dimensioniert sein. Der Hauptdruck oder das Hauptvolumen wird in einem regulären Betrieb von der ersten hydraulischen Druckerzeugung bezogen. In besonderen Betriebsphasen, z. B. im Falle eines elektromotorischen Antriebs des Kraftfahrzeugs, springt die elektromotorisch angetriebene Pumpe ein, die die zweite hydraulische Druckerzeugung darstellen kann.

In wenigstens einer der Druckleitungen, die von den hydraulischen Druckerzeugungen eine Verbindung in Richtung auf die Versorgungsleitungen wie die Zentraldruckleitung herstellen können, kann ein Schieberventil eingebaut sein. Solche Schieberventile gibt es als pilotgesteuerte Ventile. Wird das Schieberventil mit einer Feder am Kolben ausgestattet, kann das Schieberventil in einen Standardruhezustand versetzt werden. Das Schieberventil bestimmt anhand eines Druckes an einer (bestimmten) Stelle der hydraulischen Schaltung, ob eine Verbindung zur Zentraldruckleitung (direkt oder indirekt) freigegeben wird. In einem besonders einfachen Ausgestaltungsfall kann als Schieberventil ein, insbesondere hydraulisch gesteuertes, 2/2-Ventil verwendet werden.

Die hydraulische Schaltung kann neben einer ersten Versorgungsleitung, die z. B. die Zentraldruckleitung ist, eine weitere Versorgungsleitung umfassen, die Hydraulikmittel in Schmierbereiche und/oder Kühlbereiche weiterleitet. Eine solche zentrale Versorgungsleitung kann aufgrund ihrer Funktion z. B. als zentrale Schmier-Kühl-Druckmittelleitung bezeichnet werden. Der Druck in den Versorgungsleitungen kann druckgeregelt in einem Arbeitsband akzeptabler Drücke eingestellt werden. So ist es möglich, die zentrale Schmier-Kühl-Druckmittelleitung mit einem druckgeregelten Hydraulikmittelstrom zu beaufschlagen, der dann als Schmiermittelstrom und/oder Kühlmittelstrom weiterleitbar ist.

Die Vorrangschaltung in ihrer Gesamtheit kann die Aufgabe übernehmen, die unterschiedlichen Hydraulikmittelströme, die von den Druckerzeugungen zur Verfügung gestellt werden, den verschiedenen Versorgungsleitungen, wie der Zentraldruckleitung oder auch der Schmier-Kühl-Druckmittelleitung, zur Verfügung zu stellen. Die Vorrangschaltung schafft zustandsabhängig Verbindungen in die Zentraldruckleitung. Die Vorrangschaltung schafft ebenfalls zustandsabhängig (vorzugsweise durch andere Zustände) Verbindungen in die zentrale zweite Versorgungsleitung, z. B. in die zentrale Schmier-Kühl-Druckmittelleitung.

In einer vorteilhaften Weiterbildung kann eines der Ventile, die der Vorrangschaltung zugeordnet sind, als Ventil zur Aufteilung des Hydraulikmittelflusses bzw. des Hydraulikmittelstroms, der von einer der hydraulischen Druckerzeugungen stammt, genutzt werden. Ein solches Ventil kann z. B. ein 3/2-Ventil sein. Ein solches Ventil kann in einem Zustand den Hydraulikmittelstrom z. B. in die Zentraldruckleitung leiten, während ein solches Ventil in seinem zweiten Zustand den Hydraulikmittelstrom in eine Leitung für einen Schmiermittelstrom oder in eine Leitung für einen Kühlmittelstrom bzw. in eine Leitung für beide Ströme leiten kann.

Zusätzlich zu dem ersten Flussrichtungsbauteil, das ein Rückschlagventil sein kann, können weitere Flussrichtungsbauteile an oder in den Pumpdruckleitungen vorhanden sein. Das wenigstens eine weitere Flussrichtungsbauteil kann so an der Pumpdruckleitung angeschlossen sein, dass es insbesondere in Abhängigkeit von Druckunterschieden, eine Ableitung des Hydraulikmittels in den Sumpf ermöglicht. Aufgewendete Energien, z. B. für eine Druckerzeugung, werden aber vorteilhafterweise weitergehend genutzt. Sollen die aufgewendeten Energien vorteilhaft genutzt werden, können Ableitungen in die Zentraldruckleitung oder in sonstige, weitere Versorgungsleitungen wie z. B. in die Schmier-Kühl-Druckmittelleitung über das zweite Flussrichtungsbauteil herstellbar sein. Eine solche Verbindung kann druckabhängig und/oder druckgefälleabhängig herstellbar sein.

Vorteilhafterweise erfolgt die Regelung des tatsächlich in der Hauptdruckleitung bzw. der Zentraldruckleitung herrschenden Drucks durch ein zusätzliches Hauptdruckventil, das außerhalb der Vorrangschaltung angeordnet Überdrücke, z. B. durch Ableitung in eine Rezirkulation, reduzieren kann. Die Rezirkulation kann z. B. auf eine Ansaugseite eines der Druckerzeugungen führen.

Aufgrund von Drücken, Druckverhältnissen, Druckunterschieden oder Druckgefällen können die verschiedenen Flussrichtungsbauteile freigeschaltet werden oder in einen gesperrten Zustand übergeführt werden. Alternativ können die zuvor aufgelisteten Einflussgrößen, die insbesondere von Drücken abhängen, dazu verwendet werden, Mengen, Volumina oder Flussstärken, z. B. über Blenden, zu beeinflussen.

Es ist möglich, die verbrennungsmotorisch angetriebene Pumpe, die als erste Druckerzeugung eingesetzt ist, als Hauptpumpe einzusetzen. Die Pumpe kann zusätzlich druckgeregelt sein. Eine Druckregelung ist sowohl direkt als auch indirekt vorstellbar. Die Pumpe kann eine Verbindung in die Zentraldruckleitung vorfinden, wenn ein entsprechendes Ventil, das der Pumpe zugeordnet ist und Teil der Vorrangschaltung ist, feststellt, dass der von der ersten Pumpe erzeugte Druck ausreicht, um die Zentraldruckleitung zu beliefern.

Das Hydraulikmittel, das von der zweiten Druckerzeugung stammt, kann, insbesondere mit Hilfe eines flussrichtungssteuernden Ventils, in verschiedene Richtungen bzw. zu verschiedenen Versorgungsleitungen geführt werden. Im einfachsten Fall ist ein Ventil vorgesehen, das zwei verschiedene Versorgungsleitungen mit bedrucktem Hydraulikmittel, das vorrangig von der zweiten Druckerzeugung stammt, verteilt.

Die zuvor dargestellten Kombinationen und Ausführungsbeispiele lassen sich auch in zahlreichen weiteren Verbindungen und Kombinationen betrachten.

So ist es denkbar und auch vorteilhaft, unterschiedliche Flussrichtungsbauteile um die Druckerzeuger herum zu platzieren, z. B. Drosseln und Kugelsitzventile in Kombination.

Dank der zusätzlichen Flussrichtungsbauteile, insbesondere in der zweiten Pumpen- bzw. Pumpdruckleitung, ist es möglich, die Pumpe zu betreiben, ohne dass diese in Übergangphasen gegen ein geschlossenes Ende der Leitung fördern muss. Versuche haben gezeigt, dass nicht nur eine effizientere Hydraulikmittelaufbereitung dank der Flussrichtungsbauteile möglich ist, sondern die Lebensdauer der Druckerzeuger auch noch gesteigert werden kann. Als eine Begründung hierfür wurde aus den im Rahmen der vorliegenden Erfindung durchgeführten Laborversuchen die Schlussfolgerung abgeleitet, dass die Pumpe nicht pulsierend das Hydraulikmittel in einer Phase der Verstellung des Schiebers eines Ventils, das zu der Vorrangschaltung gehört, gegen eine verschlossene Ventilführung (an-)fördert, sondern über eine Abzweigung das geförderte Hydraulikmittel weitergeleitet wird.

Eine der der vorliegenden Erfindung zugrundeliegenden Ideen kann auch dahingehend beschrieben werden, dass mehrere Druckerzeugungen, vorzugsweise mit unterschiedlichen Antrieben, zu einer Gesamtdruckerzeugung zusammengefasst sind, wobei mehrere Druckerzeugungen Förderleistung für das Hydraulikmedium zur Einleitung als bedrucktes Hydraulikmittel in eine Zentraldruckleitung erbringen können. Welche Druckerzeugung in einer Phase bzw. in einem Zustand für die Versorgung der Zentraldruckleitung zuständig ist, bestimmt sich aus Druck- und/oder Strömungsverhältnissen hochdruckseitig nach den Druckerzeugungen an einer oder mehreren Stellen in der Hydraulikmittelaufbereitung. Neben einer Zentraldruckleitung, die vorzugsweise ladespeicherfrei ist, gibt es noch wenigstens eine weitere Versorgungsleitung, die vorzugsweise auf einem niedrigeren Druckniveau liegt als die Zentraldruckleitung. Hierzu kann eine Druckreduktionsstufe zwischen der Zentraldruckleitung und der weiteren Versorgungsleitung Teil der Hydraulikmittelaufbereitung sein. Eine Vorrangschaltung bestimmt, welche der Druckerzeugungen eine Durchleitung zur Zentraldruckleitung hat bzw. vorfindet. Finden Wechsel zwischen den Drücken bzw. Druckverhältnissen und/oder zwischen den Strömungsverhältnissen hochdruckseitig nach den Druckerzeugungen statt, so verändert sich - zumindest bei einigen Wechseln - der Schaltzustand der Vorrangschaltung ebenfalls. D. h., es gibt Übergangszustände in der Vorrangschaltung. Ein unerwünschter Übergangszustand ist ein Zustand, in dem eine Druckerzeugung gegen einen verschlossenen Port eines Ventils oder gegen ein verschlossenes Ende einer Leitung anfördert. Zur Vermeidung bzw. um die Wirkungen solcher Situationen und Zustände zu verringern, gibt es wenigstens ein weiteres Flussrichtungsbauteil, das insbesondere Drücke von der elektromotorisch angetriebenen Pumpe um- oder weiterleiten kann.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 schematisch eine mögliche Gestaltung eines Antriebsstrangs mit einem Doppelkupplungsgetriebe darstellt,
Figur 2A eine erste Ausführungsform eines Getriebehydraulikplans zeigt,
Figur 2B einen Ausschnitt der Hydraulikmittelaufbereitung aus dem Getriebehydraulikplan nach Figur 2A zeigt,
Figur 3A eine zweite Ausführungsform eines Getriebehydraulikplans zeigt,
Figur 3B einen Ausschnitt der Hydraulikmittelaufbereitung aus dem Getriebehydraulikplan nach Figur 3A zeigt,
Figur 4A eine dritte Ausführungsform eines Getriebehydraulikplans zeigt,
Figur 4B einen Ausschnitt der Hydraulikmittelaufbereitung aus dem Getriebehydraulikplan nach Figur 4A zeigt,
Figur 5A eine vierte Ausführungsform eines Getriebehydraulikplans zeigt,
Figur 5B einen Ausschnitt der Hydraulikmittelaufbereitung aus dem Getriebehydraulikplan nach Figur 5A zeigt,
Figur 6A eine fünfte Ausführungsform eines Getriebehydraulikplans zeigt,
Figur 6B einen Ausschnitt der Hydraulikmittelaufbereitung aus dem Getriebehydraulikplan nach Figur 6A zeigt,
Figur 7A eine sechste Ausführungsform eines Getriebehydraulikplans zeigt,
Figur 7B einen Ausschnitt der Hydraulikmittelaufbereitung aus dem Getriebehydraulikplan nach Figur 7A zeigt,
Figur 8A eine siebte Ausführungsform eines Getriebehydraulikplans zeigt,
Figur 8B einen Ausschnitt der Hydraulikmittelaufbereitung aus dem Getriebehydraulikplan nach Figur 8A zeigt,
Figur 9A eine achte Ausführungsform eines Getriebehydraulikplans zeigt,
Figur 9B einen Ausschnitt der Hydraulikmittelaufbereitung aus dem Getriebehydraulikplan nach Figur 9A zeigt,
Figur 10A eine neunte Ausführungsform eines Getriebehydraulikplans zeigt und
Figur 10B einen Ausschnitt der Hydraulikmittelaufbereitung aus dem Getriebehydraulikplan nach Figur 10A zeigt.

### Figurenbeschreibung

In der nachfolgenden Figurenbeschreibung werden ähnliche oder sogar identische Komponenten und Bauteile mit den gleichen, teilweise mit jeweils von Figur zu Figur um 200 erhöhte Bezugszeichen bezeichnet. Folglich gilt die Figurenbeschreibung zu einer Figur auch in angepasster Form auf die anderen Figuren übertragen.

Aus Gründen der Übersichtlichkeit sei auf Textpassagen zu Bezugszeichen verwiesen, die nicht in allen Figuren wiederholt diskutiert werden.

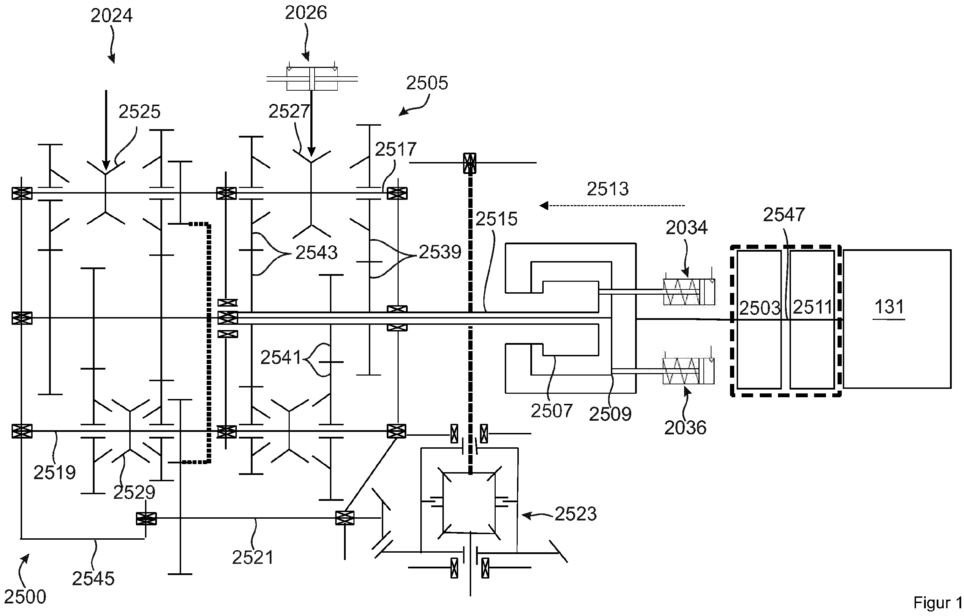

Figur 1 zeigt einen Antriebsstrang 2500, für den eine Hydraulikschaltung 1, 201, 401, 601, 801, 1001, 1201, 1401, 1601 mit ihren Ansteuerungen wie den Gangstellerschieberkolben 2024, 2026, 2028 (nach den Figuren 2A bis 10A) Betätigungs- und Eingriffsaufgaben übernehmen kann.

Der in Figur 1 gezeigte Antriebstrang 2500 umfasst eine Verbrennungskraftmaschine 131, eine Elektromaschine 2503, die als Antriebsmaschine des Antriebstrang 2500 genutzt werden kann, mehrere Kupplungen 2507, 2509, 2511, von denen zumindest zwei Kupplungen 2507, 2509 Teil eines Doppelkupplungsgetriebes 2505 sind.

Zu dem Doppelkupplungsgetriebe 2505 gehören die erste Kupplung 2507, die zweite Kupplung 2509, eine Eingangswelle 2515, Vorgelegewellen 2517, 2519 und eine Ausgangswelle 2521. Weitere Komponenten wie ein Getriebegehäuse 2545 und Zahnradpaare 2539, 2541, 2543 gehören ebenfalls zu dem Doppelkupplungsgetriebe 2505. Teil des Doppelkupplungsgetriebes 2505 sind die Schaltmuffen 2525, 2527, 2529.

Der aktuatorische Übergang zwischen einer der Hydraulikschaltungen 1, 201, 401, 601, 801, 1001, 1201, 1401, 1601 (nach den Figuren 2A bis 10A) und den zu stellenden Elementen des Doppelkupplungsgetriebes 2505, wie den Schaltmuffen 2525, 2527, 2529 oder wie den Kupplungen 2507, 2509, wird durch Gangstellerschieberkolben 2024, 2026, 2028 und Differenzkolbenzylindern 2034, 2036 gebildet.

Aus der Verbrennungskraftmaschine 131 führt eine Kurbelwelle 2547 heraus. Die Kurbelwelle 2547 ist eine mehrteilige, zum Teil außerhalb der Verbrennungskraftmaschine 131 verlaufende Kurbelwelle, auf der weitere Komponenten des Antriebsstrangs 2500 angeordnet sind. Die Elektromaschine 2503 kann antreibend auf die Kurbelwelle 2547 wirken. Genauso kann die Elektromaschine 2503 in einem generatorischen Betrieb betrieben werden, wenn die Verbrennungskraftmaschine 131 über die Kurbelwelle 2547 die Elektromaschine 2503 antreibt. Mit Hilfe der Kupplungen 2507, 2509, 2511 kann der Drehmomentenfluss aus den Antriebsmaschinen wie der Verbrennungskraftmaschine 131 und der Elektromaschine 2503 in das Doppelkupplungsgetriebe 2505 gesteuert werden. Mit Hilfe der Kupplungen 2507, 2509, 2511 sind Kraftflussunterbrechungen 2513 realisierbar. Das in das Doppelkupplungsgetriebe 2505 eingeleitete Drehmoment entsprechend der Einstellung der Kupplungen 2507, 2509, 2511 und der dadurch einhergehenden Kraftflussunterbrechung 2513 gelangt über die Übersetzung der Zahnradpaare 2539, 2541, 2543 auf das Differential 2523, um so auf (nicht dargestellte) Straßenräder geleitet zu werden.

Mittels hydraulischer Schaltungen, wie z. B. in den Schaltplänen der Figuren 2A bis 10B gezeigt, können die Gangstellerschieberkolben 2024, 2026, 2028 und die Differenzkolbenzylinder 2034, 2036 betätigt werden. Hierdurch gelangen die Kupplungen 2507, 2509, 2511 in wenigstens einem Schaltzustand in eine Kraftflussverbindung. Mit Hilfe der Schaltmuffen 2525, 2527, 2529 können die Gangstellerschieberkolben 2024, 2026, 2028 Kraftflussverbindungen durch das Doppelkupplungsgetriebe 2505 auf eine der Vorgelegewellen 2517, 2519 herstellen.

In den nachfolgenden Figuren werden Schaltungsvarianten gezeigt, wie Antriebstränge, die dem Antriebsstrang 2500 nach Figur 1 entsprechen oder ähneln können, in ihren Schaltstellungen und Kraftflussstrecken mittels einer hydraulischen Schaltung 1, 201, 401, 601, 801, 1001, 1201, 1401, 1601 variiert werden können.

Zum leichteren Verständnis, welchen Aufgaben hierbei insbesondere eine Hydraulikmittelaufbereitung 3, 203, 403, 603, 803, 1003, 1203, 1403, 1603 einer hydraulischen Schaltung 1, 201, 401, 601, 801, 1001, 1201, 1401, 1601 gerecht werden sollte und welche Funktionen eine entsprechende Hydraulikmittelaufbereitung 3, 203, 403, 603, 803, 1003, 1203, 1403, 1603 daher erfüllen können sollte, sollen die Figuren 2A bis 10A in Bezug auf ihre Verbraucherteile wie Gangstellerteil 2010, erster Kupplungszweig 2012, Doppelkupplungsbaugruppe 2014, Klappensteuerbaugruppe 2016, Kühlbereich 2018 bzw. 2018^{I} und Schmierbereich 2020 bzw. 2020^{I} gemeinsam vorgestellt werden.

Neben zwei ersten Kupplungszweigen 2012, 2012^{I} gibt es einen zweiten Kupplungszweig 2022. Die Doppelkupplungsbaugruppe 2014 umfasst den zweiten Kupplungszweig 2022, über den zwei Kupplungen 2507, 2509 eines Doppelkupplungsgetriebes 2505 betätigt bzw. gesteuert werden können (vgl. Figur 1). Die unterschiedlichen Verbraucher des Getriebes, in dem die hydraulische Schaltung 1, 201, 401, 601, 801, 1001, 1201, 1401, 1601 Teil des Getriebes ist, müssen zu unterschiedlichen Zeitpunkten mithilfe des Hydraulikmittels 141 betätigt werden. Damit ausreichend Hydraulikmittel 141, vorzugsweise in der erwarteten bzw. gewünschten Qualität in Bezug auf solche Qualitätsmerkmale wie Druck, Restschmutz, Schmutzpartikelgröße und -anteil, Temperatur, Alterung usw., zur Verfügung steht, arbeitet die Hydraulikmittelaufbereitung 3, 203, 403, 603, 803, 1003, 1203, 1403, 1603. Die Hydraulikmittelaufbereitung 3, 203, 403, 603, 803, 1003, 1203, 1403, 1603 stellt das Hydraulikmittel 141 an die nachfolgenden Stufen der hydraulischen Schaltung 1, 201, 401, 601, 801, 1001, 1201, 1401, 1601 zur Verfügung.

Von der Zentraldruckleitung 17, 217, 417, 617, 817, 1017, 1217, 1417, 1617 gehen stichleitungsartig die Baugruppen wie das Gangstellerteil 2010, der erste Kupplungszweig 2012 und der zweite Kupplungszweig 2022 ab. Das Druckniveau in der Zentraldruckleitung 17, 217, 417, 617, 817, 1017, 1217, 1417, 1617 kann mithilfe eines Drucksensors 103, 303, 503, 703, 903, 1103, 1303, 1503, 1703 zumindest überwacht, mithilfe eines entsprechenden Steuergeräts (nicht dargestellt), das auf die Druckerzeuger 5, 7, 205, 207, 405, 407, 605, 607, 805, 807, 1005, 1007, 1205, 1207, 1405, 1407, 1605, 1607 und/oder auf das, z. B. als Druckwaage 67 ausgestaltete, Hauptdruckregelventil 65 (siehe insbesondere Figur 2B; via dem ersten Richtungsflussventil 61) einwirken kann, auch geregelt werden. Die einzelnen Verbraucher, wie die Gangstellerschieberkolben 2024, 2026, 2028, der erste, insbesondere federvorgespannte, Differenzkolbenzylinder 2032, der zweite, insbesondere federvorgespannte, Differenzkolbenzylinder 2034 und der dritte, insbesondere federvorgespannte, Differenzkolbenzylinder 2036 erhalten ihre Energie auf hydraulische Weise aus dem Druck des Hydraulikmittels 141 in der Zentraldruckleitung 17, 217, 417, 617, 817, 1017, 1217, 1417, 1617. Aufgrund von Druckabfällen über Schieberventile 2038, 2040 verringert sich der Druck, mit dem das Hydraulikmittel 141 in die Verbraucher wie die Gangstellerschieberkolben 2024, 2026, 2028 hineinströmen kann. Die Schieberventile wie das Schieberventil 2038 sind in einigen hydraulischen Strecken (siehe die hydraulischen Strecke 2052) direkt gesteuerte elektromagnetische Schieberventile. In anderen hydraulischen Strecken (siehe die hydraulische Strecke 2060) sind Schieberventile wie das Schieberventil 2040 pilotgesteuerte Schieberventile (siehe drittes Pilotventil 73). Die vorgeschalteten Schieberventile, wie z. B. das Schieberventil 2040, die einen druckgeregelten Vorsteuerdruck für die Gangstellerschieberkolben 2024, 2026, 2028 erzeugen können, werden jeweils über ein Pilotventil 73, 75 angesteuert. Es gibt hydraulische Strecken 2054, 2056, 2058, z. B. zu den Gangstellerschieberkolben 2024, 2026, 2028, in denen sich eine Kombination aus direktgesteuerten Schieberventilen 2038 und aus pilotgesteuerten Schieberventilen 2040 befinden. Mit einem ersten Kupplungsdruckregelventil 2042 kann die Lage bzw. Stellung des zweiten Differenzkolbenzylinders 2034 druckgeregelt eingestellt werden. Mit einem zweiten Kupplungsdruckregelventil 2044 kann die Position des dritten Differenzkolbenzylinders 2036 eingestellt werden. Mithilfe von Drucksensoren, wie dem Drucksensor 105, 305, 505, 705, 905, 1105, 1305, 1505, 1705 oder dem Drucksensor 107, 307, 507, 707, 907, 1107, 1307, 1507, 1707 kann der Druck in einer hydraulischen Strecke, wie der hydraulischen Strecke 2052, zu den Verbrauchern, wie den Differenzkolbenzylindern 2034, 2036, überwacht werden oder - je nach Ausgestaltung des elektronischen Steuergeräts sogar - gesteuert werden. Zusätzlich kann die Position einzelner Aktuatoren wie dem ersten Differenzkolbenzylinder 2032 oder wie dem Gangstellerschieberkolben 2024 mithilfe von Positionssensoren 2046, 2048, 2050 überwacht werden. Durch Blick in die Figuren 2A, 3A, 4A, 5A, 6A, 7A, 8A, 9A und 10A ist zu erkennen, dass nur ein Teil der hydraulischen Strecken 2052, 2054, 2056, 2058, 2060 mit Drucksensoren 103, 105, 305, 505, 705, 905, 1105, 1305, 1505, 1705, 107, 307, 507, 707, 907, 1107, 1307, 1507, 1707 ausgestattet sind.

Von der Zentraldruckleitung 17, 217, 417, 617, 817, 1017, 1217, 1417, 1617 führen die hydraulischen Strecken 2052, 2054, 2056, 2058, 2060 weg zu den einzelnen Verbrauchern, wie zu den Gangstellerschieberkolben 2024, 2026, 2028 oder wie zu den Differenzkolbenzylindern 2032, 2034, 2036, die zur hydraulischen Kupplungsbetätigung dienen. Das Druckniveau in der Zentraldruckleitung 17, 217, 417, 617, 817, 1017, 1217, 1417, 1617 ist eine zentrale Größe für die Funktionstüchtigkeit der hydraulischen Schaltung 1, 201, 401, 601, 801, 1001, 1201, 1401, 1601. Trotzdem ist es möglich, die Zentraldruckleitung 17, 217, 417, 617, 817, 1017, 1217, 1417, 1617 ohne einen Druckspeicher auszustatten; sie dient selbst als Speicher aufgrund ihrer Kanalführung zu den Verbrauchern wie Gangstellerteil 2010, erster Kupplungszweig 2012, Doppelkupplungsbaugruppe 2014, Klappensteuerbaugruppe 2016, Kühlbereich 2018 bzw. 2018^{I} und Schmierbereich 2020 bzw. 2020^{I}.

Je nach Typ des Verbrauchers in der hydraulischen Schaltung 1 werden unterschiedliche Anforderungen an die Zentraldruckleitung 17, 217, 417, 617, 817, 1017, 1217, 1417, 1617 und an die zweite Versorgungsleitung 19, 219, 419, 619, 819, 1019, 1219, 1419, 1619 gerichtet. Der Druck des Hydraulikmittels 141 dient dazu, zumindest einen der Gangstellerschieberkolben 2024, 2026, 2028 in eine von drei Positionen durch ein Befüllen von Kammern einzustellen. Mithilfe von Positionssensoren 2048, 2050 kann die genaue Position eines Gangstellerschieberkolbens 2024, 2026, 2028 gemessen und dadurch überwacht werden. Nicht mehr benötigtes Hydraulikmittel in einer Kammer wird gegenüber dem Sumpf 109 abgelassen. In Abhängigkeit der Frequenz der Gangwechsel wird Hydraulikmittel 141 in einer Quantität benötigt, damit eine einzelne Kammer bei einem Gangwechsel befüllt werden kann (z. B. mittels Volumensteuerung der Gangstellerschieberkolben 2024, 2026, 2028). Die Differenzkolbenzylinder 2032, 2034, 2036 werden hydraulisch auf unterschiedliche Druckpunkte und/oder Stellpositionen gegen einen Federvordruck geregelt. Die Kupplungsdruckregelventile 2042, 2044 müssen exakte Drücke an die Differenzkolbenzylinder 2034, 2036 liefern. Der tatsächlich in einem Differenzkolbenzylindern 2034, 2036 vorhandene Druck kann mithilfe von einem Drucksensor 105, 305, 505, 705, 905, 1105, 1305, 1505, 1705, 107, 307, 507, 707, 907, 1107, 1307, 1507, 1707 überwacht werden. Ist das Steuergerät ausreichend schnell bei seinen Berechnungen, kann in einer alternativen Ausführungsform auch mit Hilfe der Drucksensoren 105, 305, 505, 705, 905, 1105, 1305, 1505, 1705, 107, 307, 507, 707, 907, 1107, 1307, 1507, 1707 die Kupplungsbetätigung geregelt werden. Ein Kupplungsdruckregelventil 2042, 2044 liefert einen Druck an den ihm nachgeschalteten Verbraucher Differenzkolbenzylinder 2032, 2034. Vorteilhafterweise sind die Kupplungsdruckregelventile 2042, 2044 elektromagnetisch direkt betätigte Schieberventile 2038. Je nach Fahr- und Betriebsweise wird über längere Phasen ein kontinuierlich bezogener Druck aus der Zentraldruckleitung 17 benötigt. Die zweite Versorgungsleitung 19 soll einen anhaltenden Volumenstrom zur Kühlung im Kühlbereich 2018 abgeben können. Es gibt Abschnitte in einer Schaltung wie einer der Schaltungen 1, 201, 401, 601, 801, 1001, 1201, 1401, 1601, die pulsartig eine geringe Menge Hydraulikmittel 141 benötigen. Es gibt andere Abschnitte in der Schaltung 1, 201, 401, 601, 801, 1001, 1201, 1401, 1601, die kontinuierlich einen Hydraulikfluss benötigen.

Wird nun eingehender Figur 2A betrachtet, so sticht die Vorrangschaltung 9 in das Auge. Die Vorrangschaltung 9 soll sicherstellen, dass in der Zentraldruckleitung 17 eine ausreichende Menge des Hydraulikmittels 141 innerhalb eines akzeptablen Druckbandes zur Verfügung steht. Der Druck in der Zentraldruckleitung 17 wird nicht nur über die Vorrangschaltung 9 beeinflusst, sondern auch durch das Hauptdruckventil 65. Die Vorrangschaltung 9 leitet Hydraulikmittel 141 von einer der beiden Pumpen 5, 7 über die Druckleitungen 13, 15 in die Versorgungsleitungen 17, 19. Mithilfe einer zweiten Vorrangschaltung 11 wird zusätzlich bestimmt, welche Menge Hydraulikmittel 141 in dem Schmierbereich 2020 zur Verfügung gestellt wird. Ist das Hydraulikmittel 141 zu warm, kann über den Kühler 127 Wärme aus der Schaltung 1 ausgebracht werden. Die Temperatur des Hydraulikmittels 141 wird in geregelter Weise abgesenkt. Welchen Druck die Pumpe 5 liefern kann bzw. in welchem Druckniveau sich die Pumpe 5 hochdruckseitig bewegt, kann anhand von Pumpsteuerleitungen 21, 23 variiert werden. Druckspitzen, erzeugt insbesondere von der zweiten Pumpe 7, können über eine By-Pass-Leitung 25 abgeführt werden, z. B., wie in Figur 2A dargestellt, in Richtung zum Sumpf 109.

Die für die Kupplungsbetätigung vorgesehenen Differenzkolbenzylinder 2034, 2036 werden über die Druckregelventile 2042, 2044 mit frei einstellbaren Positionen ihrer Kolben im Betrieb gehalten. Hierzu gehört es auch, dass ein Differenzkolbenzylinder 2034, 2036 in einer komplett geöffneten Position längere Zeit verharrt. Die Gangstellerschieberkolben 2024, 2026, 2028 werden über hydraulische Strecken mit zwei Ventilen wie dem pilotgesteuerten Schieberventil 2040 durch eine Volumensbeaufschlagung in eine von drei ausgewählten Stellungen (linker Gang, neutrale Position, rechter Gang) eingestellt. Die Klappensteuerbaugruppe 2016 wird unter Nutzung der natürlichen Leckage in Zuständen unterschiedlicher Füllgrade der Kolben gehalten.

Externe Komponenten wie die Differenzkolbenzylinder 2032, 2034, 2036 können über Steckverbindungen 2082, 2084, 2086 an die hydraulische Schaltung 1 angeschlossen werden. Die externen Komponenten werden so ein Teil der hydraulischen Schaltung 1. Daneben gibt es noch weitere Steckverbinder wie z. B. den Steckverbinder 2076, die die Sumpfrückflussleitung verbindet. Auch können die Gangstellerschieberkolben 2024, 2026, 2028 über Steckverbinder wie z. B. der Steckverbinder 2088 ankoppelbar ausgeführt sein.

Wie anhand der Figur 2B besser zu sehen ist, können auch die Pumpen 5, 7 als externe Komponenten über Steckverbinder 2070, 2072, 2074, 2076 an die hydraulische Schaltung 1 angeschlossen werden. Dadurch wird es möglich, dass die Pumpen 5, 7 in der Nähe ihrer Antriebe wie der Verbrennungskraftmaschine bzw. dem Verbrennungsmotor 131 angeordnet werden und über Leitungen mit dem Rest der hydraulischen Schaltung 1 verbunden sind. Die Hydraulikmittelaufbereitung 3 setzt sich aus z. B. in einer Steuerplatte zusammengefasste hydraulische Komponenten, wie einem Hauptdruckventil 65, und externen Komponenten, wie einem Kühler 127, einem Kühlerfilter 129 oder einer der Pumpen 5, 7, zusammen. Kühler 127 und Kühlerfilter 129 sind in Serie verschaltet zwischen zwei Steckverbindern 2078, 2080 extern an die Steuerplatte der hydraulischen Schaltung 1 angeschlossen.

In Figur 2B wird der Teil der in Figur 2A gezeigten hydraulischen Schaltung 1, der überwiegend der Funktion Hydraulikmittelaufbereitung 3 zugerechnet werden kann, größer und damit besser einsehbar vorgestellt.

Die Hydraulikmittelaufbereitung 3 umfasst neben der ersten Druckerzeugung 5 und der zweiten Druckerzeugung 7 eine größere Anzahl Ventile (je nach Zählung bis zu 11 Ventilen), z. B. ein erstes Ventil 51 der Vorrangschaltung 9, ein zweites Ventil 53 der Vorrangschaltung 9, z. B. ein erstes Pilotventil 69 als vorgeschaltetes Ventil auf einer mit Hydraulikmittel 141 bedruckbaren Kolbenflächenseite des Hauptdruckventils 65. Ein zweites Pilotventil 71 ist Teil der zweiten Vorrangschaltung 11. Beide Pilotventile 69, 71 sind druckseitig an der Zentraldruckleitung 17 angeschlossen. Außerdem führt die Zentraldruckleitung 17 zu einem Port der durch die Pilotventile 69, 71 gesteuerten Hauptventile wie das Hauptdruckventil 65. Zur Stabilisierung gegen einzelne Druckschwankungen, die z. B. aus der ersten Druckerzeugung 5 über das erste Ventil 51 der Vorrangschaltung 9 in die Zentraldruckleitung 17 eingeleitet werden können, ist eine dritte Freigabesteuerleitung 91, die die Verbindung zwischen dem vorgeschalteten Pilotventil 69 und dem Hauptdruckventil 65 ist, ein erster Speicher 2062 an der dritten Freigabesteuerleitung 91 angeschlossen.

Die veränderliche Flügelzellenpumpe, die die Realisierung der ersten Druckerzeugung 5 darstellt, ist mit seiner Ansaugseite 117 an einer Leitung der zweiten Rezirkulation 31 angeschlossen. Die zweite Rezirkulation 31 ist über einen Ansaugfilter 125 gegenüber einem Sumpf 109 ablaufoffen ausgestaltet. An dem Ansaugfilter 125 ist die zweite Druckerzeugung 7 über die zweite Ansaugseite 119 angeschlossen. Die erste Druckerzeugung 5 hat eine Hochdruckseite 121. Die zweite Druckerzeugung 7 hat eine Hochdruckseite 123. An der ersten Hochdruckseite 121 der ersten Druckerzeugung 5 ist die erste Druckleitung, genauer die erste Pumpendruckleitung 13 angeschlossen. An der zweiten Hochdruckseite 123 der zweiten Druckerzeugung 7 ist die zweite Druckleitung, genauer die zweite Pumpendruckleitung 15 angeschlossen. Jede der Druckleitungen 13, 15 mündet, zum Teil über ein Flussrichtungsbauteil 77 geführt, in dem ersten Ventil 51 und in dem zweiten Ventil 53 der Vorrangschaltung 9. Die Pumpdruckleitung 13 führt zum ersten Anschluss 95 der Vorrangschaltung 9. Die zweite Pumpdruckleitung 15 führt zu dem zweiten Anschluss 97 der Vorrangschaltung 9. Der erste Anschluss 95 ist als Port des ersten Ventils 51 der Vorrangschaltung 9 ausgestaltet. Der zweite Anschluss 97 ist als Port des zweiten Ventils 53 der Vorrangschaltung 9 ausgestaltet.

Die zweite Pumpdruckleitung 15 umfasst den Leitungspunkt 49. Am Leitungspunkt 49 fächert sich die Pumpdruckleitung 15 auf. Vom Leitungspunkt 49 geht die By-Pass-Leitung 25 weg und führt auf den Sumpf 109. Die By-Pass-Leitung 25 ist regulär durch ein zweites Flussrichtungsbauteil 79 für ein Fluid gesperrt. Außerdem ist in der Pumpdruckleitung 15 das erste Flussrichtungsbauteil 77 angeordnet. Beide Flussrichtungsbauteile 77, 79 öffnen in Abhängigkeit eines an dem Flussrichtungsbauteil 77, 79 anliegenden Überdrucks. Dieser Überdruck herrscht gegebenenfalls am Leitungspunkt 49. Ein geeignetes Flussrichtungsbauteil 77, 79 an den hierfür vorgesehenen Stellen in der By-Pass-Leitung 25 bzw. vor dem zweiten Anschluss 97 der Vorrangschaltung 9 ist ein Rückschlagventil 85, 87, zu dem eine Feder 135, 137 gehört. Durch die Federkraft der Feder 135, 137 wird der Öffnungspunkt des Rückschlagventils 85, 87 bestimmt. Die Federn 135, 137 sind im Vergleich untereinander unterschiedlich stark eingestellt. Die Feder 135 ist schwächer als die Feder 137. Das bedeutet, bei niedrigeren Drücken des Hydraulikmittels 141 öffnet bereits das erste Flussrichtungsbauteil 77, während das zweite Flussrichtungsbauteil 79, aufgrund seiner Federkraft seiner Feder 137, erst bei im Vergleich zu höheren Drücken aufmacht. Das Hydraulikmedium 141 gelangt, unter anderem in Abhängigkeit der Druckverhältnisse in der ersten Versorgungsleitung 17 entweder in die Versorgungsleitung 17 oder in die zweite Versorgungsleitung 19. Die erste Versorgungsleitung 17 hat ein Hydraulikmittel 141 auf einem höheren Druckniveau als die zweite Versorgungsleitung 19.

Weitere Anschlüsse 99, 101 sind arbeitsseitig bzw. abströmseitig an dem ersten Ventil 51 und an dem zweiten Ventil 53 der ersten Vorrangschaltung 9.

Werden nun die Figuren Figur 2A und 2B gemeinsam betrachtet, so kann der Arbeitsablauf der Vorrangschaltung 9 besser verstanden werden. Die Vorrangschaltung 9 funktioniert im Zusammenspiel mit den beiden Druckerzeugungen, d. h. mit den Pumpen 5, 7 wie folgt, wenn der Einfluss der Flussrichtungsbauteile 77, 79 - aus Vereinfachungsgründen zunächst einmal - außer Betracht gelassen wird.

Die Hydraulikmittelaufbereitung 3 umfasst zwei Rezirkulationsleitungen 29, 31. Die erste Rezirkulationsleitung 29 steht dem Hydraulikmedium 141 offen, wenn ein Druck in der ersten Pumpdruckleitung 13 so hoch ist, dass das erste Freigabeventil 55 anspricht. Das erste Freigabeventil 55 ist ein federvorgespanntes Überdruckventil, das bei zu hohen Drücken einen Abfluss in die zweite Rezirkulation 31 freigibt. Die zweite Rezirkulationsleitung 31 wird für Rückströmungen in Richtung auf den Sumpf 109 für das Hydraulikmittel 141 in Abhängigkeit von einer Kolbenstellung des Hauptdruckventils 65 freigeschaltet. Der Druck des Hydraulikmittels 141, der von der ersten Druckerzeugung geschaffen wird, kann variiert werden. Für die Einstellung des Drucks gibt es eine erste Pumpensteuerleitung 21 und eine zweite Pumpensteuerleitung 23. Die Drücke in diesen beiden Pumpensteuerleitungen 21, 23 können einstellen, welchen Druck die erste Druckerzeugung produzieren soll. Die zweite Druckerzeugung 7 kommt dem Wunsch nach einem anpassbaren Druck auf eine andere Weise nach als die erste Druckerzeugung 5. Der Elektromotor 133 kann mit unterschiedlichen Geschwindigkeiten betrieben werden. In Abhängigkeit der Drehzahl des Elektromotors 133 schafft die an eine Welle des Elektromotors 133 angeschlossene Druckerzeugung 7 an ihrer Hochdruckseite 123 einen bestimmten Druck. Die erste Druckerzeugung 5 folgt unmittelbar der Geschwindigkeit der Verbrennungskraftmaschine 131. Soll der Druck- oder z. B. die Fördermenge variiert werden, so sind andere Maßnahmen bei dem ersten Druckerzeuger 5 zu ergreifen, z. B. eine Steuerung anhand von Druckunterschieden über Steuerleitungen 21, 23. In Abhängigkeit von dem Betrieb und den Einstellungen der Druckerzeugungen 5, 7 herrscht in jeder der Pumpdruckleitungen 13, 15 ein eigener Druck. Nun ist es aber Ziel der Hydraulikmittelaufbereitung 3, einen möglichst konstanten eingestellten Druck in der Zentraldruckleitung 17 an die Verbraucher zur Verfügung zu stellen.

Das erste Ventil 51, das ein 2/2-Ventil ist, gibt den Druck von der ersten Pumpdruckleitung 13 in die Zentraldruckleitung 17, wenn ein Mindestdruck überschritten ist, der sich durch eine Federvorspannung im ersten Ventil 51 einstellen lässt. Nur wenn ein ausreichender Druck in der ersten Pumpdruckleitung 13 vorhanden ist, reicht der aus der ersten Pumpdruckleitung 13 abgeleitete Druck aus, um über die erste Freigabesteuerleitung 33 das erste Ventil 51 der Vorrangschaltung 9 in einen durchgeschalteten Zustand zu versetzen. Aufgrund der vorhandenen Feder in dem ersten Ventil 51 der Vorrangschaltung 9 ist das erste Ventil 51 standardmäßig in einem gesperrten Zustand. Sorgt die Steuerung der ersten Druckerzeugung 5 für eine Maximaldrucküberschreitung, spricht das Freigabeventil 55 an und führt das Hydraulikmittel 141 in Form einer Rezirkulation über die erste Rezirkulationsleitung 29 ab. Dadurch wird sichergestellt, dass Hydraulikmittel 141 von der ersten Druckerzeugung 5 nur innerhalb eines bestimmten Druckbandes in die Versorgungsleitung, d. h. in die Zentraldruckleitung 17 gelangen kann. Als weitere Sicherheitsmaßnahme kann der Druck in der Zentraldruckleitung 17 permanent über einen Drucksensor 103 überwacht werden.

Anders als das erste Ventil 51 der Vorrangschaltung 9 ist das zweite Ventil 53 der Vorrangschaltung 9 aufgrund ihrer Federvorspannung am Kolben im unbestromten bzw. niedrigbestromten Zustand in einer Stellung, durch die Hydraulikmittel 141 zum ersten Leitungsteil 111 abgebbar ist. Übersteigt der Druck in der ersten Pumpdruckleitung 13 einen Schwellendruck, so wird das zweite Ventil 53 umgeschaltet, damit Hydraulikmittel 141 aus dem zweiten Anschluss 97 der Vorrangschaltung 9 in ein zweites Leitungsteil 113 eingeleitet wird. Die Schmier-Kühl-Druckleitung 19 erhält ihre Versorgung aus der zweiten Druckerzeugung 7, sofern der Druck ausreicht, dass erste Flussrichtungsbauteil 77 zu überwinden. Das Umschalten des zweiten Ventils 53 der Vorrangschaltung 9 wird über eine zweite Sperrsteuerleitung 43 bewirkt. Die zweite Sperrsteuerleitung 43 ist an die Zentraldruckleitung 17 angebunden. Über die Größe der Feder in dem zweiten Ventil 53 der Vorrangschaltung und damit über die Federenergie bestimmt sich, bei welchem Druck ein Umschaltvorgang des zweiten Ventils 53 einsetzt. Die Geschwindigkeit des Umschaltvorgangs wird u. a. durch die Geschwindigkeit des Druckaufbaus am ersten Leitungsteil 111 bzw. an einer Stelle der Zentraldruckversorgung 17 bestimmt.

Weil trotz der Regelungsmöglichkeiten an den und im Anschluss an die Druckerzeugungen 5, 7 der Druck in der Versorgungsleitung der Zentraldruckleitung variieren kann, gibt es ein Hauptdruckventil 65, das als Druckwaage 67 eingesetzt, bestimmt, ob ein Druckabbau durch eine Einleitung in die Rezirkulationsleitung 31 stattzufinden hat. In einer Schaltstellung des Hauptdruckventils 65 findet ein Abbau eines Drucks in Richtung auf eine Ansaugseite 117 der ersten Druckerzeugung 5 statt. Das Hauptdruckventil 5 ist ein proportionales Druckregelventil, bei dem die Durchgangsports in Abhängigkeit von Druckverhältnissen über die erste Steuerleitung 91 und die zweite Steuerleitung 93 auf- und zugesteuert werden. Hierzu ist die Druckwaage 67 über die beiden Steuerleitungen 91, 93 beidseitig des Kolbens eingespannt. Welcher Druck in der ersten Steuerleitung 91 zu der Druckwaage 67 herrscht bzw. sich einstellt, wird durch das erste Richtungsflussventil 61 durch eine elektronische Ansteuerung eingestellt.

Mittels eines oder sogar beider Freigabeventilen 57, 59 (zweites Freigabeventil 57, drittes Freigabeventil 59) wird der Hydraulikfluss in der Schaltung 1 für die zweite Versorgungsleitung 19 druckmäßig auf das eingestellte bzw. freigegebene Druckband eingestellt. Dadurch wird der Druck in der ersten Versorgungsleitung 17, der Zentraldruckleitung 17 ebenfalls beeinflusst. Die Freigabeventile 57, 59 sind über jeweils zwei Steuerleitungen 37, 45 bzw. 39, 47 beidseitig hydraulisch eingespannte und bestätigte Schieberventile, die zwei Zustände in zu den Druckverhältnissen proportionalem Öffnungsgrad (proportionales Druckregelventil) einnehmen können. Das zweite Freigabeventil 57 reduziert den Druck, über die Steuerleitungen 37, 45 geregelt, auf das Druckniveau der zweiten Versorgungsleitung 19. Ereignet sich ein Staudruck in der zweiten Versorgungsleitung 19 so kann das dritte Freigabeventil 59 Richtung Sumpf 109 einen Druckabbau vornehmen. Dazu ist eine Abflussseite des dritten Freigabeventils 59 mit der Rezirkulationsleitung 31 verbunden.

Eine weitere, zweite Vorrangschaltung 11 ist an der Zentraldruckleitung 17 angeschlossen. Mit einem zweiten Richtungsflussventil 63 kann ein Kolben in dem Hauptventil der Vorrangschaltung 11 in seinen Lagen und damit Zuständen verändert werden. Dadurch wird zustandsabhängig sowohl eine Leitung zum Schmierbereich 2020 als auch eine Leitung zur ersten hydraulischen Strecke 2052 freigegeben bzw. gesperrt. Die erste hydraulische Strecke 2052 ist jene Strecke, die für die Versorgung und Betätigung der Doppelkupplungsstellglieder zuständig ist.

Das in seinem hydraulischen Druck eingestellte Hydraulikmittel 141 kann, sofern es nicht über die zweite Vorrangschaltung 11 abgezweigt für den Schmierbereich 2020 benötigt wird, an den Kühlbereich weitergeleitet werden. Überschüssiges Hydraulikmittel 141, das nicht über, insbesondere eine gedrosselte, Leitung in den Schmierbereich 2020 geleitet wird, kann so zum Kühlen der Kupplungen (vgl. Figur 1, erste Kupplung 2507, zweite Kupplung 2509), insbesondere zusätzlich, genutzt werden. Für die Kühlung der Kupplungen 2507, 2509 wird das Hydraulikmittel 141 in den Kühlbereich 2018 eingeleitet.

Die erste Vorrangschaltung 9 bestimmt mithilfe ihrer Ventile 51, 53, ob die erste Druckerzeugung 5 oder die zweite Druckerzeugung 7 Hydraulikmittel 141 in die Zentraldruckleitung 17 liefern darf. Hierzu ist eines der Ventile 51, 53 ein 2/2-Ventil. Eines der Ventile 51, 53 ist ein 3/2-Ventil. Hydraulikmittel 141, das nicht in die Zentraldruckleitung 17 geliefert werden kann, wird über das 3/2-Ventil in die zweite Versorgungsleitung 19 eingeleitet. Eine endgültige Freigabe zur Durchleitung gibt das erste Flussrichtungsbauteil 77. Die Vorrangschaltung 9 bestimmt anhand ihres eingenommen Zustands, ob generell die Durchleitung freigegeben ist. Endgültig freigegeben wird die Verbindung von der Hochdruckseite 123 der Druckerzeugung 7 durch das Flussrichtungsbauteil 77. Bildet sich an dem Leitungspunkt 49 ein Staudruck oder ein Überdruck, so gibt das zweite Flussrichtungsbauteil 79 eine Leitung, nämlich die By-Pass-Leitung 25 eine alternative Verbindung für die Nutzung des Hydraulikmittels 141 frei.

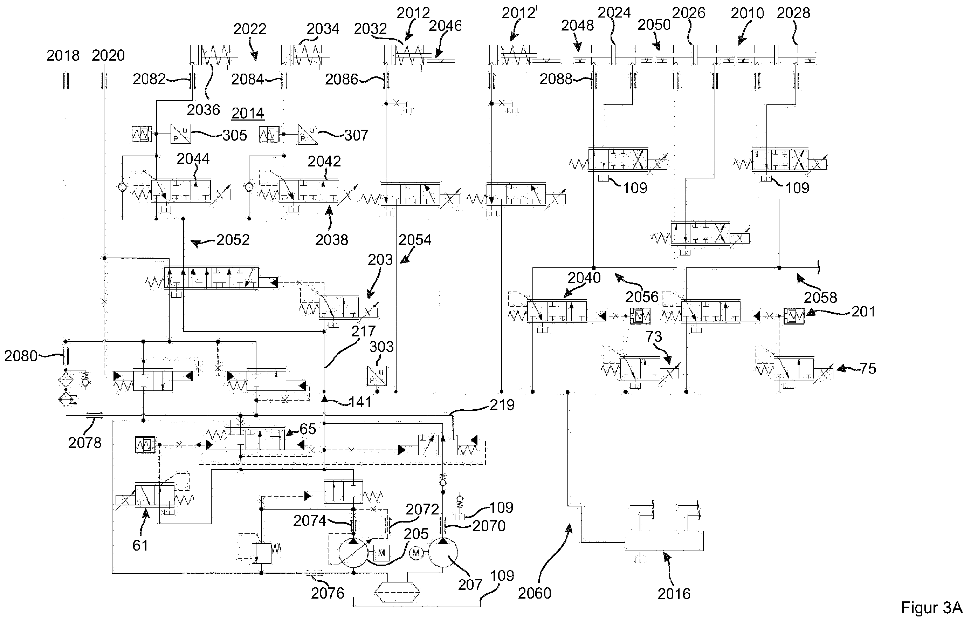

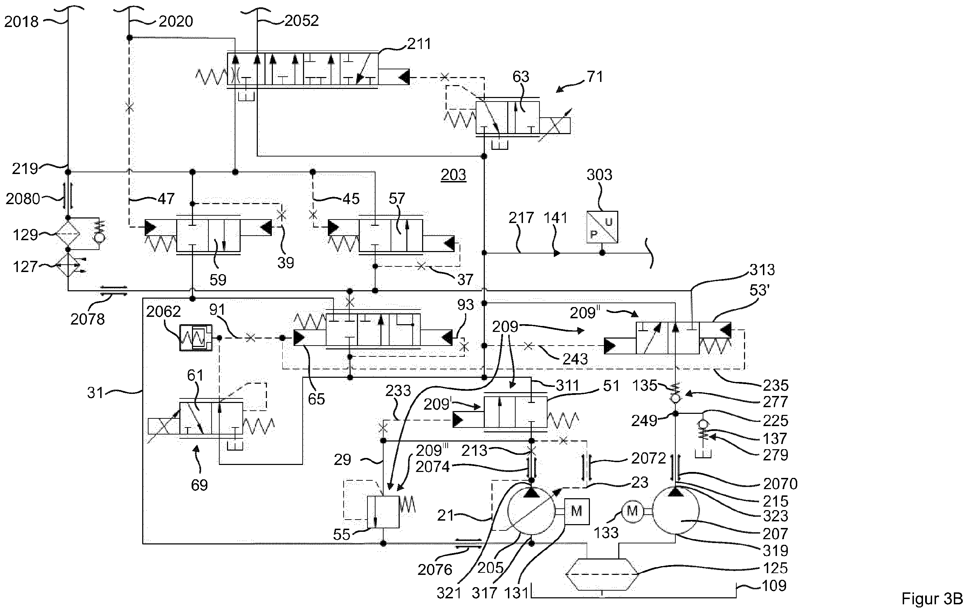

In den Figuren 3A und 3B wird eine weitere Ausführungsform einer Hydraulikmittelaufbereitung 203 als Teil einer hydraulischen Schaltung 201 gezeigt.

In den Figuren 3A, 4A, 4B, 5A, 6A, 7A, 8A, 9A, 10A ist anhand der Steckverbindungen 2070, 2072, 2074, 2076, 2078, 2080, 2082, 2084, 2086, 2088 zu erkennen, dass Peripheriebauteile, wie z. B. die Gangstellerschieberkolben 2024, 2026, 2028, jenseits der die Ventile tragenden Schieberplatte angesteckt werden.

Die Ausführungsform gem. der Figur 3B gestaltet sich wie folgt.

Die Hydraulikmittelaufbereitung 203 umfasst zwei Vorrangschaltungen 209, 211. Die erste Vorrangschaltung 209 setzt sich aus mehreren einzelnen Teilen 209^{I}, 209^{II}, 209^{III} zusammen. Die einzelnen Teile 209^{I}, 209^{II}, 209^{III} der ersten Vorrangschaltung 209 werden durch Ventile 51, 53', 55 gebildet. Zwischen den beiden Druckerzeugungen 205, 207 und der Zentraldruckleitung 217 ist die erste Vorrangschaltung 209 angeordnet. Zur Weiterführung des Hydraulikmittels 141 von der Zentraldruckleitung 217 zur ersten hydraulischen Strecke 2052 gibt es eine zweite Vorrangschaltung 211. Die zweite Vorrangschaltung 211 ist eine ein zweites Pilotventil 71 umfassende Schaltung. Mittels dem zweiten Pilotventil 71 bzw. dem zweiten Richtungsflussventil 63 kann die Schaltstellung der zweiten Vorrangschaltung 211 in vier verschiedenen Positionen eingestellt werden. Hierdurch wird der Fluss des Hydraulikmittels 141 zu dem Schmierbereich 2020 und zu der ersten hydraulischen Strecke 2052 eingestellt bzw. beeinflusst.

Überflüssiges Hydraulikmittel 141 wird in dem Sumpf 109 vorgehalten. Überflüssiges Hydraulikmittel 141 kann aus der Hydraulikmittelaufbereitung 203 über die Rezirkulationsleitungen 29, 31 zum Sumpf 109 abgeleitet werden. Aus dem Sumpf 109 wird das Hydraulikmittel 141 durch die Druckerzeugung 205, 207 angesogen. Für das Zurückhalten von Schmutz, der sich im Hydraulikmittel 141 befindet, ist ein Ansaugfilter 125 vor den Ansaugseiten 317, 319 der Druckerzeugungen 205, 207 vorgeschaltet. Die Druckerzeugung 205 bezieht ihre Förderleistung von dem Verbrennungsmotor 131. Die Druckerzeugung 207 bezieht ihre Förderleistung von dem Elektromotor 133. Durch die Druckerzeugungen 205, 207 werden die Hochdruckseiten 321, 323 mit bedrucktem Hydraulikmittel 141 versorgt. Die als externe Komponenten angeordneten Druckerzeugungen 205, 207 sind über Steckverbinder 2070, 2072, 2074, 2076 mit den weiterführenden Leitungen wie der ersten Druckleitung 213, der zweiten Druckleitung 215 und der Rezirkulationsleitung 31 verbunden.

Über das erste Ventil 51 der ersten Vorrangschaltung 9 lässt sich Hydraulikmittel 141 in den ersten Leitungsteil 311 hineinfördern. Mit Hilfe der Pumpensteuerleitungen 21, 23 wird der Betriebspunkt der Druckerzeugung 205 hydraulisch eingestellt. Der Druck des Hydraulikmittels 141 in der ersten Druckleitung 213 wird gleichermaßen über die erste Freigabesteuerleitung 233 zur Betätigung des ersten Ventils 51 der ersten Vorrangschaltung 9 weitergeleitet. Reicht der Druck in der ersten Druckleitung 213 aus, öffnet das erste Ventil 51 der ersten Vorrangschaltung 9 durch die Bedruckung über die erste Freigabesteuerleitung 233. Steigt der Druck in der ersten Druckleitung 213 jedoch über eine akzeptable Grenze hinaus, so öffnet das erste Freigabeventil 55 und leitet den Druck von dem ersten Druckerzeuger 205 in Richtung auf die zweite Rezirkulationsleitung 31 ab. Auch das zweite Ventil 53^{I} der ersten Vorrangschaltung 9 ist ein über Steuerleitungen 235, 243 betätigtes Ventil. Das zweite Ventil 53^{I} der ersten Vorrangschaltung 9 liefert in Abhängigkeit des Schaltzustandes des zweiten Ventils 53^{I} das Hydraulikmittel 141 in den zweiten Leitungsteil 313. In der zweiten Pumpdruckleitung 215 gibt es einen Leitungspunkt 249, an den sich Flussrichtungsbauteile 277, 279 gleichgerichtet angeschlossen treffen. Das zweite Flussrichtungsbauteil 279 ist Teil der By-Pass-Leitung 225. Das erste Flussrichtungsbauteil 277 ist dem zweiten Ventil 53^{I} der ersten Vorrangschaltung 9 vorgeschaltet. Federn 135, 137 bestimmen das Ansprech- und damit das Öffnungsverhalten des ersten Flussrichtungsbauteils 277 und des zweiten Flussrichtungsbauteils 279.

Obwohl die Druckerzeugung 205, 207 bereits druckgeregelt sind, umfasst die Hydraulikmittelaufbereitung 203 eine Stufe zur Druckregelung. Die Stufe zur Druckregelung umfasst ein Hauptdruckventil 65, das zwischen einer ersten Steuerleitung 91 und einer zweiten Steuerleitung 93 hydraulisch eingespannt ist. Zur Stabilisierung des Drucks der ersten Steuerleitung 91 ist ein erster Speicher 2062 Teil der Steuerleitung 91. Die erste Steuerleitung 91 des Hauptdruckventils 65 wird über ein erstes Flussrichtungsventil 61, genauer über ein erstes Pilotventil 69 hydraulisch beaufschlagt.

Über zwei Freigabeventile 57, 59 lässt sich der Druck in der zweiten Versorgungsleitung 219 beeinflussen. Zur genauen Druckeinstellung ist das dritte Freigabeventil 59 zwischen der Freigabesteuerleitung 39 und der Sperrsteuerleitung 47 eingespannt. Das zweite Freigabeventil 57 ist zwischen der Freigabesteuerleitung 37 und der Sperrsteuerleitung 45 eingespannt. Ein eingestellter Druck auf der zweiten Versorgungsleitung 219 herrscht somit auch in der Zuleitung in den Kühlbereich 2018. Zur besseren Kühlung wird Kühlmittel bzw. Hydraulikmittel 141 über ein Kühler 127 und einen Kühlerfilter 129 geführt. Sowohl Kühler 127 als auch Kühlerfilter 129 sind extern zu der Steuerplatte mit Ventilen angeordnete Komponenten, die über Steckverbinder 2078, 2080 an die Steuerplatte angeschlossen werden können.

Die Einhaltung eines Druckniveaus wird elektronisch mit Hilfe des Drucksensors 303 überwacht. Der Drucksensor 303 überwacht den Druck des Hydraulikmittels 141 in der Zentraldruckleitung 217 und prüft zusammen mit einem Steuergerät den Druck auf Einhaltung innerhalb eines akzeptablen Druckbandes.

Wie durch einen Vergleich der Figuren 4B, 5B, 6B, 7B, 8B, 9B, 10B leicht zu erkennen ist, sind mehrere hydraulische Stufen bzw. Abschnitte der Schaltung 401, 601, 801, 1001, 1201, 1401, 1601 (siehe Figuren 4A, 5A, 6A, 7A, 8A, 9A, 10A) in allen Ausführungsbeispielen ähnlich realisiert. Für die Zuleitung des Hydraulikmittels 141 über die zweite Vorrangschaltung 411, 611, 811, 1011, 1211, 1411, 1611 gibt es das zweite Pilotventil 71. Der hydraulische Druck zur Betätigung des Ventils der zweiten Vorrangschaltung 411, 611, 811, 1011, 1211, 1411, 1611, 1811 gelangt über das zweite Richtungsflussventil 63 an eine Steuerseite eines Kolbens der zweiten Vorrangschaltung 411, 611, 811, 1011, 1211, 1411, 1611.

Für die Druckregelung in der Zentraldruckleitung 417, 617, 817, 1017, 1217, 1417, 1617 gibt es die hydraulische Schaltung aus Hauptdruckventil 65, dem Speicher 2062 und dem ersten Pilotventil 69, das ebenfalls als Richtungsflussventil 61 betrieben wird. Das Hauptdruckventil 65 wählt seine Kolbenposition aufgrund der Drücke in einer ersten Steuerleitung 91 und einer zweiten Steuerleitung 93.

Zur Kühlung des Hydraulikmittels vor Zuleitung zum Kühlbereich 2018 wird Hydraulikmittel 141 über einen Kühler 127 und einen Kühlerfilter 129 geführt. Kühler 127 und Kühlerfilter 129 sind über Steckverbinder 2078, 2080 an die Versorgungsleitung 419, 619, 819, 1019, 1219, 1419, 1619 angeschlossene externe Komponenten.

Der Druck in der zweiten Versorgungsleitung 419, 619, 819, 1019, 1219, 1419, 1619 ergibt sich aufgrund von Kolbenstellungen in einem zweiten Freigabeventil 57 und einen dritten Freigabeventil 59. Das zweite Freigabeventil 57 und das dritte Freigabeventil 59 sind über Steuerleitungen 37, 39, 45, 47 betätigte, hydraulisch ansteuerbare Ventile. Das zweite Freigabeventil 57 und das dritte Freigabeventil 59 sind jeweils 2/2-Ventile. Das dritte Freigabeventil 59 stellt einen Druckabbau in die Rezirkulationsleitung 31 über eine Öffnungsweite eines Ports ein. Das zweite Freigabeventil 57 lässt einen Druck von der ersten Versorgungsleitung, der Zentraldruckleitung 417, 617, 817, 1017, 1217, 1417, 1617 an die zweite Versorgungsleitung 419, 619, 819, 1019, 1219, 1419, 1619 durch.

Um die Schwebteile im Hydraulikmittel 141, das von dem Sumpf 109 über den Ansaugfilter 125 angesaugt wird, zurückzuhalten, dient der Ansaugfilter 125 als Schwebteilrückhaltung.

Baut die Druckerzeugung 405, 605, 805, 1005, 1205, 1405, 1605 einen zu hohen Druck auf, spricht das erste Freigabeventil 55 in der ersten Rezirkulationsleitung 29 an.

Das Ausführungsbeispiel nach Figur 4B zeigt eine Hydraulikmittelaufbereitung 403 wiederum mit zwei Druckerzeugungen 405, 407. Die By-Pass-Leitung 425 gem. der Figur 4B im Vergleich mit der By-Pass-Leitung 225 gem. Figur 3B ist über ein zweites Flussrichtungsbauteil 479 geführt an den zweiten Leitungsteil 513 angebunden. Das zweite Leitungsteil 513 führt Hydraulikmittel 141 in die zweite Versorgungsleitung 419. Das erste Flussrichtungsbauteil 477 und das zweite Flussrichtungsbauteil 479 sind an dem Leitungspunkt 449 jeweils mit ihrer Kugelsitzseite angeschlossen, d. h. bei (ausreichender) Druckerhöhung im Leitungspunkt 449 reagieren sie öffnend. Die zweite Pumpdruckleitung 415 zweigt somit an den Leitungspunkt 449 in zwei Richtungen ab. Die zweite Druckleitung 415 fächert sich jenseits des Leitungspunktes 449 auf. Die Flussrichtungsbauteile 477, 479 sind die Übergangsbauteile in die jeweiligen Leitungsabschnitte, die in unterschiedliche Richtungen führen. Mit Hilfe der Federn 535, 537 wird der Schaltpunkt der Flussrichtungsbauteile 477, 479 eingestellt. In welchem Zustand das zweite Ventil 53 der Vorrangschaltung 409 steht, hängt von dem Druck über die zweite Sperrsteuerleitung 443 ab. Die zweite Sperrsteuerleitung 443 muss gegen die Kolbenfeder in dem zweiten Ventil 53 der ersten Vorrangschaltung 409 anarbeiten. Die erste Pumpdruckleitung 413 zusammen mit dem ersten Ventil 51 der ersten Vorrangschaltung 409 ähnelt der ersten Pumpdruckleitung 213 nach Figur 3B.

Der Druck in der ersten Versorgungsleitung, der Zentraldruckleitung 417 kann durch den Sensor 503 gemessen werden.

Jenseits hinten den Teilen 409^{I}, 40^{II}, 409^{III} der ersten Vorrangschaltung 409 sind die Leitungsteile 511, 513 an die Vorrangschaltung angeschlossen. Der Druck, der an das eine Teil 409^{III} der Vorrangschaltung 409 im geschlossenen Zustand des Teils 409^{III} herangeführt ist, ist zugleich der Druck, der in der Freigabesteuerleitung 433 des ersten Ventils 53 herrscht. Der Druck entspricht (im Wesentlichen) dem Druck an der Hochdruckseite 521 der ersten Druckerzeugung 405. Der Druck an der Ansaugseite 517 der ersten Druckerzeugung 405 entspricht (im Wesentlichen) dem Druck an der Ansaugseite 519 der zweiten Druckerzeugung 407. Der Druck an der Hochdruckseite 523 der zweiten Druckerzeugung 407 weicht zumindest phasenweise von dem Druck ab, der an der ersten Hochdruckseite 521 zur Verfügung gestellt wird. Die erste Vorrangschaltung 409 ist zur Steuerung und Weiterleitung der Drücke von den Hochdruckseiten 521, 523 der Druckerzeugungen 405, 407 ausgelegt.

Ist die Hydraulikmittelaufbereitung 403 entsprechend der Darstellung nach Figur 4B realisiert, können Druckspitzen, die von der zweiten Druckerzeugung 407 erzeugt werden können, vorteilhafterweise über das zweite Flussrichtungsbauteil 479 in die zweite Versorgungsleitung 419 abgeleitet werden. Das über Druckspitzen weitergeleitete Hydraulikmittel 141 steht für Schmieraufgaben und/oder Kühlungsaufgaben über die zweite Versorgungsleitung 419 zur Verfügung.

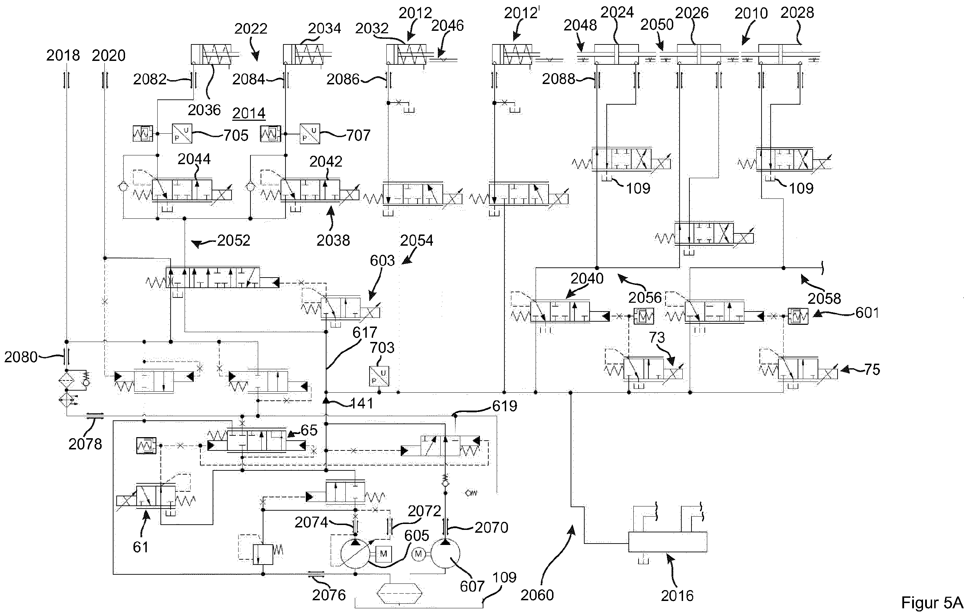

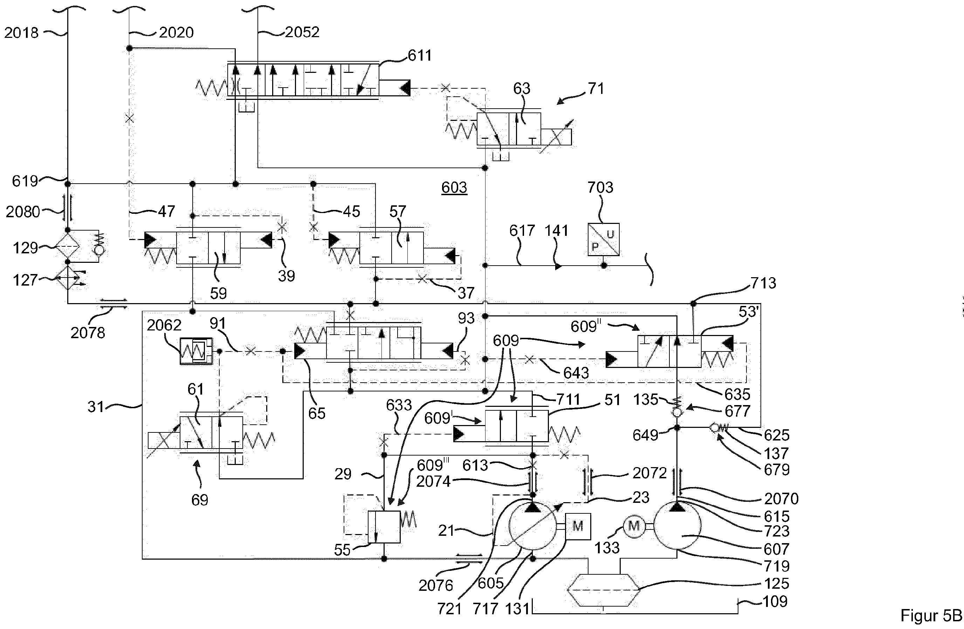

Figur 5B zeigt eine Ausführungsform einer Hydraulikmittelaufbereitung 603, die mit einem zweiten Ventil 53^{I} der ersten Vorrangschaltung 609 ausgestattet ist. Das zweite Ventil 53', das ein 3/2-, beidseitig hydraulisch eingespanntes, federvorgespanntes Kolbenschieberventil ist, findet eine Stellung seines Kolbens durch die Druckverhältnisse, die sich zwischen zweiter Sperrsteuerleitung 643 und zweiter Freigabesteuerleitung 635 ergeben. Das zweite Flussrichtungsbauteil 679 führt unter Nutzung der By-Pass-Leitung 625 auf einen zweiten Leitungsabschnitt 713, der Teil der zweiten Versorgungsleitung 619 ist. Das zweite Flussrichtungsbauteil 679 ist über den Leitungspunkt 649 mit dem ersten Flussrichtungsbauteil 677 verbunden. Das erste Flussrichtungsbauteil 677 führt auf ein zweites Teil 609" der ersten Vorrangschaltung 609. Das zweite Teil 609" ist ausgangsseitig bzw. an seinem Arbeitsport mit einem Anschluss an dem Leitungsabschnitt 713 angeschlossen. Ein weiteres Teil 609^{I} der Vorrangschaltung 609 ist an den ersten Leitungsteil 711 angeschlossen. Eine erste Freigabesteuerleitung 633 liegt zwischen dem ersten Teil 609^{I} und dem dritten Teil 609^{III}. Ein Sinn der Vorrangschaltung 609 ist es, einen möglichst konstanten Druck in der Zentraldruckleitung 617 anzubieten, was über den Drucksensor 703 überwacht werden kann.

Wie in Figur 5B zu sehen ist, sind die Druckerzeugungen 605, 607 zwischen einer ersten Ansaugseite 717 bzw. einer zweiten Ansaugseite 719 und einer ersten Hochdruckseite 721 bzw. einer zweiten Hochdruckseite 723 angeordnet. Der Druck an der Hochdruckseite 721, 723 kann in die erste Druckleitung 613 und in die zweite Druckleitung 615 eingeleitet werden.

Neben der ersten Vorrangschaltung 609 hat die Hydraulikmittelaufbereitung 603 eine zweite Vorrangschaltung 611, die als Mehrstellungsproportionalwegeventil einen hydraulischen Fluss in eine erste hydraulische Strecke 2052 zu Kupplungsbetätigern steuern kann.

In der Figur 6B ist eine Hydraulikmittelaufbereitung 803 gezeigt, die ein erstes Flussrichtungsbauteil 877 und ein drittes Flussrichtungsbauteil 881 aufweist. Das dritte Flussrichtungsbauteil 881 kann eine Verbindung von der zweiten Pumpdruckleitung 815 in die Zentraldruckleitung 817 herstellen, wenn das Druckgefälle über das dritte Flussrichtungsbauteil 881 ausreichend hoch ist. Übersteigt der Druck in der zweiten Pumpdruckleitung 815 den Förderdruck der ersten Druckerzeugung 805 an der Hochdruckseite 921, baut sich der Druck in der zweiten Pumpdruckleitung 815 in Richtung auf die Zentraldruckleitung 817 ab. Das zweite Ventil 53 der Vorrangschaltung 809 ist ein einseitig über die zweite Sperrsteuerleitung 843 hydraulisch eingespanntes Schieberventil, dessen Vorzugsposition, in der eine Verbindung über das zweite Ventil 53 zu der Zentraldruckleitung 817 hergestellt ist, über eine Feder bewirkt wird. Standardmäßig, d. h. im unbedruckten Zustand ist das zweite Ventil 53, es kann auch gesagt werden, das zweite Teil 809" der Vorrangschaltung 809 in einem Zustand, sodass eine Versorgung der zweiten Leitungsteils 913 nicht möglich ist. Der erste Teil 809^{I} der Vorrangschaltung 809, es kann auch gesagt werden, das erste Ventil 51 ist standardmäßig in einem Zustand, dass keine Verbindung der Hochdruckseite 921 über die erste Druckleitung 813 zu dem ersten Leitungsteil 911 gegeben ist. Den Ansaugseiten 917, 919 der Druckerzeugungen 805, 807 ist ein Ansaugfilter 125 vorgeschaltet. Über die Hochdruckseite 923 der zweiten Druckerzeugung 807 wird der Leitungspunkt 849 zunächst versorgt, um von dort über die Flussrichtungsbauteile 877, 881 in die zweite By-Pass-Leitung 827 oder in das zweite Ventil 53 das hydraulische Mittel 141 einzuleiten. Über das dritte Flussrichtungsbauteil 881 wird im Falle, dass dieses im durchgeschalteten Zustand vorliegt, das Hydraulikmittel in den dritten Leitungsteil 915 eingebracht.

Überdrücke können über das dritte Teil 809^{III}, es kann auch gesagt werden, über das erste Freigabeventil 55 in ableitender Weise Richtung Sumpf 109 abgebaut werden. Solange kein Überdruck anliegt, dient der Druck vor dem Freigabeventil 55 für die Ansteuerung des ersten Teils 809^{I} über die Steuerleitung 833.

Die einwandfreie Funktion der Hydraulikmittelaufbereitung 803 kann über Drucksensoren wie dem Drucksensor 903 in der Zentraldruckleitung 817 überwacht werden.

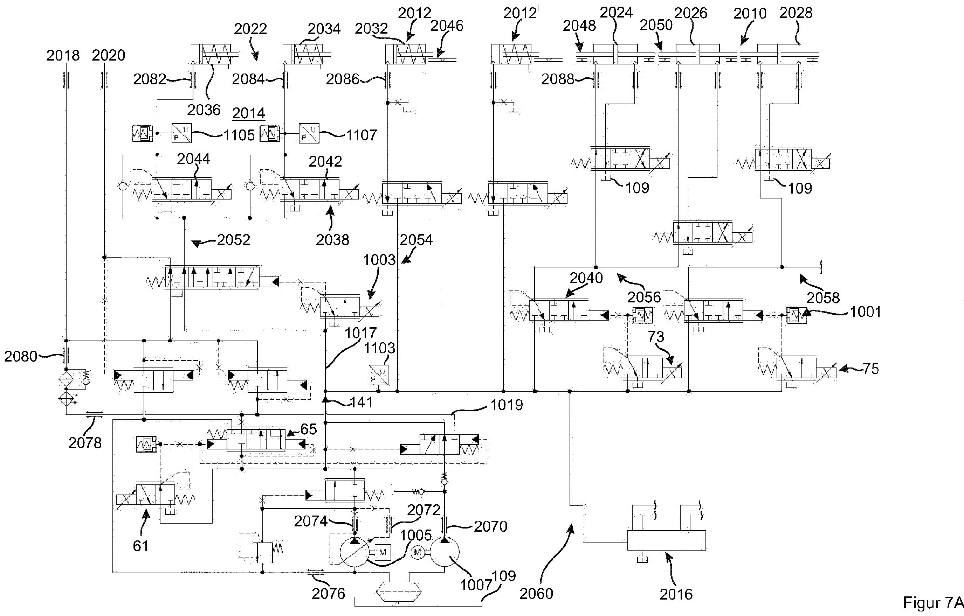

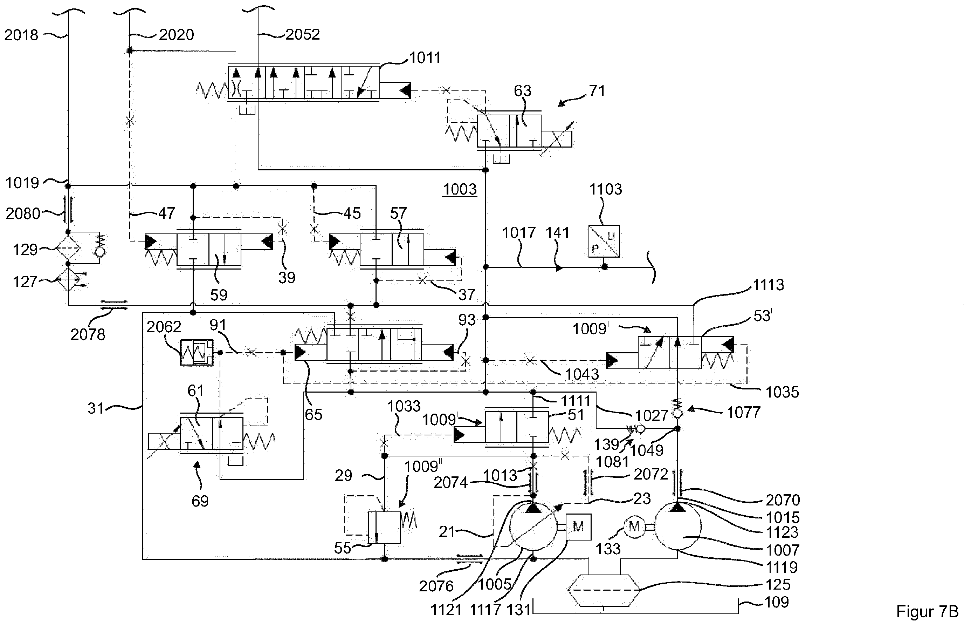

Auch die Figur 7B zeigt eine Hydraulikmittelaufbereitung 1003, die mit einem dritten Flussrichtungsbauteil 1081 eine brückende Verbindung zwischen der zweiten Pumpdruckleitung 1015 und der ersten Pumpdruckleitung 1013 (falls das erste Teil 1009^{I} erstes Ventil 51 durchgeschaltet ist) bzw. der Zentraldruckleitung 1017 herstellen kann. Das erste Flussrichtungsbauteil 1077 schaltet druckabhängig die zweite Pumpdruckleitung 1015 zu dem zweiten Ventil 53^{I} durch. Die beiden Flussrichtungsbauteile erstes Flussrichtungsbauteil 1077 und drittes Flussrichtungsbauteil 1081 sprechen vorzugsweise bei unterschiedlichen Schwellen eines Drucks in der zweiten Pumpdruckleitung 1015 an. Der Drucksensor 1103 soll möglichst einen konstanten Druck in der Zentraldruckleitung 1017 messen.

Die Feder in dem zweiten Teil 1009^{II} zweites Ventil 53', das eines der Teile 1009^{I}, 1009^{II}, 1009^{III}, genauer der den Leitungsteilen 1111, 1113 vorgeschalteten Ventile ist, wird von der zweiten Freigabesteuerleitung 1035 in gleicher Kraftrichtung unterstützt. Dem wirkt die zweite Sperrsteuerleitung 1043 entgegen. Gleichartig wirkt auf das erste Ventil 51 die erste Freigabesteuerleitung 1033 ein.

Wie in Figur 7B zu sehen ist, geht von dem Leitungspunkt 1049, der Teil der zweiten Druckleitung 1015 ist, die zweite By-Pass-Leitung 1027 ab. Die zweite Druckleitung 1015 startet an der Hochdruckseite 1123 der zweiten Druckerzeugung 1007. Das Hydraulikmittel 141 wird von der ersten Druckerzeugung 1005 und von der zweiten Druckerzeugung 1007 von der Ansaugseite 1117 und von der Ansaugseite 1119 angesaugt.

In der Hydraulikmittelaufbereitung 1003 gibt es eine zweite Hochdruckseite 1121 an dem ersten Druckerzeuger 1005.

Druckspitzen, Überdrücke und nicht regulär weiter leitbare Hydraulikströme des Hydraulikmittels 141 aus der zweiten Druckleitung 1015, z. B. weil das zweite Ventil 53^{I} in einem Sperrzustand verharrt, können über das dritte Flussrichtungsbauteil 1081 in die zweite By-Pass-Leitung 1027 umgeleitet werden, um so in die Zentraldruckleitung 1017 zu gelangen.

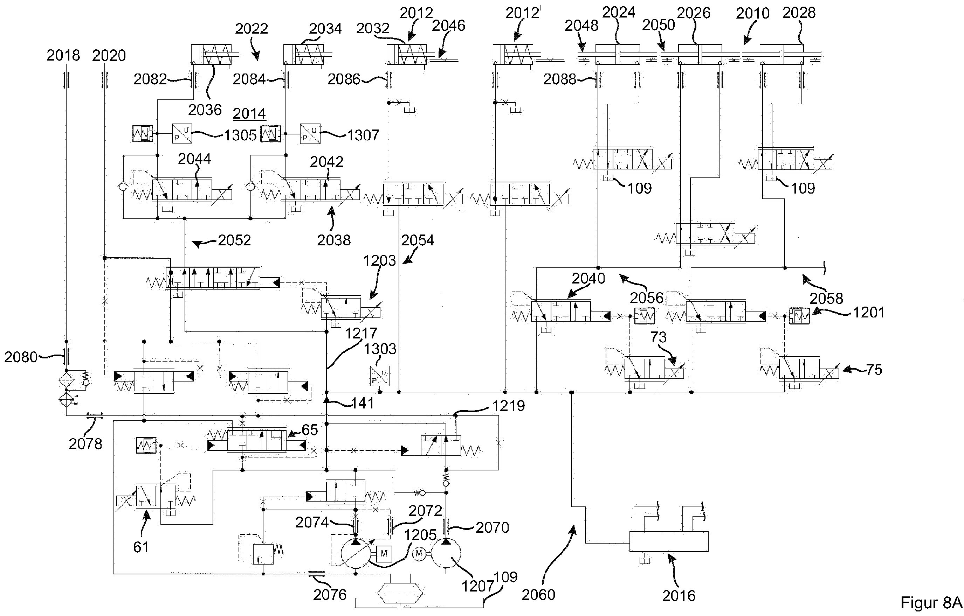

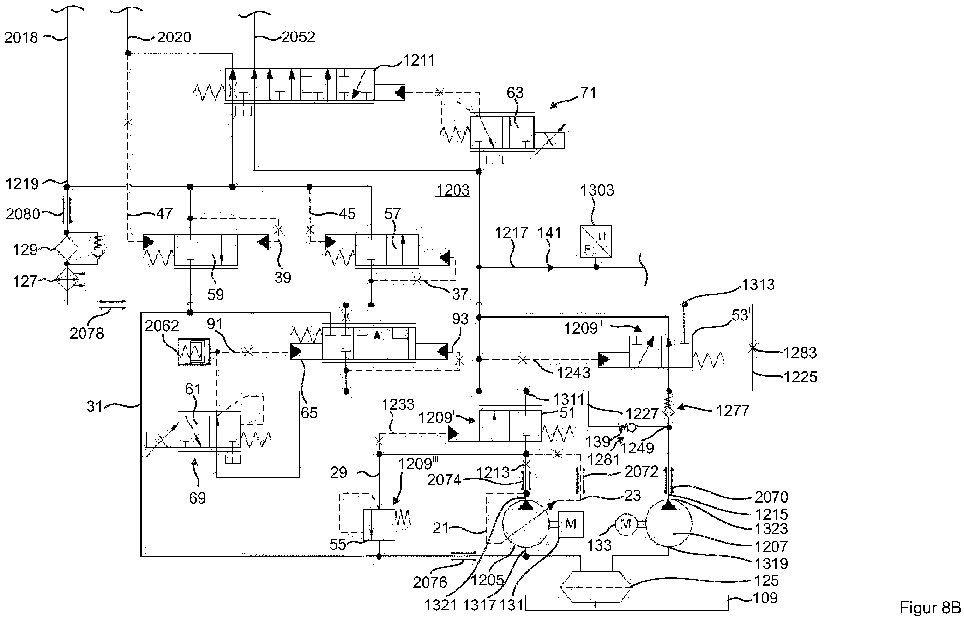

In Figur 8B ist eine erste By-Pass-Leitung 1225 gezeigt, die stromabwärts des ersten Flussrichtungsbauteils 1277 angeschlossen, mit einer Blende 1283 ausgestattet eine Verbindung zu der zweiten Versorgungsleitung 1219 über das zweite Leitungsteil 1313 herstellen kann. Besondere Druckspritzen, die von der zweiten Druckerzeugung 1207 in die zweite Pumpdruckleitung 1215 über die zweite Hochdruckseite 1323 eingebracht werden können, können je nach Druckhöhe sowohl über das erste Flussrichtungsbauteil 1277 als auch über das dritte Flussrichtungsbauteil 1281 abgebaut werden. Dazu wird die zweite Pumpdruckleitung 1215 an dem Leitungspunkt 1249 aufgefächert. Ein Zweig führt in die zweite By-Pass-Leitung 1227.

Das zweite Teil 1209" zweites Ventil 53 in der Hydraulikmittelaufbereitung 1203 nach Figur 8B ist ein Wegeventil mit einem zwischen einer Feder und einer hydraulischen Einspannung durch die Steuerleitung 1243 stehenden Kolben. Das erste Teil 1209^{I} erstes Ventil 51 kann eine Verbindung zu dem ersten Leitungsteil 1311 herstellen, auf das die zweite By-Pass-Leitung 1227 führt.

Die erste Druckerzeugung 1205 fördert von der Ansaugseite 1317 auf die Hochdruckseite 1321 und damit in die erste Druckleitung 1213, aus der die erste Steuerleitung 1233 des Ventils 51 einen Steuerdruck bezieht. Die zweite Druckerzeugung 1207 bezieht ihr Hydraulikmittel 141 von der zweiten Ansaugseite 1319. Als Schutzmaßnahme kann ein Druckregelventil als drittes Teil 1209^{III} der Vorrangschaltung einen Ablass in Richtung auf den Sumpf 109 freigeben.

Der Drucksensor 1303 in der Zentraldruckleitung 1217 dient als Messgröße für eine elektronische Regelschleife zur Einstellung der einzelnen Drücke wie dem Druck in der Zentraldruckleitung 1217.

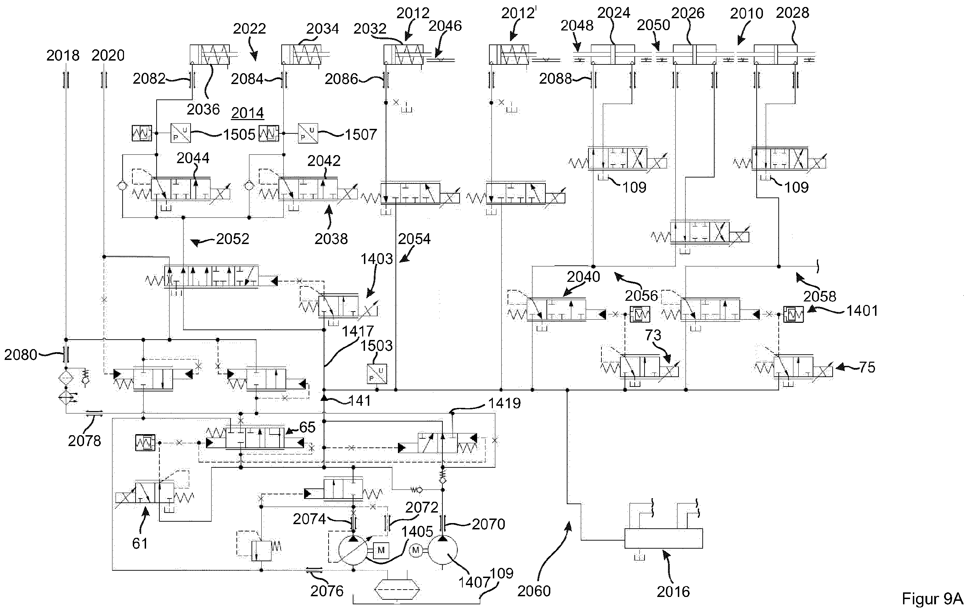

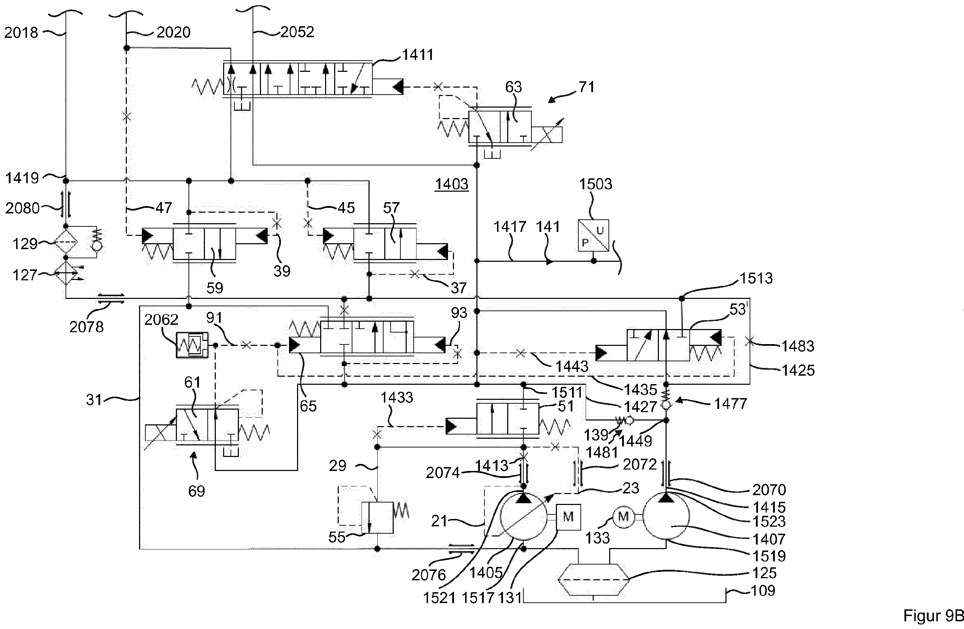

In Figur 9B ist ein zweites Ventil 53^{I} gezeigt, das mit zwei Steuerleitungen 1435, 1443 beidseitig des Kolbens hydraulisch eingespannt ist. Im Übrigen ähnelt die Hydraulikmittelaufbereitung 1403 in weiten Teilen der Hydraulikmittelaufbereitung 1203 (siehe Figur 8B), sodass auf die dort stehenden Ausführungen verwiesen werden darf (ein Leser möge die zu Figur 8B angegebenen Bezugszeichen um 200 erhöhen, um einen vergleichbaren Text zu erhalten). Auch in der Hydraulikmittelaufbereitung 1403 nach Figur 9B ist eine Blende 1483 in dem zweiten Leitungsteil 1513 als flussregulierendes Teil eingebaut. Die Blende 1483 kann nur angeströmt werden, wenn das erste Flussrichtungsbauteil 1477 auf Durchleitung geschaltet ist. Die Hydraulikmittelaufbereitung 1203 nach Figur 9B hat zwei By-Pass-Leitungen 1425, 1427. In der zweiten By-Pass-Leitung 1427 ist das dritte Flussrichtungsbauteil 1481 eingebaut. Beide By-Pass-Leitungen 1425, 1427 gehen von dem Leitungspunkt 1449 ab. Die Druckerzeugungen 1405, 1409 fördern ähnlich zu den vorherigen Ausführungsbeispielen von Ansaugseiten 1517, 1519 Hydraulikmittel 141 zu den Hochdruckseiten 1521, 1523. Jede Druckerzeugung 1405, 1407 hat ihre eigene Pumpdruckleitung 1413, 1415. Der von dem Drucksensor 1503 gemessene Druck in der Zentraldruckleitung 1417 ist niedriger als Spitzendrücke, die die Druckerzeugungen 1405, 1407 zumindest phasenweise erzeugen können. Über Steuerleitungen wie die erste Freigabesteuerleitung 1433 werden Ventile wie das erste Ventil 51 betätigt, um druckabhängig Hydraulikmittel 141 in einen ersten Leitungsteil 1511 einzubringen.

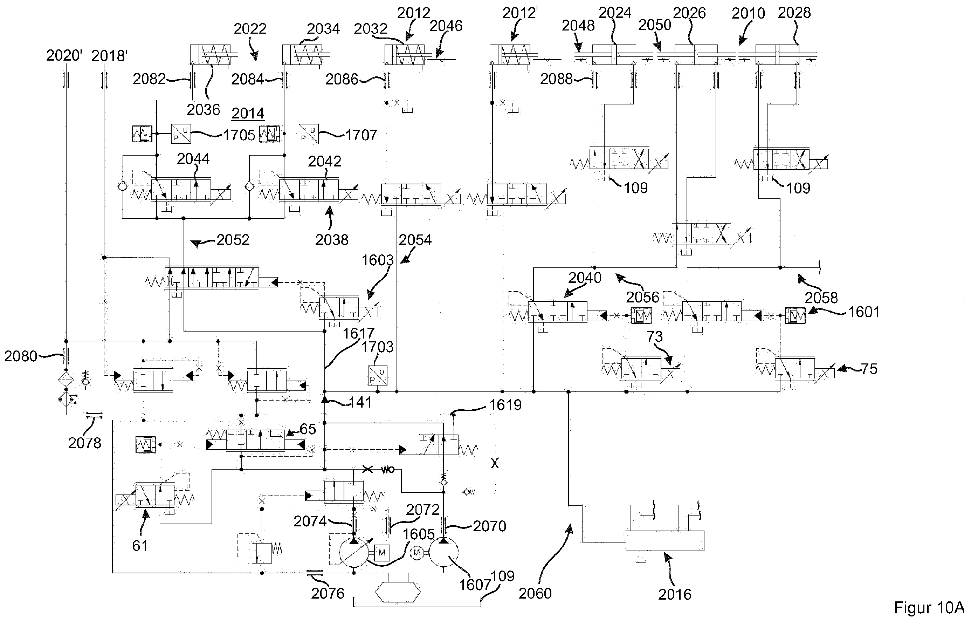

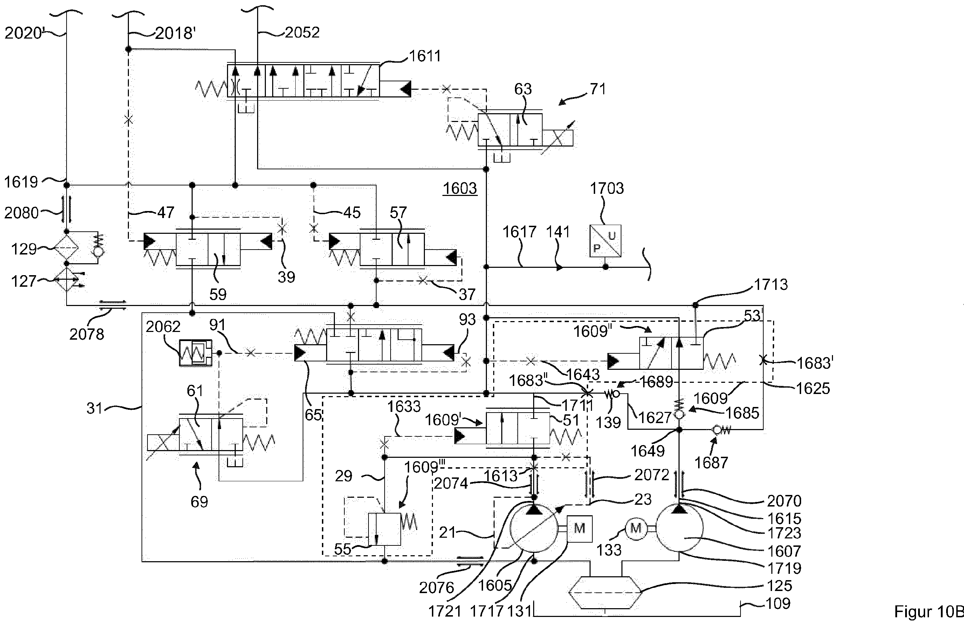

In Figur 10B wird eine Hydraulikmittelaufbereitung 1603 gezeigt, die sich in weiten Teilen aus den Hydraulikmittelaufbereitungen 603 nach Figur 5B und 803 nach Figur 6B zusammensetzt. Daher sei vorrangig auf die Darstellungen der Figur 5B und der Figur 6b verwiesen, wobei die Bezugszeichen entsprechend auf Bezugszeichen im 1600-Bereich und im 1700-Bereich in der Figur 10B erhöht worden sind. In jeder der By-Pass-Leitungen 1625, 1627 sind sowohl ein Rückschlagventil 1687, 1689 als auch eine Drossel 1683^{I}, 1683^{II} eingebaut. Die erste By-Pass-Leitung 1625 führt zu dem zweiten Leitungsabschnitt 1713, der in die Zentraldruckleitung 1617 übergeht. Die zweite By-Pass-Leitung 1627 führt zu dem ersten Leitungsabschnitt 1711. Beide By-Pass-Leitungen 1625, 1627 sind an dem Leitungspunkt 1649 zusammengeschlossen. Auch ist an dem Leitungspunkt 1649 das erste Rückschlagventil 1685 in der Zuleitung zum zweiten Ventil 53 eingebaut. So kann das Hydraulikmittel 141 aus der zweiten Pumpdruckleitung 1615 in bis zu drei verschiedene Richtungen in Abhängigkeit seines Drucks abfließen. Hierbei wird auch das Relativdruckverhältnis zu dem Druck in der ersten Pumpdruckleitung 1613 berücksichtigt.

In diesem Zusammenhang sorgen Steuerleitungen 1633, 1643 für die Schieberstellung der Ventile 51, 53. Die Ventile 51, 53, 55, die der Vorrangschaltung 1609 zuzurechnen sind, sind einzelne Teile 1609^{I}, 1609^{II}, 1609^{III} der Vorrangschaltung 1609.

Jeder der Druckerzeuger 1605, 1607 saugt Hydraulikmittel 141 an der Ansaugseite 1717, 1719 an und liefert unter Druck das Hydraulikmittel an der Hochdruckseite 1721, 1723.

Drücke lassen sich mithilfe von Drucksensoren 1703 in den Leitungen wie der Zentraldruckleitung 1617 überwachen.

Die in den einzelnen Figuren gezeigten Ausgestaltungsmöglichkeiten lassen sich auch untereinander in beliebiger Form verbinden.

So ist es möglich, auch mehr als drei Leitungsteile an einem Leitungspunkt zusammenzufügen, von dem aus ein Hydraulikmittel 141 dafür sorgen kann, dass die Flussrichtungsbauteile zu unterschiedlichen Bedingungen öffnen und schließen.

### Bezugszeichenliste

| | |
|---|---|
| 1, 201, 401, 601, 801, 1001, 1201, 1401, 1601 | Schaltung |
| 3, 203, 403, 603, 803, 1003, 1203, 1403, 1603 | Hydraulikmittelaufbereitung |
| 5, 205, 405, 605, 805, 1005, 1205, 1405, 1605 | erste Druckerzeugung, insbesondere Flügelzellenpumpe |
| 7, 207, 407, 607, 807, 1007, 1207, 1407, 1607 | zweite Druckerzeugung, insbesondere Zahnradpumpe |
| 9, 209, 409, 609, 809, 1609 | Vorrangschaltung, insbesondere erste Vorrangschaltung |
| 209^{I}, 409^{I}, 609^{I}, 809^{I}, 1009^{I}, 1209^{I}, 1609^{I} | erster Teil der ersten Vorrangschaltung |
| 209^{II}, 409^{II}, 609^{II}, 809^{II}, 1009^{II}, 1209^{II}, 1609^{II} | zweiter Teil der ersten Vorrangschaltung |
| 209^{II}, 409^{III}, 609^{III}, 809^{III}, 1009^{III}, 1209^{III}, 1609^{III} | dritter Teil der ersten Vorrangschaltung |
| 11, 211, 411, 611, 811, 1011, 1211, 1411, 1611 | zweite Vorrangschaltung |
| 13, 213, 413, 613, 813, | erste Druckleitung, insbesondere in der Form einer ersten |
| 1013, 1213, 1413, 1613 | Pumpdruckleitung |
| 15, 215, 415, 615, 815, | zweite Druckleitung, insbesondere in der Form einer zweiten |
| 1015, 1215, 1415, 1615 | Pumpdruckleitung |
| 17, 217, 417, 617, 817, 1017, 1217, 1417, 1617 | Zentraldruckleitung, insbesondere als erste Versorgungsleitung |
| 19, 219, 419, 619, 819, 1019,1219,1419,1619 | zweite Versorgungsleitung, insbesondere als Schmier-Kühl-Druckleitung |
| 21 | erste Pumpensteuerleitung |
| 23 | zweite Pumpensteuerleitung |
| 25, 225, 425, 625, 1225, 1425, 1625 | erste By-Pass-Leitung |
| 827, 1027, 1227, 1427, 1627 | zweite By-Pass-Leitung |
| 29 | erste Rezirkulationsleitung |
| 31 | zweite Rezirkulationsleitung |
| 33, 233, 433, 633, 833, 1033, 1233, 1433, 1633 | erste Freigabesteuerleitung, insbesondere zum ersten Ventil 51 der Vorrangschaltung 9, 209, 409, 609, 809, 1609 |
| 235, 635, 1035, 1435 | zweite Freigabesteuerleitung, insbesondere zum zweiten Ventil 53' der Vorrangschaltung 9, 209, 409, 609, 809 |
| 37 | dritte Freigabesteuerleitung, insbesondere zum zweiten Freigabeventil |
| 39 | vierte Freigabesteuerleitung, insbesondere zum dritten Freigabeventil |
| 41 | erste Sperrsteuerleitung |
| 43, 243, 443, 643, 843, 1043, 1243, 1443, 1643 | zweite Sperrsteuerleitung |
| 45 | dritte Sperrsteuerleitung |
| 47 | vierte Sperrsteuerleitung |
| 49, 249, 449, 649, 849, 1049, 1249, 1449, 1649 | Leitungspunkt |
| 51 | erstes Ventil der Vorrangschaltung |
| 53, 53^{I} | zweites Ventil der Vorrangschaltung |
| 55 | erstes Freigabeventil |
| 57 | zweites Freigabeventil |
| 59 | drittes Freigabeventil |
| 61 | erstes Richtungsflussventil |
| 63 | zweites Richtungsflussventil |
| 65 | Hauptdruckventil |
| 67 | Druckwaage |
| 69 | erstes Pilotventil |
| 71 | zweites Pilotventil |
| 73 | drittes Pilotventil |
| 75 | viertes Pilotventil |
| 77, 277, 477, 677, 877, 1077, 1277, 1477 | erstes Flussrichtungsbauteil |
| 79, 279, 479, 679 | zweites Flussrichtungsbauteil |
| 881, 1081, 1281, 1481 | drittes Flussrichtungsbauteil |
| 1283, 1483, 1683', 1683" | viertes Flussrichtungsbauteil |
| 85, 1685 | erstes Rückschlagventil, insbesondere ein federvorgespanntes Kugelsitzventil |
| 87, 1687 | zweites Rückschlagventil, insbesondere ein federvorgespanntes |
| | Kugelsitzventil |
| 1689 | drittes Rückschlagventil, insbesondere ein federvorgespanntes Kugelsitzventil |
| 91 | erste Steuerleitung des Hauptdruckventils 65 |
| 93 | zweite Steuerleitung des Hauptdruckventils 65 |
| 95 | erster Anschluss der Vorrangschaltung |
| 97 | zweiter Anschluss der Vorrangschaltung |
| 99 | dritter Anschluss der Vorrangschaltung |
| 101 | vierter Anschluss der Vorrangschaltung |
| 103, 303, 503, 703, 903, 1103, 1303, 1503, 1703 | erster Drucksensor |
| 105, 305, 505, 705, 905, 1105, 1305, 1505, 1705 | zweiter Drucksensor |
| 107, 307, 507, 707, 907, 1107, 1307, 1507, 1707 | dritter Drucksensor |
| 109 | Sumpf |
| 111, 311, 511, 711, 911, 1111, 1311, 1511, 1711 | erstes Leitungsteil |
| 113, 313, 513, 713, 913, 1113, 1313, 1513, 1713 | zweites Leitungsteil |
| 915 | drittes Leitungsteil |
| 117, 317, 517, 717, 917, 1117, 1317, 1517, 1717 | erste Ansaugseite |
| 119, 319, 519, 719, 919, 1119, 1319, 1519, 1719 | zweite Ansaugseite |
| 121, 321, 521, 721, 921, 1121, 1321, 1521, 1721 | erste Hochdruckseite |
| 123, 323, 523, 723, 923, 1123, 1323, 1523, 1723 | zweite Hochdruckseite |
| 125 | Ansaugfilter |
| 127 | Kühler |
| 129 | Kühlerfilter |
| 131 | Verbrennungsmotor bzw. Verbrennungskraftmaschine |
| 133 | Elektromotor |
| 135, 535 | erste Feder, insbesondere im ersten Rückschlagventil |
| 137, 537 | zweite Feder, insbesondere im zweiten Rückschlagventil |
| 139 | dritte Feder, insbesondere im dritten Rückschlagventil |
| 141 | Hydraulikmittel |
| 2010 | Gangstellerteil |
| 2012, 2012' | erster Kupplungszweig |
| 2014 | Doppelkupplungsbaugruppe |
| 2016 | Klappensteuerbaugruppe |
| 2018, 2018^{I} | Kühlbereich |
| 2020, 2020^{I} | Schmierbereich |
| 2022 | zweiter Kupplungszweig |
| 2024, 2026, 2028 | Gangstellerschieberkolben bzw. erster Gangstellzylinder bzw. zweiter Gangstellzylinder |
| 2032 | erster Differenzkolbenzylinder, insbesondere federvorgespannter Differenzkolbenzylinder |
| 2034 | zweiter Differenzkolbenzylinder, insbesondere federvorgespannter Differenzkolbenzylinder bzw. erster Kupplungszylinder |
| 2036 | dritter Differenzkolbenzylinder, insbesondere federvorgespannter Differenzkolbenzylinder bzw. zweiter Kupplungszylinder |
| 2038 | Schieberventil, insbesondere elektromagnetisch direktbetätigtes Schieberventil |
| 2040 | Schieberventil, insbesondere pilotgesteuertes Schieberventil |
| 2042 | erstes Kupplungsdruckregelventil |
| 2044 | zweites Kupplungsdruckregelventil |
| 2046 | erster Positionssensor |
| 2048 | zweiter Positionssensor |
| 2050 | dritter Positionssensor |
| 2052 | erste hydraulische Strecke |
| 2054 | zweite hydraulische Strecke |
| 2056 | dritte hydraulische Strecke |
| 2058 | vierte hydraulische Strecke |
| 2060 | fünfte hydraulische Strecke |
| 2062 | erster Speicher |
| 2064 | zweiter Speicher |
| 2066 | dritter Speicher |
| 2068 | vierter Speicher |
| 2070 | erste Steckverbindung |
| 2072 | zweite Steckverbindung |
| 2074 | dritte Steckverbindung |
| 2076 | vierte Steckverbindung |
| 2078 | fünfte Steckverbindung |
| 2080 | sechste Steckverbindung |
| 2082 | siebte Steckverbindung |
| 2084 | achte Steckverbindung |
| 2086 | neunte Steckverbindung |
| 2088 | zehnte Steckverbindung |
| 2500 | Antriebsstrang, insbesondere Hybridantriebsstrang |
| 2503 | Elektromaschine |
| 2505 | Doppelkupplungsgetriebe, insbesondere Pkw-Getriebe |
| 2507 | erste Kupplung, insbesondere Trennkupplung |
| 2509 | zweite Kupplung, insbesondere Trennkupplung |
| 2511 | dritte Kupplung, insbesondere Trennkupplung |
| 2513 | Kraftflussunterbrechung |
| 2515 | Eingangswelle, insbesondere koaxiale Doppelwelle |
| 2517 | erste Vorgelegewelle |
| 2519 | zweite Vorgelegewelle |
| 2521 | Ausgangswelle |
| 2523 | Differential, insbesondere in Käfigbauform |
| 2525 | erste Schaltmuffe |
| 2527 | zweite Schaltmuffe |
| 2529 | dritte Schaltmuffe |
| 2539 | erstes Zahnradpaar |
| 2541 | zweites Zahnradpaar |
| 2543 | drittes Zahnradpaar |
| 2545 | Getriebegehäuse |
| 2547 | Antriebswelle wie eine nach Außen geführte (mehrteilige) Kurbelwelle |

## Patentansprüche

1. Hydraulische Schaltung (1, 201, 401, 601, 801, 1001, 1201, 1401, 1601) zur Hydraulikmittelaufbereitung (3, 203, 403, 603, 803, 1003, 1203, 1403, 1603) mit einer ersten (5, 205, 405, 605, 805, 1005, 1205, 1405, 1605) und einer zweiten hydraulischen Druckerzeugung (7, 207, 407, 607, 807, 1007, 1207, 1407, 1607),
die voneinander unabhängig betreibbar sind und
die dazu geeignet sind, ein bedrucktes Hydraulikmittel (141) jeweils getrennt in einer eigenen Druckleitung, also zumindest in einer ersten (13, 213, 413, 613, 813, 1013, 1213, 1413, 1613) und in einer zweiten Druckleitung (15, 215, 415, 615, 815, 1015, 1215, 1415, 1615) zur Verfügung zu stellen,
wobei ein erstes Flussrichtungsbauteil (77, 277, 477, 677, 877, 1077, 1277, 1477) eine der Druckerzeugungen (7, 207, 407, 607, 807, 1007, 1207, 1407, 1607) vor abströmendem Hydraulikmittel schützt,
und mit einer Vorrangschaltung (9, 209, 409, 609, 809, 1609, 11, 211, 411, 611, 811, 1011, 1211, 1411, 1611),
die abströmseitig an der ersten Druckleitung (13, 213, 413, 613, 813, 1013, 1213, 1413, 1613) und an der zweiten Druckleitung (15, 215, 415, 615, 815, 1015, 1215, 1415, 1615) angeschlossen ist und
die sich aus wenigstens zwei Ventilen (51, 53, 53^{I}) zusammensetzt und
die in Abhängigkeit von wenigstens einem Druck an einer Stelle der hydraulischen Schaltung Hydraulikmittel (141) aus einer Druckleitung in eine Zentraldruckleitung (17, 217, 417, 617, 817, 1017, 1217, 1417, 1617) der hydraulischen Schaltung (1, 201, 401, 601, 801, 1001, 1201, 1401, 1601) durchschaltet,
und ein zweites Flussrichtungsbauteil (79, 279, 479, 679, 881, 1081, 1281, 1481, 1283, 1483, 1683^{I}, 1683^{II}) über einen auffächernden Leitungspunkt (49, 249, 449, 649, 849, 1049, 1249, 1449, 1649) mit dem ersten Flussrichtungsbauteil (77, 277, 477, 677, 877, 1077, 1277, 1477) verbunden ist, über das eine Ableitung von Hydraulikmittel (141) von dem Leitungspunkt (49, 249, 449, 649, 849, 1049, 1249, 1449, 1649) weg aus einer der Druckleitungen (15, 215, 415, 615, 815, 1015, 1215, 1415, 1615) in Abhängigkeit von Druckverhältnissen, Druckgefällen, Druckniveaus, Volumina oder Grenzdrücken herstellbar ist,
**dadurch gekennzeichnet, dass**
die Vorrangschaltung (9, 209, 409, 609, 809, 1609, 11, 211, 411, 611, 811, 1011, 1211, 1411, 1611), von der ein erstes Ventil (51) der ersten hydraulischen Druckerzeugung (5, 205, 405, 605, 805, 1005, 1205, 1405, 1605) und ein zweites Ventil (53, 53^{I}) der zweiten hydraulischen Druckerzeugung (7, 207, 407, 607, 807, 1007, 1207, 1407, 1607) zugeordnet sind, derart ausgestaltet ist, dass sie bestimmt,
welche der beiden Druckerzeugungen, erste hydraulische Druckerzeugung (5, 205, 405, 605, 805, 1005, 1205, 1405, 1605) und zweite hydraulische Druckerzeugung (7, 207, 407, 607, 807, 1007, 1207, 1407, 1607), ihr Hydraulikmittel (141) in die Zentraldruckleitung (17, 217, 417, 617, 817, 1017, 1217, 1417, 1617) einleiten darf,
indem das erste Ventil (51) für eine Abkopplung der ersten hydraulischen Druckerzeugung (5, 205, 405, 605, 805, 1005, 1205, 1405, 1605) von der Zentraldruckleitung (17, 217, 417, 617, 817, 1017, 1217, 1417, 1617) und
das zweite Ventil (53, 53^{I}) für eine Abkopplung der zweiten hydraulischen Druckerzeugung (7, 207, 407, 607, 807, 1007, 1207, 1407, 1607) von der Zentraldruckleitung (17, 217, 417, 617, 817, 1017, 1217, 1417, 1617) zuständig ist.

2. Hydraulische Schaltung (1, 201, 401, 601, 801, 1001, 1201, 1401, 1601) nach Anspruch 1,
**dadurch gekennzeichnet, dass**
die erste hydraulische Druckerzeugung (5, 205, 405, 605, 805, 1005, 1205, 1405, 1605) in einem steuerfreien Zustand von der Zentraldruckleitung (17, 217, 417, 617, 817, 1017, 1217, 1417, 1617) durch das erste Ventil (51) der Vorrangschaltung (9, 209, 409, 609, 809, 1609) abgekoppelt ist,
wobei insbesondere die zweite hydraulische Druckerzeugung (7, 207, 407, 607, 807, 1007, 1207, 1407, 1607) in einem steuerfreien Zustand über die Vorrangschaltung (9, 209, 409, 609, 809, 1609) eine hydraulische Verbindung in die Zentraldruckleitung (17, 217, 417, 617, 817, 1017, 1217, 1417, 1617) vorfindet, die vorzugsweise bei einem Mindestdruckunterschied über das erste Flussrichtungsbauteil freigeschaltet ist.

3. Hydraulische Schaltung (1, 201, 401, 601, 801, 1001, 1201, 1401, 1601) nach einem der vorhergehenden Ansprüche,
**dadurch gekennzeichnet, dass**
die erste hydraulische Druckerzeugung (5, 205, 405, 605, 805, 1005, 1205, 1405, 1605) eine von einem Verbrennungsmotor, z. B. durch einen Nebenantrieb wie einen Ketten-, einen Riemen- oder einen Zahnradtrieb, angetriebene, insbesondere regelbare, vorzugsweise arbeitsdruckgeregelte, Pumpe wie eine Flügelzellenpumpe ist.

4. Hydraulische Schaltung (1, 201, 401, 601, 801, 1001, 1201, 1401, 1601) nach einem der vorhergehenden Ansprüche,
**dadurch gekennzeichnet, dass**
die zweite hydraulische Druckerzeugung (7, 207, 407, 607, 807, 1007, 1207, 1407, 1607) eine elektromotorisch angetriebene, insbesondere drehzahlgeregelte, Pumpe wie eine Zahnradpumpe ist, die insbesondere als Hilfspumpe zur ersten hydraulischen Druckerzeugung dient.

5. Hydraulische Schaltung (1, 201, 401, 601, 801, 1001, 1201, 1401, 1601) nach einem der vorhergehenden Ansprüche,
**dadurch gekennzeichnet, dass**
wenigstens eine der Druckleitungen über ein druckgeregeltes Schieberventil, z. B. ein pilotgesteuertes, federvorgespanntes 2/2-Ventil, mit der Zentraldruckleitung verbindbar ist.

6. Hydraulische Schaltung (1, 201, 401, 601, 801, 1001, 1201, 1401, 1601) nach einem der vorhergehenden Ansprüche,
**dadurch gekennzeichnet, dass**
die hydraulische Schaltung (1, 201, 401, 601, 801, 1001, 1201, 1401, 1601) eine zentrale Schmier-Kühl-Druckmittelleitung (19, 219, 419, 619, 819, 1019, 1219, 1419, 1619) umfasst, von der insbesondere druckgeregelt ein Schmiermittelstrom und/oder ein Kühlmittelstrom ausleitbar ist.

7. Hydraulische Schaltung (1, 201, 401, 601, 801, 1001, 1201, 1401, 1601) nach Anspruch 6,
**dadurch gekennzeichnet, dass**
die Vorrangschaltung (9, 209, 409, 609, 809, 1609) wenigstens einen Anschluss für die Zentraldruckleitung (17, 217, 417, 617, 817, 1017, 1217, 1417, 1617) hat und wenigstens einen Anschluss für die zentrale Schmier-Kühl-Druckmittelleitung (19, 219, 419, 619, 819, 1019, 1219, 1419, 1619) hat.

8. Hydraulische Schaltung (1, 201, 401, 601, 801, 1001, 1201, 1401, 1601) nach einem der vorhergehenden Ansprüche,
**dadurch gekennzeichnet, dass**
mittels wenigstens eines Ventils, wie z. B. eines 3/2-Ventils, die Vorrangschaltung (9, 209, 409, 609, 809, 1609) zur Aufteilung zumindest eines Teils des bedruckten Hydraulikmittels (141) in funktionell sich unterscheidende Hydraulikmittelströme, wie z. B. in einen Arbeitsdruckmittelstrom, insbesondere für die Zentraldruckleitung (17, 217, 417, 617, 817, 1017, 1217, 1417, 1617), und in den Schmiermittelstrom oder z. B. in einen Arbeitsdruckmittelstrom und in den Kühlmittelstrom, insbesondere für die Schmier-Kühl-Druckmittelleitung (19, 219, 419, 619, 819, 1019, 1219, 1419, 1619), gestaltet ist.

9. Hydraulische Schaltung (1, 201, 401, 601, 801, 1001, 1201, 1401, 1601) nach einem der vorhergehenden Ansprüche,
**dadurch gekennzeichnet, dass**
die Ableitung des Hydraulikmittels (141) bei von der zweiten Druckerzeugung (7, 207, 407, 607, 807, 1007, 1207, 1407, 1607) erzeugten Druckspitzen freigeschaltet ist, wobei die Ableitung entweder in einen Sumpf, in die Zentraldruckleitung (17, 217, 417, 617, 817, 1017, 1217, 1417, 1617) oder in einen Leitungsteil, insbesondere in einen in die Schmier-Kühl-Druckmittelleitung mündenden Leitungsteil, herstellbar ist.

10. Hydraulische Schaltung (1, 201, 401, 601, 801, 1001, 1201, 1401, 1601) nach einem der vorhergehenden Ansprüche,
**dadurch gekennzeichnet, dass**
das erste Flussrichtungsbauteil (77, 277, 477, 677, 877, 1077, 1277, 1477) ein erstes Rückschlagventil (85, 1685) mit einer Feder (135, 535) und das zweite Flussrichtungsbauteil (79, 279, 479, 679, 881, 1081, 1281, 1481, 1283, 1483, 1683^{I}, 1683^{II}) ein zweites Rückschlagventil (87, 1687) mit einer Feder (137, 537) sind, wobei die Federn (135, 535, 137, 537) mit voneinander abweichenden Federspannungen ausgestattet sind.

11. Hydraulische Schaltung (1, 201, 401, 601, 801, 1001, 1201, 1401, 1601) nach einem der vorhergehenden Ansprüche,
**dadurch gekennzeichnet, dass**
ein Druck in der Zentraldruckleitung (17, 217, 417, 617, 817, 1017, 1217, 1417, 1617) durch ein Hauptdruckventil (65) bestimmt ist, das in der Form einer Druckwaage (67) in einem Zustand zum Abströmen eine Verbindung zu einer Ansaugseite (117, 317, 517, 717, 917, 1117, 1317, 1517, 1717) zumindest einer der Druckerzeugungen gebildet hat, wodurch eine Druckreduktion in der Zentraldruckleitung (17, 217, 417, 617, 817, 1017, 1217, 1417, 1617) herbeiführbar ist.

12. Hydraulische Schaltung (1, 201, 401, 601, 801, 1001, 1201, 1401, 1601) nach einem der vorhergehenden Ansprüche,
**dadurch gekennzeichnet, dass**
von der zweiten Druckerzeugung (7, 207, 407, 607, 807, 1007, 1207, 1407, 1607) infolge von Druckverhältnissen oder infolge von Druckgefällen eine erste Verbindung über die zweite Druckleitung herstellbar ist und eine zweite Verbindung als Abströmverbindung von der zweiten Druckleitung herstellbar ist.

13. Hydraulische Schaltung (1, 201, 401, 601, 801, 1001, 1201, 1401, 1601) nach einem der vorhergehenden Ansprüche,
**dadurch gekennzeichnet, dass**
die erste hydraulische Druckerzeugung (5, 205, 405, 605, 805, 1005, 1205, 1405, 1605) und die zweite hydraulischen Druckerzeugung (7, 207, 407, 607, 807, 1007, 1207, 1407, 1607) zur Erzeugung unterschiedlicher Drücke zur Schaffung von bedruckten Hydraulikmitteln (141) zumindest während einer Phase eines gleichzeitigen Betriebs gestaltet sind,
wobei die hydraulische Schaltung (1, 201, 401, 601, 801, 1001, 1201, 1401, 1601) insbesondere Teil einer Kraftfahrzeughydraulikschaltung, wie z. B. Teil einer Getriebesteuerung für ein Doppelkupplungsgetriebe (2505), ist.

14. Verfahren zur Druckerzeugung mit zwei Pumpen (5, 205, 405, 605, 805, 1005, 1205, 1405, 1605, 7, 207, 407, 607, 807, 1007, 1207, 1407, 1607),
vorzugsweise mit einer Schaltung (1, 201, 401, 601, 801, 1001, 1201, 1401, 1601) nach einem der vorhergehenden Ansprüche,
wobei eine Vorrangschaltung (9, 209, 409, 609, 809, 1609),
die sich aus wenigstens zwei Ventilen (51, 53, 53^{I}) zusammensetzt,
an einer ersten Druckleitung (13, 213, 413, 613, 813, 1013, 1213, 1413, 1613) und an einer zweiten Druckleitung (15, 215, 415, 615, 815, 1015, 1215, 1415, 1615) vorhanden ist,
wobei zwei Rückschlagventile (85, 1685, 87, 1687),
angeschlossen an die als Hilfspumpe benutzte,
und insbesondere elektromotorisch (133) angetriebene,
ein Hydraulikmittel (141) wegleitende Pumpe,
die Pumpe (7, 207, 407, 607, 807, 1007, 1207, 1407, 1607) in zwei Strömungsflussrichtungen gegen Rückflüsse sperren,
wobei in Abhängigkeit von einem ersten Druckgefälle das erste Rückschlagventil (85, 1685) die zweite Druckleitung (15, 215, 415, 615, 815, 1015, 1215, 1415, 1615) in Richtung auf ein Ventil der Vorrangschaltung (9, 209, 409, 609, 809, 1609) freischaltet und
in Abhängigkeit von einem zweiten Druckgefälle das zweite Rückschlagventil (87, 1687) die zweite Druckleitung (15, 215, 415, 615, 815, 1015, 1215, 1415, 1615) entweder in Richtung auf eine Sumpfableitung (109), in Richtung auf eine Zentraldruckleitung (17, 217, 417, 617, 817, 1017, 1217, 1417, 1617) und/oder in Richtung auf eine Schmier-Kühl-Druckleitung (19, 219, 419, 619, 819, 1019, 1219, 1419, 1619) freischaltet,
**dadurch gekennzeichnet, dass**
die Vorrangschaltung (9, 209, 409, 609, 809, 1609, 11, 211, 411, 611, 811, 1011, 1211, 1411, 1611), von der ein erstes Ventil (51) der ersten hydraulischen Druckerzeugung (5, 205, 405, 605, 805, 1005, 1205, 1405, 1605) und ein zweites Ventil (53, 53^{I}) der zweiten hydraulischen Druckerzeugung (7, 207, 407, 607, 807, 1007, 1207, 1407, 1607) zugeordnet sind, bestimmt,
welche der beiden Druckerzeugungen, erste hydraulische Druckerzeugung (5, 205, 405, 605, 805, 1005, 1205, 1405, 1605) und zweite hydraulische Druckerzeugung (7, 207, 407, 607, 807, 1007, 1207, 1407, 1607), ihr Hydraulikmittel (141) in die Zentraldruckleitung (17, 217, 417, 617, 817, 1017, 1217, 1417, 1617) einleiten darf, indem das erste Ventil (51) für eine Abkopplung der ersten hydraulischen Druckerzeugung (5, 205, 405, 605, 805, 1005, 1205, 1405, 1605) von der Zentraldruckleitung (17, 217, 417, 617, 817, 1017, 1217, 1417, 1617) und
das zweite Ventil (53, 53^{I}) für eine Abkopplung der zweiten hydraulischen Druckerzeugung (7, 207, 407, 607, 807, 1007, 1207, 1407, 1607) von der Zentraldruckleitung (17, 217, 417, 617, 817, 1017, 1217, 1417, 1617) zuständig ist.

15. Verfahren zur Druckerzeugung mit zwei Pumpen (5, 205, 405, 605, 805, 1005, 1205, 1405, 1605, 7, 207, 407, 607, 807, 1007, 1207, 1407, 1607) nach Anspruch 14,
**dadurch gekennzeichnet, dass**
die erste Pumpe (5, 205, 405, 605, 805, 1005, 1205, 1405, 1605) eine verbrennungsmotorisch (131) angetriebene, insbesondere als Hauptpumpe eingesetzte, Pumpe ist,
die direkt oder indirekt druckgeregelt eine Verbindung in die Zentraldruckleitung (17, 217, 417, 617, 817, 1017, 1217, 1417, 1617) durch eine Betätigung eines der Ventile (51) der Vorrangschaltung (9, 209, 409, 609, 809, 1609) in Abhängigkeit eines aufgebauten Drucks freischaltet,
wobei vorzugsweise Teil der Vorrangschaltung (9, 209, 409, 609, 809, 1609) ein Flusssteuerventil (53, 53^{I}) ist,
das in Abhängigkeit eines Drucks in der Zentraldruckleitung (17, 217, 417, 617, 817, 1017, 1217, 1417, 1617) einen Strömungspfad für Hydraulikmittel (141) von der zweiten Pumpe (7, 207, 407, 607, 807, 1007, 1207, 1407, 1607) in zweierlei Richtungen, insbesondere wechselweise, freischaltet,
wodurch in einem Schaltzustand Hydraulikmittel (141) in die Zentraldruckleitung (17, 217, 417, 617, 817, 1017, 1217, 1417, 1617) strömen kann.

## Claims

1. Hydraulic circuit (1, 201, 401, 601, 801, 1001, 1201, 1401, 1601) for hydraulic medium provision (3, 203, 403, 603, 803, 1003, 1203, 1403, 1603),
comprising a first (5, 205, 405, 605, 805, 1005, 1205, 1405, 1605) and a second hydraulic pressure generator (7, 207, 407, 607, 807, 1007, 1207, 1407, 1607),
which can be operated independently of each other, and
which are suitable for providing a pressurized hydraulic medium (141) separately into a separate pressure line, that is to say at least into a first (13, 213, 413, 613, 813, 1013, 1213, 1413, 1613) and into a second pressure line (15, 215, 415, 615, 815, 1015, 1215, 1415, 1615),
wherein a first flow-directing component (77, 277, 477, 677, 877, 1077, 1277, 1477) protects one of the pressure generators (7, 207, 407, 607, 807, 1007, 1207, 1407, 1607) against outflowing hydraulic medium,
and comprising a priority circuit (9, 209, 409, 609, 809, 1609, 11, 211, 411, 611, 811, 1011, 1211, 1411, 1611),
which on the outflow side is connected to the first pressure line (13, 213, 413, 613, 813, 1013, 1213, 1413, 1613) and to the second pressure line (15, 215, 415, 615, 815, 1015, 1215, 1415, 1615), and
which is composed of at least two valves (51, 53, 53^{I}), and
which, as a function of at least one pressure at one point in the hydraulic circuit, transmits hydraulic medium (141) from one pressure line into a central pressure line (17, 217, 417, 617, 817, 1017, 1217, 1417, 1617) of the hydraulic circuit (1, 201, 401, 601, 801, 1001, 1201, 1401, 1601),
and a second flow-directing component (79, 279, 479, 679, 881, 1081, 1281, 1481, 1283, 1483, 1683^{I}, 1683^{II}) is connected to the first flow-directing component (77, 277, 477, 677, 877, 1077, 1277, 1477) via a branching line point (49, 249, 449, 649, 849, 1049, 1249, 1449, 1649), via which hydraulic medium (141) can be branched off by the line point (49, 249, 449, 649, 849, 1049, 1249, 1449, 1649) from one of the pressure lines (15, 215, 415, 615, 815, 1015, 1215, 1415, 1615) as a function of pressure conditions, pressure differences, pressure levels, volumes or limit pressures,
**characterized in that**
the priority circuit (9, 209, 409, 609, 809, 1609, 11, 211, 411, 611, 811, 1011, 1211, 1411, 1611), a first valve (51) of which is assigned to the first hydraulic pressure generator (5, 205, 405, 605, 805, 1005, 1205, 1405, 1605) and a second valve (53, 53^{I}) of which is assigned to the second hydraulic pressure generator (7, 207, 407, 607, 807, 1007, 1207, 1407, 1607), is designed in such a way that it determines
which of the two pressure generators, first hydraulic pressure generator (5, 205, 405, 605, 805, 1005, 1205, 1405, 1605) and second hydraulic pressure generator (7, 207, 407, 607, 807, 1007, 1207, 1407, 1607), may introduce its hydraulic medium (141) into the central pressure line (17, 217, 417, 617, 817, 1017, 1217, 1417, 1617),
**in that** the first valve (51) is responsible for disconnecting the first hydraulic pressure generator (5, 205, 405, 605, 805, 1005, 1205, 1405, 1605) from the central pressure line (17, 217, 417, 617, 817, 1017, 1217, 1417, 1617), and
the second valve (53, 53^{I}) is responsible for disconnecting the second hydraulic pressure generator (7, 207, 407, 607, 807, 1007, 1207, 1407, 1607) from the central pressure line (17, 217, 417, 617, 817, 1017, 1217, 1417, 1617).

2. Hydraulic circuit (1, 201, 401, 601, 801, 1001, 1201, 1401, 1601) according to claim 1,
**characterized in that**
the first hydraulic pressure generator (5, 205, 405, 605, 805, 1005, 1205, 1405, 1605), in a control-free state, is disconnected from the central pressure line (17, 217, 417, 617, 817, 1017, 1217, 1417, 1617) by the first valve (51) of the priority circuit (9, 209, 409, 609, 809, 1609),
wherein in particular the second hydraulic pressure generator (7, 207, 407, 607, 807, 1007, 1207, 1407, 1607), in a control-free state, has a hydraulic connection to the central pressure line (17, 217, 417, 617, 817, 1017, 1217, 1417, 1617) via the priority circuit (9, 209, 409, 609, 809, 1609), this hydraulic connection preferably being enabled via the first flow-directing component when there is a minimum pressure difference.

3. Hydraulic circuit (1, 201, 401, 601, 801, 1001, 1201, 1401, 1601) according to any one of the preceding claims,
**characterized in that**
the first hydraulic pressure generator (5, 205, 405, 605, 805, 1005, 1205, 1405, 1605) is a pump that can be driven by an internal combustion engine, for example through an auxiliary drive such as a chain drive, a belt drive or a gearwheel drive, in particular a controllable pump, preferably a pump controlled via the operating pressure, such as a vane pump.

4. Hydraulic circuit (1, 201, 401, 601, 801, 1001, 1201, 1401, 1601) according to any one of the preceding claims,
**characterized in that**
the second hydraulic pressure generator (7, 207, 407, 607, 807, 1007, 1207, 1407, 1607) is a pump that can be driven by an electric motor, in particular a variable-speed pump, such as a gearwheel pump, which in particular serves as an auxiliary pump for the first hydraulic pressure generator.

5. Hydraulic circuit (1, 201, 401, 601, 801, 1001, 1201, 1401, 1601) according to any one of the preceding claims,
**characterized in that**
at least one of the pressure lines can be connected to the central pressure line via a pressure-controlled slide valve, for example a pilot-controlled, spring-loaded 2/2-valve.

6. Hydraulic circuit (1, 201, 401, 601, 801, 1001, 1201, 1401, 1601) according to any one of the preceding claims,
**characterized in that**
the hydraulic circuit (1, 201, 401, 601, 801, 1001, 1201, 1401, 1601) comprises a central lubrication/cooling pressure medium line (19, 219, 419, 619, 819, 1019, 1219, 1419, 1619), by which in particular a lubricant stream and/or a coolant stream can be branched off in a pressure-controlled manner.

7. Hydraulic circuit (1, 201, 401, 601, 801, 1001, 1201, 1401, 1601) according to claim 6,
**characterized in that**
the priority circuit (9, 209, 409, 609, 809, 1609) has at least one connection for the central pressure line (17, 217, 417, 617, 817, 1017, 1217, 1417, 1617) and at least one connection for the central lubrication/cooling pressure medium line (19, 219, 419, 619, 819, 1019, 1219, 1419, 1619).

8. Hydraulic circuit (1, 201, 401, 601, 801, 1001, 1201, 1401, 1601) according to any one of the preceding claims,
**characterized in that**
by means of at least one valve, for example a 3/2-valve, the priority circuit (9, 209, 409, 609, 809, 1609) is designed to split at least a portion of the pressurized hydraulic medium (141) into hydraulic medium streams that differ in terms of their function, for example into a working pressure medium stream, in particular for the central pressure line (17, 217, 417, 617, 817, 1017, 1217, 1417, 1617), and into the lubricant stream, or for example into a working pressure medium stream and into the coolant stream, in particular for the lubrication/cooling pressure medium line (19, 219, 419, 619, 819, 1019, 1219, 1419, 1619).

9. Hydraulic circuit (1, 201, 401, 601, 801, 1001, 1201, 1401, 1601) according to any one of the preceding claims,
**characterized in that**
the branching off of hydraulic medium (141) is enabled in the event of pressure peaks generated by the second pressure generator (7, 207, 407, 607, 807, 1007, 1207, 1407, 1607), wherein the branching may take place either into a sump, into the central pressure line (17, 217, 417, 617, 817, 1017, 1217, 1417, 1617) or into a line portion, in particular into a line portion that opens into the lubrication/cooling pressure medium line.

10. Hydraulic circuit (1, 201, 401, 601, 801, 1001, 1201, 1401, 1601) according to any one of the preceding claims,
**characterized in that**
the first flow-directing component (77, 277, 477, 677, 877, 1077, 1277, 1477) is a first check valve (85, 1685) having a spring (135, 535) and the second flow-directing component (79, 279, 479, 679, 881, 1081, 1281, 1481, 1283, 1483, 1683^{I}, 1683^{II}) is a second check valve (87, 1687) having a spring (137, 537), the springs (135, 535, 137, 537) having spring tensions that differ from each other.

11. Hydraulic circuit (1, 201, 401, 601, 801, 1001, 1201, 1401, 1601) according to any one of the preceding claims,
**characterized in that**
a pressure in the central pressure line (17, 217, 417, 617, 817, 1017, 1217, 1417, 1617) is determined by a main pressure valve (65), which in the form of a pressure balance (67) in an outflow state has formed a connection to an intake side (117, 317, 517, 717, 917, 1117, 1317, 1517, 1717) of at least one of the pressure generators, as a result of which a pressure reduction can be brought about in the central pressure line (17, 217, 417, 617, 817, 1017, 1217, 1417, 1617).

12. Hydraulic circuit (1, 201, 401, 601, 801, 1001, 1201, 1401, 1601) according to any one of the preceding claims,
**characterized in that**
a first connection via the second pressure line can be established by the second pressure generator (7, 207, 407, 607, 807, 1007, 1207, 1407, 1607) as a result of pressure conditions or as a result of pressure differences and a second connection as an outflow connection from the second pressure line can be established.

13. Hydraulic circuit (1, 201, 401, 601, 801, 1001, 1201, 1401, 1601) according to any one of the preceding claims,
**characterized in that**
the first hydraulic pressure generator (5, 205, 405, 605, 805, 1005, 1205, 1405, 1605) and the second hydraulic pressure generator (7, 207, 407, 607, 807, 1007, 1207, 1407, 1607) are designed to generate different pressures for providing pressurized hydraulic media (141) at least during a phase of simultaneous operation,
wherein the hydraulic circuit (1, 201, 401, 601, 801, 1001, 1201, 1401, 1601) is in particular part of a motor vehicle hydraulic circuit, for example part of a transmission control system for a dual-clutch transmission (2505).

14. Method for generating pressure by means of two pumps (5, 205, 405, 605, 805, 1005, 1205, 1405, 1605, 7, 207, 407, 607, 807, 1007, 1207, 1407, 1607),
preferably with a circuit (1, 201, 401, 601, 801, 1001, 1201, 1401, 1601) according to any one of the preceding claims,
wherein a priority circuit (9, 209, 409, 609, 809, 1609),
which is composed of at least two valves (51, 53, 53^{I}),
is present on a first pressure line (13, 213, 413, 613, 813, 1013, 1213, 1413, 1613) and on a second pressure line (15, 215, 415, 615, 815, 1015, 1215, 1415, 1615),
wherein two check valves (85, 1685, 87, 1687),
connected to the pump that conveys away a hydraulic medium (141),
which pump is used as an auxiliary pump
and in particular is driven by an electric motor (133),
block the pump (7, 207, 407, 607, 807, 1007, 1207, 1407, 1607) in two flow directions to prevent backflows,
wherein as a function of a first pressure difference the first check valve (85, 1685) unblocks the second pressure line (15, 215, 415, 615, 815, 1015, 1215, 1415, 1615) in a direction of a valve of the priority circuit (9, 209, 409, 609, 809, 1609), and
as a function of a second pressure difference the second check valve (87, 1687) unblocks the second pressure line (15, 215, 415, 615, 815, 1015, 1215, 1415, 1615) either in a direction of a sump branch (109), in a direction of a central pressure line (17, 217, 417, 617, 817, 1017, 1217, 1417, 1617) and/or in a direction of a lubrication/cooling pressure line (19, 219, 419, 619, 819, 1019, 1219, 1419, 1619),
**characterized in that**
the priority circuit (9, 209, 409, 609, 809, 1609, 11, 211, 411, 611, 811, 1011, 1211, 1411, 1611), a first valve (51) of which is assigned to the first hydraulic pressure generator (5, 205, 405, 605, 805, 1005, 1205, 1405, 1605) and a second valve (53, 53^{I}) of which is assigned to the second hydraulic pressure generator (7, 207, 407, 607, 807, 1007, 1207, 1407, 1607), determines
which of the two pressure generators, first hydraulic pressure generator (5, 205, 405, 605, 805, 1005, 1205, 1405, 1605) and second hydraulic pressure generator (7, 207, 407, 607, 807, 1007, 1207, 1407, 1607), may introduce its hydraulic medium (141) into the central pressure line (17, 217, 417, 617, 817, 1017, 1217, 1417, 1617),
**in that** the first valve (51) is responsible for disconnecting the first hydraulic pressure generator (5, 205, 405, 605, 805, 1005, 1205, 1405, 1605) from the central pressure line (17, 217, 417, 617, 817, 1017, 1217, 1417, 1617), and
the second valve (53, 53^{I}) is responsible for disconnecting the second hydraulic pressure generator (7, 207, 407, 607, 807, 1007, 1207, 1407, 1607) from the central pressure line (17, 217, 417, 617, 817, 1017, 1217, 1417, 1617).

15. Method for generating pressure by means of two pumps (5, 205, 405, 605, 805, 1005, 1205, 1405, 1605, 7, 207, 407, 607, 807, 1007, 1207, 1407, 1607) according to claim 14,
**characterized in that**
the first pump (5, 205, 405, 605, 805, 1005, 1205, 1405, 1605) is a pump that is driven by an internal combustion engine (131) and in particular is used as a main pump,
which enables directly or indirectly in a pressure-controlled manner a connection to the central pressure line (17, 217, 417, 617, 817, 1017, 1217, 1417, 1617) by actuating one of the valves (51) of the priority circuit (9, 209, 409, 609, 809, 1609) as a function of a pressure that has built up,
wherein preferably a flow control valve (53, 53^{I}) is part of the priority circuit (9, 209, 409, 609, 809, 1609),
which flow control valve, as a function of a pressure in the central pressure line (17, 217, 417, 617, 817, 1017, 1217, 1417, 1617), enables a flow path for hydraulic medium (141) from the second pump (7, 207, 407, 607, 807, 1007, 1207, 1407, 1607) in two directions, in particular alternately,
as a result of which, in one switch state, hydraulic medium (141) can flow into the central pressure line (17, 217, 417, 617, 817, 1017, 1217, 1417, 1617).

## Revendications

1. Circuit hydraulique (1, 201, 401, 601, 801, 1001, 1201, 1401, 1601) pour le traitement par milieu hydraulique (3, 203, 403, 603, 803, 1003, 1203, 1403, 1603)
avec une première (5, 205, 405, 605, 805, 1005, 1205, 1405, 1605) et une seconde génération de pression hydraulique (7, 207, 407, 607, 807, 1007, 1207, 1407, 1607),
qui peuvent être exploitées indépendamment l'une de l'autre et
qui sont appropriées pour fournir un milieu hydraulique (141) sous pression respectivement séparément dans une conduite de pression qui leur est propre, donc au moins dans une première (13, 213, 413, 613, 813, 1013, 1213, 1413, 1613) et dans une seconde conduite de pression (15, 215, 415, 615, 815, 1015, 1215, 1415, 1615), dans lequel une première composante de sens d'écoulement (77, 277, 477, 677, 877, 1077, 1277, 1477) protège l'une des générations de pression (7, 207, 407, 607, 807, 1007, 1207, 1407, 1607) contre un milieu hydraulique qui s'écoule,
et avec un circuit prioritaire (9, 209, 409, 609, 809, 1609, 11, 211, 411, 611, 811, 1011, 1211, 1411, 1611),
qui est raccordé en aval à la première conduite de pression (13, 213, 413, 613, 813, 1013, 1213, 1413, 1613) et à la seconde conduite de pression (15, 215, 415, 615, 815, 1015, 1215, 1415, 1615) et
qui se compose d'au moins deux vannes (51, 53, 53^{I}) et
qui, en fonction d'au moins une pression en un emplacement du circuit hydraulique, transfère un milieu hydraulique (141) depuis une conduite de pression vers une conduite de pression centrale (17, 217, 417, 617, 817, 1017, 1217, 1417, 1617) du circuit hydraulique (1, 201, 401, 601, 801, 1001, 1201, 1401, 1601),
et une seconde composante de sens d'écoulement (79, 279, 479, 679, 881, 1081, 1281, 1481, 1283, 1483, 1683^{I}, 1683^{II}) est reliée via un point de conduite (49, 249, 449, 649, 849, 1049, 1249, 1449, 1649) en éventail à la première composante de sens d'écoulement (77, 277, 477, 677, 877, 1077, 1277, 1477), via laquelle une dérivation de milieu hydraulique (141) peut être établie en partant du point de conduite (49, 249, 449, 649, 849, 1049, 1249, 1449, 1649) hors de l'une des conduites de pression (15, 215, 415, 615, 815, 1015, 1215, 1415, 1615) en fonction de rapports de pression, de chutes de pression, de niveaux de pression, de volumes ou de pressions limites,
**caractérisé en ce que**
le circuit prioritaire (9, 209, 409, 609, 809, 1609, 11, 211, 411, 611, 811, 1011, 1211, 1411, 1611), auquel sont attribuées une première vanne (51) de la première génération de pression hydraulique (5, 205, 405, 605, 805, 1005, 1205, 1405, 1605) et une seconde vanne (53, 53^{I}) de la seconde génération de pression hydraulique (7, 207, 407, 607, 807, 1007, 1207, 1407, 1607), est conçu de sorte qu'il détermine
laquelle des deux générations de pression, la première génération de pression hydraulique (5, 205, 405, 605, 805, 1005, 1205, 1405, 1605) et la seconde génération de pression hydraulique (7, 207, 407, 607, 807, 1007, 1207, 1407, 1607), est autorisée à introduire son milieu hydraulique (141) dans la conduite de pression centrale (17, 217, 417, 617, 817, 1017, 1217, 1417, 1617),
**en ce que** la première vanne (51) est chargée d'un découplage de la première génération de pression hydraulique (5, 205, 405, 605, 805, 1005, 1205, 1405, 1605) par rapport à la conduite de pression centrale (17, 217, 417, 617, 817, 1017, 1217, 1417, 1617) et
la seconde vanne (53, 53^{I}) est chargée d'un découplage de la seconde génération de pression hydraulique (7, 207, 407, 607, 807, 1007, 1207, 1407, 1607) par rapport à la conduite de pression centrale (17, 217, 417, 617, 817, 1017, 1217, 1417, 1617).

2. Circuit hydraulique (1, 201, 401, 601, 801, 1001, 1201, 1401, 1601) selon la revendication 1,
**caractérisé en ce que**
la première génération de pression hydraulique (5, 205, 405, 605, 805, 1005, 1205, 1405, 1605) est découplée, dans un état non commandé, de la conduite de pression centrale (17, 217, 417, 617, 817, 1017, 1217, 1417, 1617) par la première vanne (51) du circuit prioritaire (9, 209, 409, 609, 809, 1609),
dans lequel en particulier la seconde génération de pression hydraulique (7, 207, 407, 607, 807, 1007, 1207, 1407, 1607) rencontre, dans un état non commandé et via le circuit prioritaire (9, 209, 409, 609, 809, 1609), une liaison hydraulique vers la conduite de pression centrale (17, 217, 417, 617, 817, 1017, 1217, 1417, 1617), qui est de préférence débloquée via la première composante de sens d'écoulement lorsqu'il y a une différence de pression minimale.

3. Circuit hydraulique (1, 201, 401, 601, 801, 1001, 1201, 1401, 1601) selon l'une des revendications précédentes,
**caractérisé en ce que**
la première génération de pression hydraulique (5, 205, 405, 605, 805, 1005, 1205, 1405, 1605) est une pompe entraînée par un moteur à combustion, par exemple par un entraînement auxiliaire telles une transmission par chaîne, une transmission par courroie ou une transmission à engrenages, en particulier réglable, de préférence réglée sur une pression de travail, telle une pompe à palettes.

4. Circuit hydraulique (1, 201, 401, 601, 801, 1001, 1201, 1401, 1601) selon l'une des revendications précédentes,
**caractérisé en ce que**
la seconde génération de pression hydraulique (7, 207, 407, 607, 807, 1007, 1207, 1407, 1607) est une pompe entraînée par un moteur électrique, en particulier réglée sur la vitesse, telle une pompe à engrenages, qui sert en particulier de pompe auxiliaire pour la première génération de pression hydraulique.

5. Circuit hydraulique (1, 201, 401, 601, 801, 1001, 1201, 1401, 1601) selon l'une des revendications précédentes,
**caractérisé en ce que**
au moins l'une des conduites de pression peut être reliée à la conduite de pression centrale via une vanne à tiroir réglée sur la pression, par exemple une vanne 2/2 voies sollicitée par ressort et commandée par pilotage.

6. Circuit hydraulique (1, 201, 401, 601, 801, 1001, 1201, 1401, 1601) selon l'une des revendications précédentes,
**caractérisé en ce que**
le circuit hydraulique (1, 201, 401, 601, 801, 1001, 1201, 1401, 1601) comprend une conduite de milieu de pression de graissage-refroidissement centrale (19, 219, 419, 619, 819, 1019, 1219, 1419, 1619), dont peut être évacué, en particulier en étant réglé sur la pression, un flux de milieu de graissage et/ou un flux de milieu de refroidissement.

7. Circuit hydraulique (1, 201, 401, 601, 801, 1001, 1201, 1401, 1601) selon la revendication 6,
**caractérisé en ce que**
le circuit prioritaire (9, 209, 409, 609, 809, 1609) présente au moins un raccordement pour la conduite de pression centrale (17, 217, 417, 617, 817, 1017, 1217, 1417, 1617) et présente au moins un raccordement pour la conduite de milieu de pression de graissage-refroidissement centrale (19, 219, 419, 619, 819, 1019, 1219, 1419, 1619).

8. Circuit hydraulique (1, 201, 401, 601, 801, 1001, 1201, 1401, 1601) selon l'une des revendications précédentes,
**caractérisé en ce que**
au moyen d'au moins une vanne, comme par exemple une vanne 3/2 voies, le circuit prioritaire (9, 209, 409, 609, 809, 1609) est conçu pour la répartition d'au moins une partie du milieu hydraulique (141) sous pression dans des flux de milieu hydraulique se différenciant sur le plan fonctionnel, comme par exemple dans un flux de milieu de pression de travail, en particulier pour la conduite de pression centrale (17, 217, 417, 617, 817, 1017, 1217, 1417, 1617), et dans le flux de milieu de graissage ou par exemple dans un flux de milieu de pression de travail et dans le flux de milieu de refroidissement, en particulier pour la conduite de milieu de pression de graissage-refroidissement centrale (19, 219, 419, 619, 819, 1019, 1219, 1419, 1619).

9. Circuit hydraulique (1, 201, 401, 601, 801, 1001, 1201, 1401, 1601) selon l'une des revendications précédentes,
**caractérisé en ce que**
la dérivation du milieu hydraulique (141) est débloquée lors de pics de pression générés par la seconde génération de pression (7, 207, 407, 607, 807, 1007, 1207, 1407, 1607), dans lequel la dérivation peut être établie soit vers un marais, vers la conduite de pression centrale (17, 217, 417, 617, 817, 1017, 1217, 1417, 1617), soit vers une partie de conduite, en particulier vers une partie de conduite débouchant sur la conduite de milieu de pression de graissage-refroidissement.

10. Circuit hydraulique (1, 201, 401, 601, 801, 1001, 1201, 1401, 1601) selon l'une des revendications précédentes,
**caractérisé en ce que**
la première composante de sens d'écoulement (77, 277, 477, 677, 877, 1077, 1277, 1477) est une première valve de retenue (85, 1685) avec un ressort (135, 535) et la seconde composante de sens d'écoulement (79, 279, 479, 679, 881, 1081, 1281, 1481, 1283, 1483, 1683^{I}, 1683^{II}) est une seconde valve de retenue (87, 1687) avec un ressort (137, 537), dans lequel les ressorts (135, 535, 137, 537) sont dotés de tensions de ressort différentes les unes des autres.

11. Circuit hydraulique (1, 201, 401, 601, 801, 1001, 1201, 1401, 1601) selon l'une des revendications précédentes,
**caractérisé en ce que**
une pression dans la conduite de pression centrale (17, 217, 417, 617, 817, 1017, 1217, 1417, 1617) est déterminée par une vanne de pression principale (65), qui sous la forme d'une balance manométrique (67) dans un état destiné à l'écoulement, a formé une liaison vers un côté aspiration (117, 317, 517, 717, 917, 1117, 1317, 1517, 1717) d'au moins l'une des générations de pression, moyennant quoi une réduction de pression dans la conduite de pression centrale (17, 217, 417, 617, 817, 1017, 1217, 1417, 1617) peut être provoquée.

12. Circuit hydraulique (1, 201, 401, 601, 801, 1001, 1201, 1401, 1601) selon l'une des revendications précédentes,
**caractérisé en ce que**
une première liaison via la seconde conduite de pression peut être établie par la seconde génération de pression (7, 207, 407, 607, 807, 1007, 1207, 1407, 1607) à la suite de rapports de pression ou à la suite de chutes de pression et une seconde liaison peut être établie en tant que liaison d'écoulement depuis la seconde liaison de pression.

13. Circuit hydraulique (1, 201, 401, 601, 801, 1001, 1201, 1401, 1601) selon l'une des revendications précédentes,
**caractérisé en ce que**
la première génération de pression hydraulique (5, 205, 405, 605, 805, 1005, 1205, 1405, 1605) et la seconde génération de pression hydraulique (7, 207, 407, 607, 807, 1007, 1207, 1407, 1607) sont conçues pour la génération de pressions différentes afin de mettre en place des milieux hydrauliques (141) sous pression au moins pendant une phase d'un fonctionnement simultané,
dans lequel le circuit hydraulique (1, 201, 401, 601, 801, 1001, 1201, 1401, 1601) fait en particulier partie d'un circuit hydraulique de véhicule automobile, comme par exemple partie d'une commande de boîte de vitesses pour une transmission à double embrayage (2505).

14. Procédé de génération de pression avec deux pompes (5, 205, 405, 605, 805, 1005, 1205, 1405, 1605, 7, 207, 407, 607, 807, 1007, 1207, 1407, 1607),
de préférence avec un circuit (1, 201, 401, 601, 801, 1001, 1201, 1401, 1601) selon l'une des revendications précédentes,
dans lequel un circuit prioritaire (9, 209, 409, 609, 809, 1609),
qui se compose d'au moins deux vannes (51, 53, 53^{I}),
est présent au niveau d'une première conduite de pression (13, 213, 413, 613, 813, 1013, 1213, 1413, 1613) et d'une seconde conduite de pression (15, 215, 415, 615, 815, 1015, 1215, 1415, 1615),
dans lequel deux valves de retenue (85, 1685, 87, 1687),
raccordées à la pompe utilisée en tant que pompe auxiliaire,
et en particulier entraînée par un moteur électrique (133),
évacuant un milieu hydraulique (141),
ferment la pompe (7, 207, 407, 607, 807, 1007, 1207, 1407, 1607) contre des reflux dans les deux sens d'écoulement de courant,
dans lequel, en fonction d'une première chute de pression, la première valve de retenue (85, 1685) débloque la seconde conduite de pression (15, 215, 415, 615, 815, 1015, 1215, 1415, 1615) dans une direction vers une vanne du circuit prioritaire (9, 209, 409, 609, 809, 1609) et
en fonction d'une seconde chute de pression, la seconde valve de retenue (87, 1687) débloque la seconde conduite de pression (15, 215, 415, 615, 815, 1015, 1215, 1415, 1615) soit dans une direction d'une dérivation de marais (109), dans une direction d'une conduite de pression centrale (17, 217, 417, 617, 817, 1017, 1217, 1417, 1617), et/ou dans une direction d'une conduite de pression de graissage-refroidissement (19, 219, 419, 619, 819, 1019, 1219, 1419, 1619),
**caractérisé en ce que**
le circuit prioritaire (9, 209, 409, 609, 809, 1609, 11, 211, 411, 611, 811, 1011, 1211, 1411, 1611), auquel sont attribuées une première vanne (51) de la première génération de pression hydraulique (5, 205, 405, 605, 805, 1005, 1205, 1405, 1605) et une seconde vanne (53, 53^{I}) de la seconde génération de pression hydraulique (7, 207, 407, 607, 807, 1007, 1207, 1407, 1607), détermine
laquelle des deux générations de pression, la première génération de pression hydraulique (5, 205, 405, 605, 805, 1005, 1205, 1405, 1605) et la seconde génération de pression hydraulique (7, 207, 407, 607, 807, 1007, 1207, 1407, 1607), est autorisée à introduire son milieu hydraulique (141) dans la conduite de pression centrale (17, 217, 417, 617, 817, 1017, 1217, 1417, 1617),
**en ce que** la première vanne (51) est chargée d'un découplage de la première génération de pression hydraulique (5, 205, 405, 605, 805, 1005, 1205, 1405, 1605) par rapport à la conduite de pression centrale (17, 217, 417, 617, 817, 1017, 1217, 1417, 1617) et
la seconde vanne (53, 53^{I}) est chargée d'un découplage de la seconde génération de pression hydraulique (7, 207, 407, 607, 807, 1007, 1207, 1407, 1607) par rapport à la conduite de pression centrale (17, 217, 417, 617, 817, 1017, 1217, 1417, 1617).

15. Procédé de génération de pression avec deux pompes (5, 205, 405, 605, 805, 1005, 1205, 1405, 1605, 7, 207, 407, 607, 807, 1007, 1207, 1407, 1607) selon la revendication 14,
**caractérisé en ce que**
la première pompe (5, 205, 405, 605, 805, 1005, 1205, 1405, 1605) est une pompe entraînée par un moteur à combustion (131), en particulier utilisée en tant que pompe principale,
qui, réglée directement ou indirectement sur la pression, débloque une liaison vers la conduite de pression centrale (17, 217, 417, 617, 817, 1017, 1217, 1417, 1617) par un actionnement de l'une des vannes (51) du circuit prioritaire (9, 209, 409, 609, 809, 1609) en fonction d'une pression qui s'est formée,
dans lequel de préférence une partie du circuit prioritaire (9, 209, 409, 609, 809, 1609) est une vanne de commande d'écoulement (53, 53^{I}),
qui, en fonction d'une pression dans la conduite de pression centrale (17, 217, 417, 617, 817, 1017, 1217, 1417, 1617), débloque un chemin de courant pour le milieu hydraulique (141) depuis la seconde pompe (7, 207, 407, 607, 807, 1007, 1207, 1407, 1607) dans deux sortes de sens, en particulier alternativement,
moyennant quoi, dans un état commuté, le milieu hydraulique (141) peut s'écouler vers la conduite de pression centrale (17, 217, 417, 617, 817, 1017, 1217, 1417, 1617).
